(19) Europäisches Patentamt
European Patent Office
Office européen des brevets

(11) **EP 3 496 560 B1**

(12) **EUROPEAN PATENT SPECIFICATION**

(45) Date of publication and mention
of the grant of the patent:
**29.11.2023  Bulletin 2023/48**

(21) Application number: **17765255.9**

(22) Date of filing: **09.08.2017**

(51) International Patent Classification (IPC):
**A42B 3/06** *(2006.01)*        **A42B 3/12** *(2006.01)*

(52) Cooperative Patent Classification (CPC):
**A42B 3/125; A42B 3/064**

(86) International application number:
**PCT/IB2017/054850**

(87) International publication number:
**WO 2018/033830 (22.02.2018 Gazette 2018/08)**

(54) **MECHANICALLY-ACTIVATED SHOCK ABATEMENT SYSTEM AND METHOD**

MECHANISCH AKTIVIERTES SCHOCKDÄMPFUNGSSYSTEM UND -VERFAHREN

SYSTÈME ET PROCÉDÉ DE RÉDUCTION DE CHOC À ACTIVATION MÉCANIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.08.2016   US 201662375240 P
15.12.2016   US 201615380907
15.12.2016   US 201615380967
04.08.2017   US 201715669272**

(43) Date of publication of application:
**19.06.2019   Bulletin 2019/25**

(73) Proprietor: **Titon Ideas, Inc.
El Cangrejo, Buena Vista, Panama City (PA)**

(72) Inventors:
• **MINI TOWNSON, Juan Francisco Javier
Guatemala 01010 (GT)**
• **ARAGÓN CABRERA, José Rodrigo
Santa Catarina
Pinula 01051 (GT)**
• **ALFARO SAMAYOA, Juan Pablo
Guatemala 01015 (GT)**

(74) Representative: **Schröer, Gernot H. et al
Meissner Bolte Patentanwälte
Rechtsanwälte Partnerschaft mbB
Bankgasse 3
90402 Nürnberg (DE)**

(56) References cited:
US-A- 4 032 127         US-A1- 2014 215 694
US-A1- 2015 047 109     US-A1- 2015 285 697

**Description**

**FIELD OF THE DISCLOSURE**

The subject disclosure relates to a mechanically-activated shock abatement system.

**BACKGROUND**

Safety helmets generally reduce effects of impacts to top and/or side of a user's head. Protective headgear often relies upon a hard outer casing with an impact-energy absorbing padding or a strap based suspension placed between the outer casing and the user's head. If a user wearing such hard shell helmet suffers a hard blow to the helmet, the impact of the hard shell meeting a hard surface generates a shockwave and a high impact force, that can be absorbed (to a limited extent) by deformation of the outer casing, the inner shock-absorbing material, and/or the straps in a typical suspension inside the hard casing and in contact with the user's head.

Various mechanisms responsible for brain injuries are understood to include focal type injuries that generally result from a direct impact to the head, sometimes resulting in cranial fracture. Other mechanisms include coup injuries that result from impacts to the same side of the head, whereas, contrecoup injuries result from impacts to an opposite side of the head. At least some injuries result from a displacement, e.g., a linear translation, of the brain within the skull. Still other injuries, including Diffuse Axonal Injuries (DAI), result from a rotational acceleration of the head and/or severe acceleration and/or deceleration that causes traumatic shearing forces, e.g., tissue sliding over tissue. DAI is believed to be one of the most common and devastating types of traumatic brain injury.

Some have disclosed protective helmets including a hard shell and an internal suspensions that include flexible cradle systems. For example, U. S. Pat. No. 2,870,445, to Fisher, discloses protective headgear and lining suspensions that include cradle straps joined together along an upper portion by an adjustment strap offering a flexible internal surface free of rigid projecting blow transmitting elements to cushion a head of a wearer. U.S. Pat. No. 3,054,111, to Hornickel et al., discloses a shock absorbing helmet that includes a head-receiving cradle formed from straps that may cross each other or be joined at their upper ends by a lace that makes the cradle adjustable. U.S. Pat. No. 2,921,318, to Voss et al. discloses a helmet lining that includes several flexible cradle straps extending up into a crown of a protective helmet from circumferentially spaced points around a lower portion. Each strap includes a strip of woven material that necks down as it stretches in reaction to a blow against the helmet. Other web-like support systems that include strips of flexible material that cross each other are disclosed in U.S. Pat. App. Pub. No. 2002/0000004 to Wise et al.

Others have disclosed protective helmets including a hard shell and external features to reduce head injury risk. For example, U.S. Pub. Pat. App. No. 2015/0157080, to Camarillo et al., U.S. Pub. Pat. App. No. 2011/0185481, to Nagely et al., and U.S. Pat. No. 5,581,816, to Davis, disclose wearable devices having force redirecting units connected between an outer surface of a helmet and a shoulder brace for redirecting head impact forces from a wearer's head to another body part. U.S. Pub. Pat. App. No. 2010/0229287, to Mothaffar, discloses an arrangement of straps extending from a helmet to other parts of a body to limit a range of motion of a wearer's head and flexure of their neck.

Still others have disclosed energy absorbing structures for placement along an interior surface of a helmet. For example, U.S. Pat. No. 9,316,282, to Harris, discloses energy absorbing, collapsible disk structures that have collapsible arms around a perimeter of two disks sandwiching that cause an elastic material to stretch, storing kinetic energy from a vertical direction as potential energy in a horizontal direction. U.S. Pat. No. 2,879,513, to Hornickel et al., discloses a crushable block of energy absorbing material disposed in each loop between a lace and an inner end of suspension cradle straps. Energy absorbed in crushing the blocks reduces the shock of an impact against a wearer's head. U.S. Pat. App. Pub. No. 2009/0260133, to Del Rosario, discloses an impact absorbing frame and multi-layered structure that includes inner opposite-facing inner panels that undergo elastic deformation and compress and expand to dissipate impact energy. U.S. Pat. No. 9,314,063, to Bologna et al., discloses a protective football helmet having a one-piece molded shell with an impact attenuation member formed by removing material from a front portion of the shell to form a cantilevered segment. U.S. Pat. No. 4,032,127 to Lipfert, discloses a helmet system according to the preamble of claim 1, which uses a lever arrangement to dissipate energy in response to an impact.

Although these and other conventional helmet liners have worked well, they have failed to provide protection against both high and low degrees of impact imparted on a helmet over the extended life of the helmet. The impact force is often so great that the user's helmet may even initially bounce back upon impact, thrusting the user's head away from the blow, subjecting the head and neck regions to additional injury causing forces. If the impact is severe enough, it may lead to a concussion (striking of the brain matter to the skull with moderate force) or worse. In some instances, a user can experience a, so called, focal type of injury, e.g., resulting from a lateral movement of head when shell impacted, alone or in combination with a rotation of the head, in which the head experiences a rapid acceleration and/or deceleration.

## BRIEF DESCRIPTION OF THE DRAWINGS

FIGs. 1A-1B depict schematic diagrams of a vertical cross-section of a helmet shock abatement system;

FIG. 2 depicts a schematic diagram of a vertical cross-section of another embodiment of a helmet shock abatement system;

FIG. 3 depicts a schematic diagram of a horizontal cross-section of yet another embodiment of a helmet shock abatement system;

FIGs. 4A-4D depict top perspective, bottom, front and side views, respectively, of an illustrative embodiment of a helmet impact shock abatement system;

FIG. 5 depicts an exploded view of the helmet system depicted in FIGs. 4A-4D;

FIG. 6A depicts a front view of the human head bearing the helmet system depicted in FIGs. 4A-4D;

FIG. 6B depicts a sagittal plane cross-section of a human head bearing the helmet system depicted in FIG. 6A;

FIG. 7A depicts a side view of a human head bearing the helmet system depicted in FIGs. 4A-4D;

FIG. 7B depicts a frontal (coronal) plane cross-section of a human head bearing the helmet system depicted in FIG. 7A;

FIGs. 8A-8C depict a front, a bottom and a sagittal plane cross-section, respectively, of the elements system depicted in FIGs. 4A-4D;

FIGs. 9A-9D depict a front view of the helmet system depicted in FIGs. 4A-4D in various stages of deformation when exposed to a vertical impact force;

FIG. 10A-10C depict top perspective, top and side section views, respectively, of an illustrative embodiment of a pivot ring portion of the helmet system depicted in FIGs. 4A-4D;

FIGs. 11A-11D depict front, side, bottom and top perspective views, respectively, of an example lever assembly of the helmet system depicted in FIGs. 4A-4D;

FIGs. 12A-12D depict bottom perspective, front, bottom and side cross-section views, respectively, of a lever of the example of the lever assembly depicted in FIGs. 11A-11D;

FIGs. 13A-13D depict top perspective, front, bottom and side cross-section views, respectively, of an alternative embodiment of a lever;

FIGs. 14A-14D depict front, side, bottom and bottom perspective views of an upper pad assembly of the helmet system depicted in FIGs. 4A-4D;

FIGs. 15A-15D depict top perspective, front, top and cross-sectional views of a front pad of the upper pad assembly depicted in FIGs. 14A-14D;

FIGs. 16A-16D depict top perspective, top, side and front views of a side pad of the upper pad assembly depicted in FIGs. 14A-14D;

FIGs. 17A-17D depict top perspective, top, front, and side cross-sectional views of a rear pad of the upper pad assembly depicted in FIGs. 14A-14D;

FIGs. 18A-18D depicts the front, side, a bottom and top perspective views of a lower pad assembly of the helmet system depicted in FIGs. 4A-4D;

FIGs. 19A-19D depict top perspective, bottom, front and cross-sectional views of one embodiment of a lower pad of the lower pad assembly depicted in FIGs. 18A-18D;

FIGs. 20A-20D depict top perspective, bottom, front and cross-sectional views of another embodiment of a lower pad of the lower pad assembly depicted in FIGs. 18A-18D;

FIGs. 21A-21C depict top perspective, top and front, and expanded views of an example of an adjustment band of the helmet system depicted in FIGs. 4A-4D;

FIG. 22A depicts a side view of an example of a lever assembly of the helmet system depicted in FIGs. 4A-4D;

FIG. 22B, depicts a side view of the lever assembly of FIG. 22A subjected to a lateral force;

FIG. 23A depicts a front view of an alternative helmet system placed on a human head;

FIG. 23B depicts an illustrative view of an example football helmet;

FIG. 23C depicts an illustrative view of an example military helmet;

FIGs. 24A-24D depicts front, side, bottom and top perspective views of the alternative helmet system depicted in FIG. 23A;

FIG. 25 depicts an exploded view of the alternative helmet system depicted in FIG. 23 A;

FIGs. 26A-26B depicts front and side views of a first lever assembly of the alternative helmet system depicted in FIG. 23A;

FIGs. 27A-27B depicts front and side views of a second lever assembly of the alternative helmet system depicted in FIG. 23A;

FIGs. 28A-28B depict front and side views, respectively, of the first lever assembly of the alternative helmet system of FIG. 23A placed on a human head;

FIGs. 28C-28D depict sagittal and frontal cross-sectional views, respectively, of the first level assembly of FIGs. 28A-28B;

FIGs. 29A-29B depict front and side views, respectively, of the second lever assembly of the alternative helmet system of FIG. 23A placed on a human head;

FIGs. 29C-29D depict cross-sectional views of the second level assembly of FIGs. 29A-29B;

FIG. 30A depicts a side view of an example of a lever assembly of the alternative helmet system depicted in FIG. 23A;

FIG. 30B , depicts a side view of the lever assembly of FIG. 32A subjected to a lateral force;

FIGs. 31A-31D depict front, side, bottom and top perspective views of another embodiment of the alternative helmet system depicted in FIG. 23A;

FIGs. 32A and 33A depict schematic diagrams of a mechanical and electrical analog, which does not form part of the present invention, of the helmet system depicted in FIGs. 4A-4D;

FIG. 32D depicts a side view of an example helmet shock abatement system, which does not form part of the present invention;

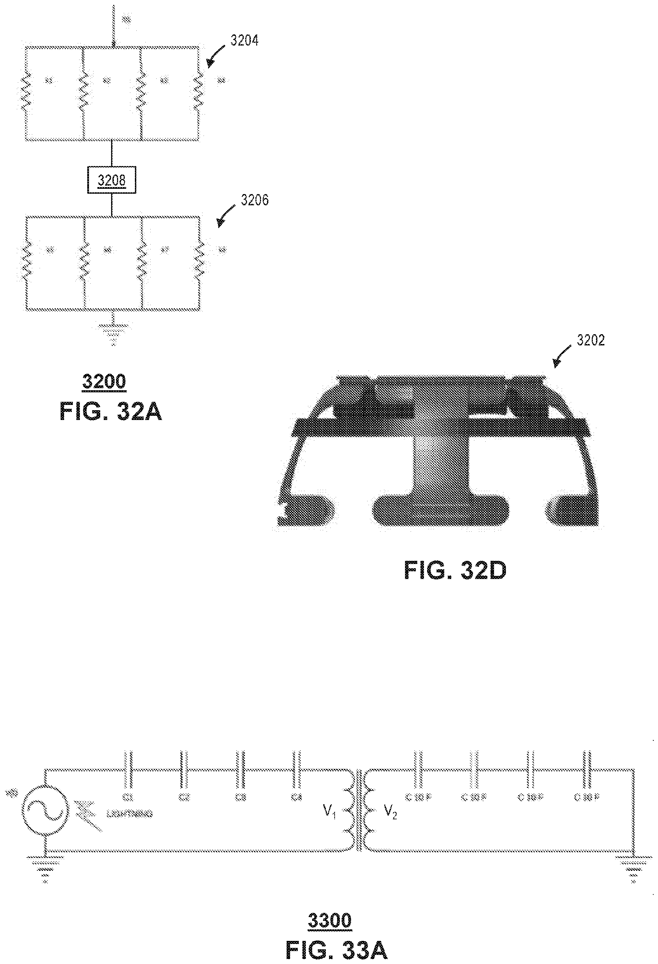

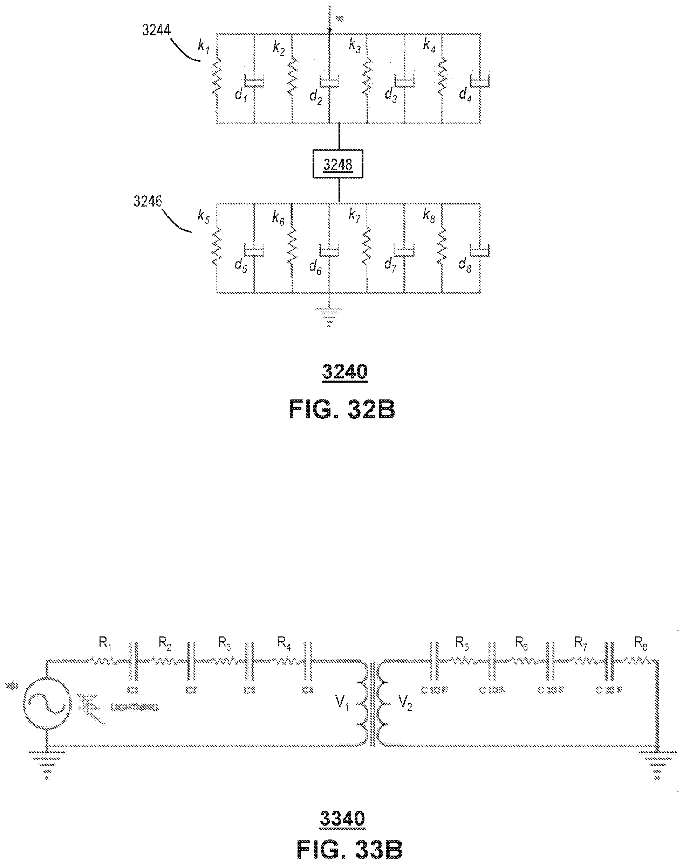

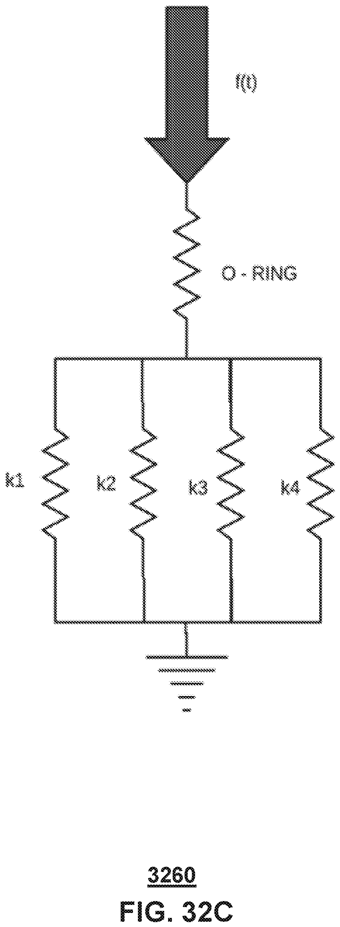

FIGs. 32B-32C and 33B depict schematic diagrams of mechanical and electrical analogs of an example helmet shock abatement system depicted in FIG. 32D;

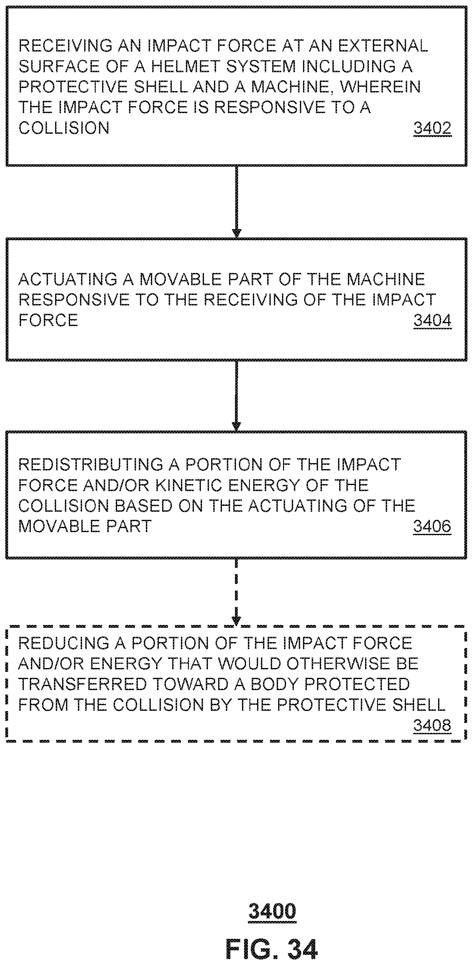

FIG. 34 depicts a process, which does not form part of the present invention, for abating shock resulting from a collision;

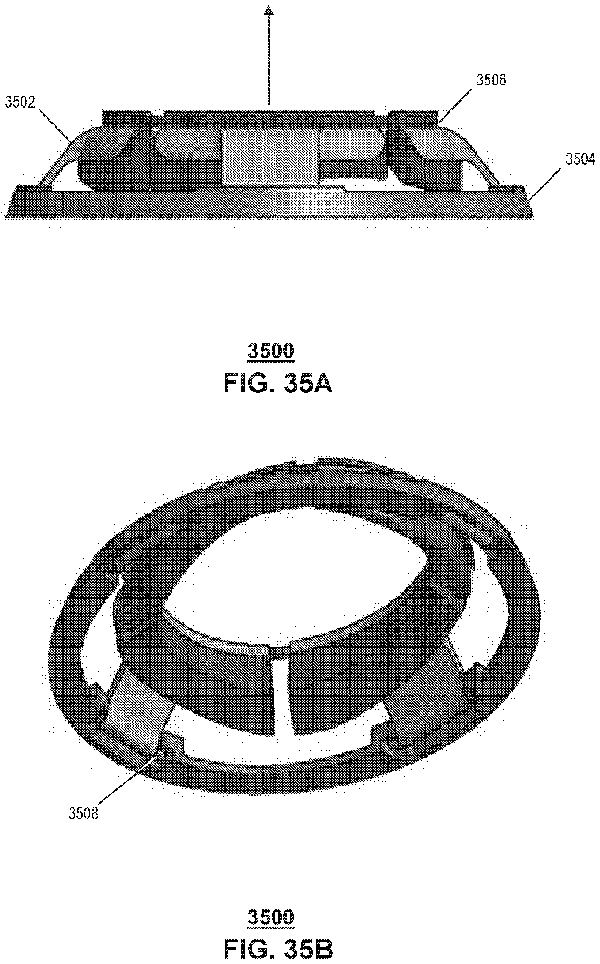

FIGs. 35A and 35B depict side and bottom perspective views, respectively, of a portion of an example lever assembly;

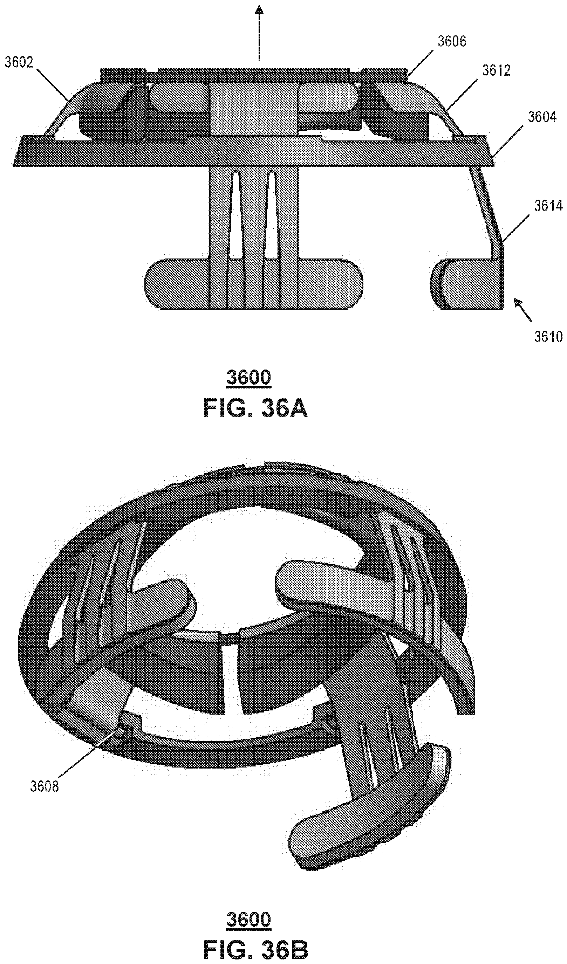

FIGs. 36A and 36B depict side and bottom perspective views of a portion of another example of a lever assembly;

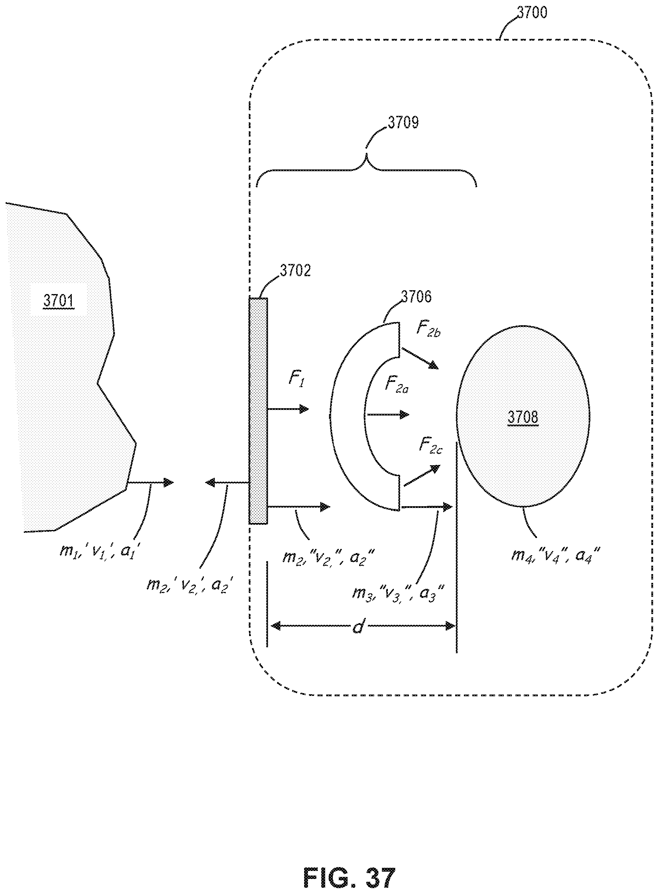

FIG. 37 depicts a schematic representation of an example of a collision protective system;

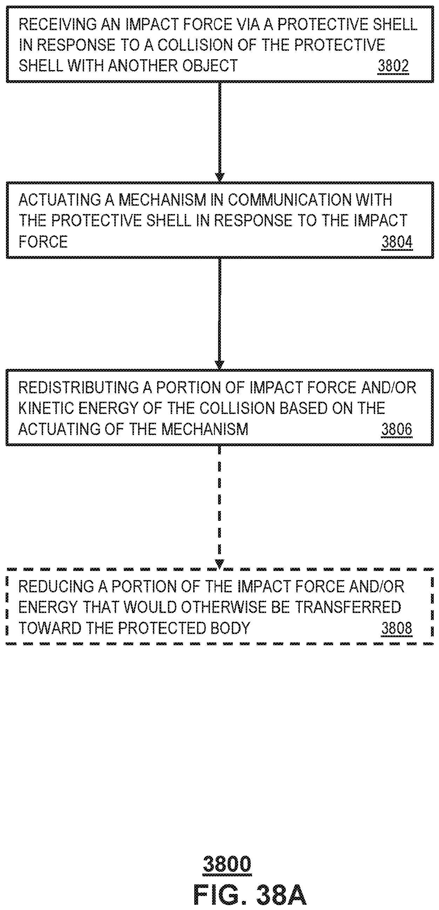

FIG. 38A depicts a process, which does not form part of the present invention, for abating shock resulting from a collision;

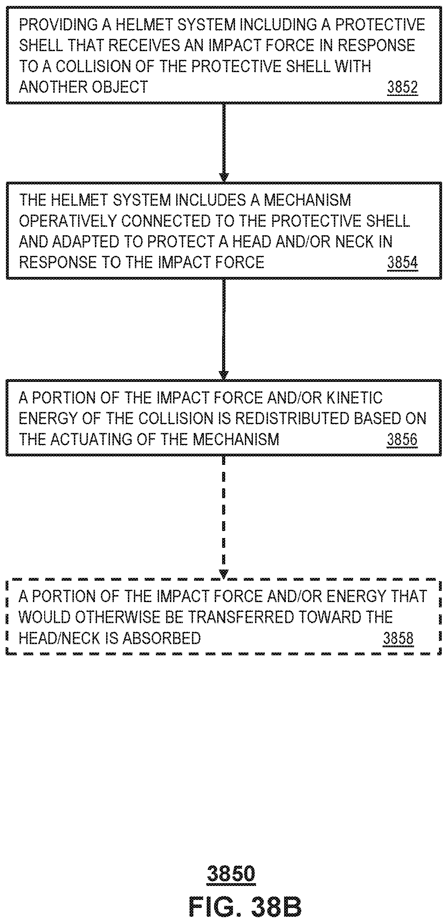

FIG. 38B depicts another process, which does not form part of the present invention, for abating shock resulting from a collision;

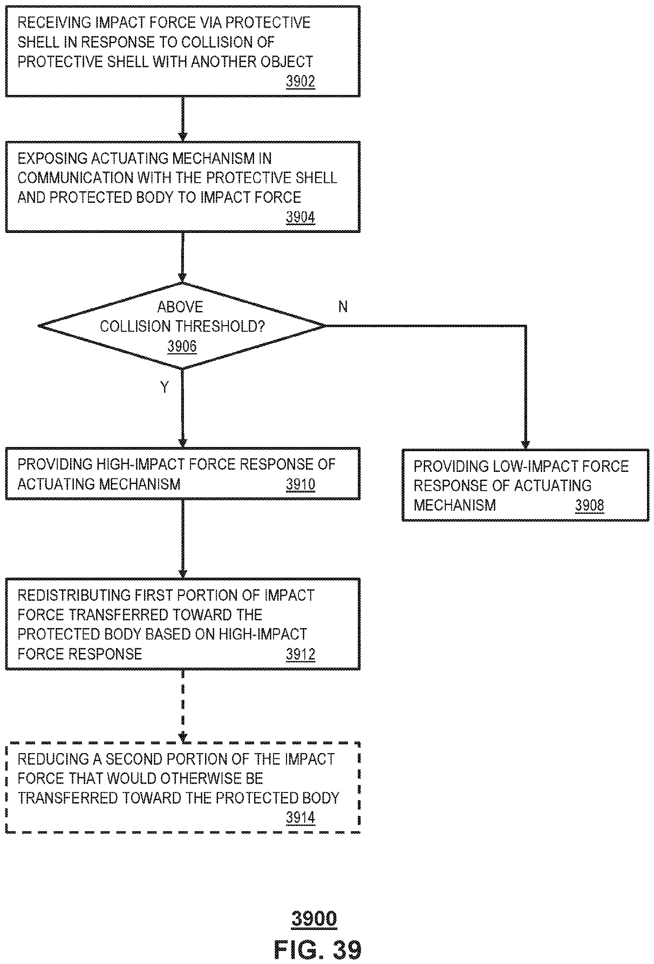

FIG. 39 depicts another process, which does not form part of the present invention, for abating shock resulting from a collision;

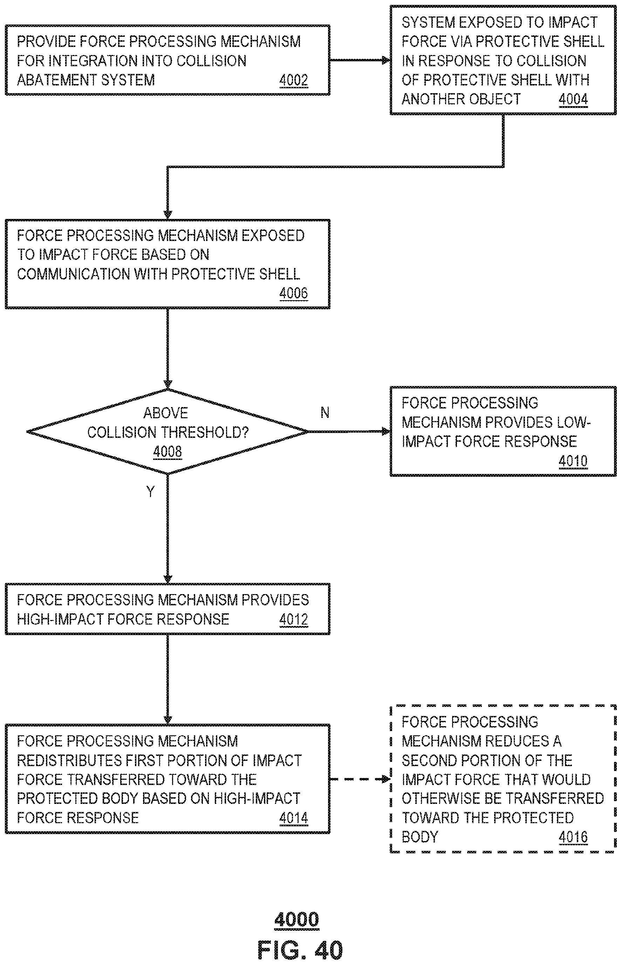

FIG. 40 depicts yet another process, which does not form part of the present invention, for abating shock resulting from a collision;

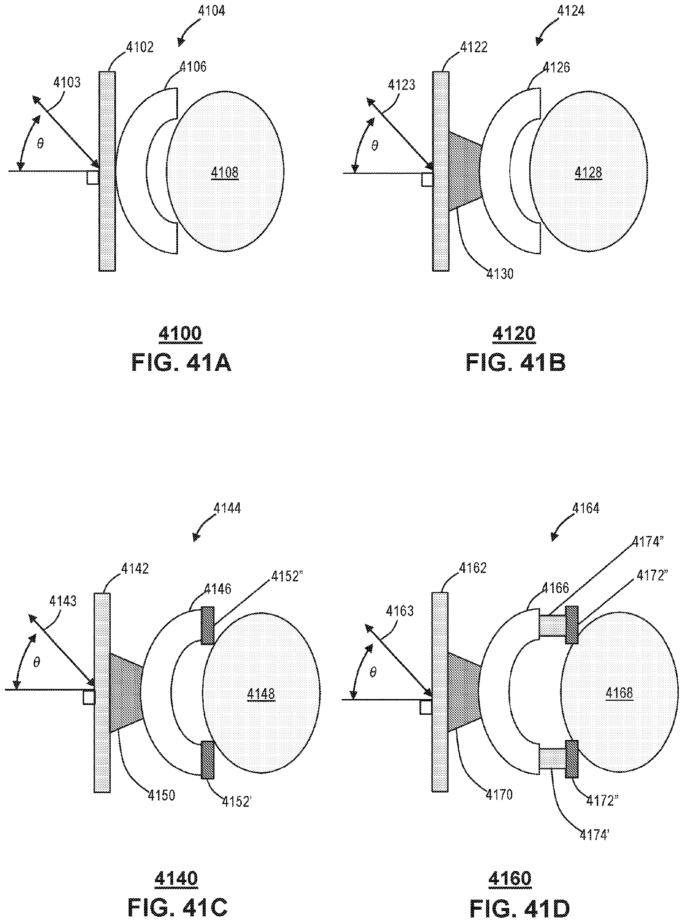

FIGs. 41A-41D depict schematic representations of example of a collision protective systems which do not form part of the present invention;

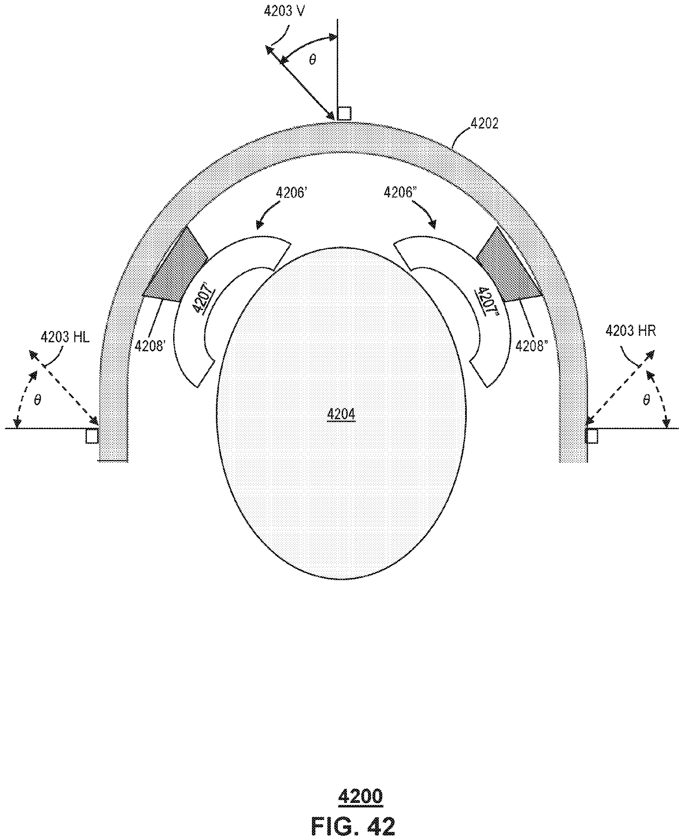

FIG. 42 depicts a schematic representations of another example of a collision protective systems which do not form part of the present invention;

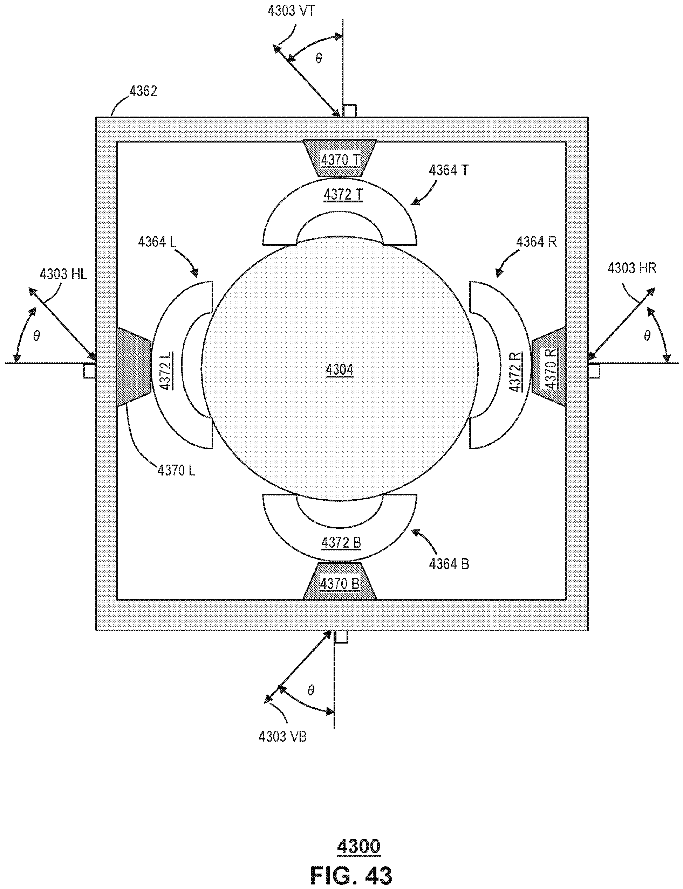

FIG. 43 depicts a schematic representations of yet another example of a collision protective systems which do not form part of the present invention;

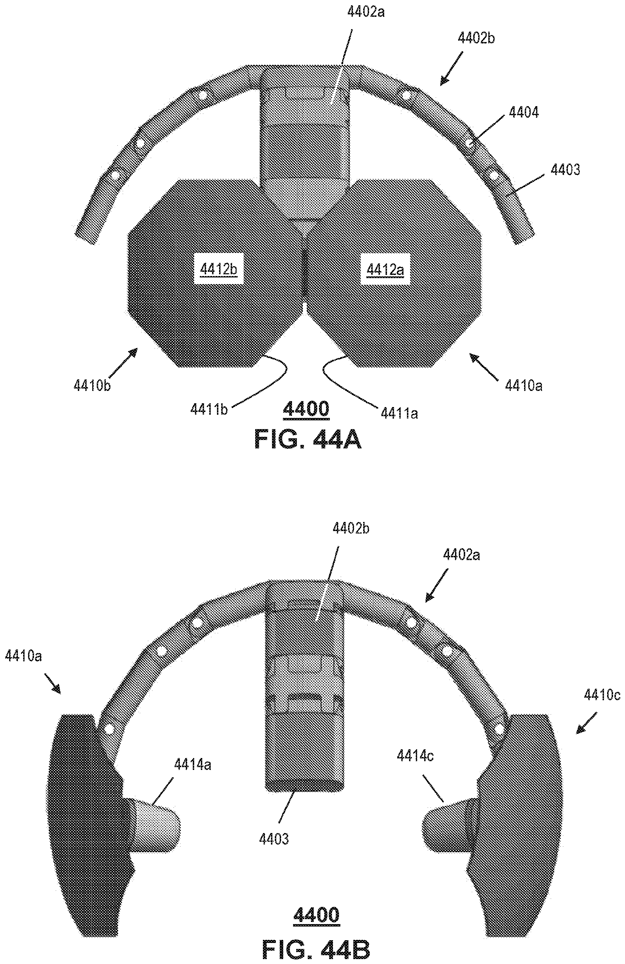

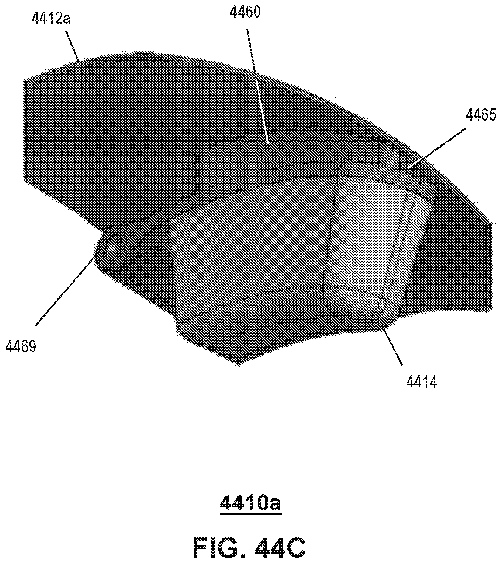

FIGs. 44A and 44B depict front and side views, respectively, of a portion of an example segmented helmet system; and FIG. 44C depicts a bottom perspective view of a segmented shell assembly of the example segmented helmet system depicted in FIGs. 44A-44B.

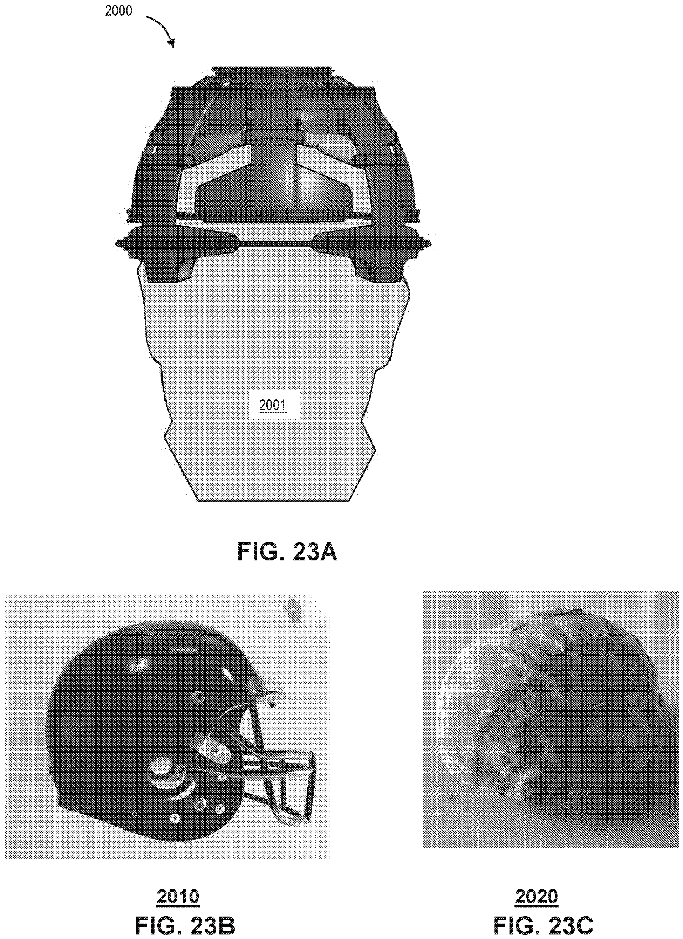

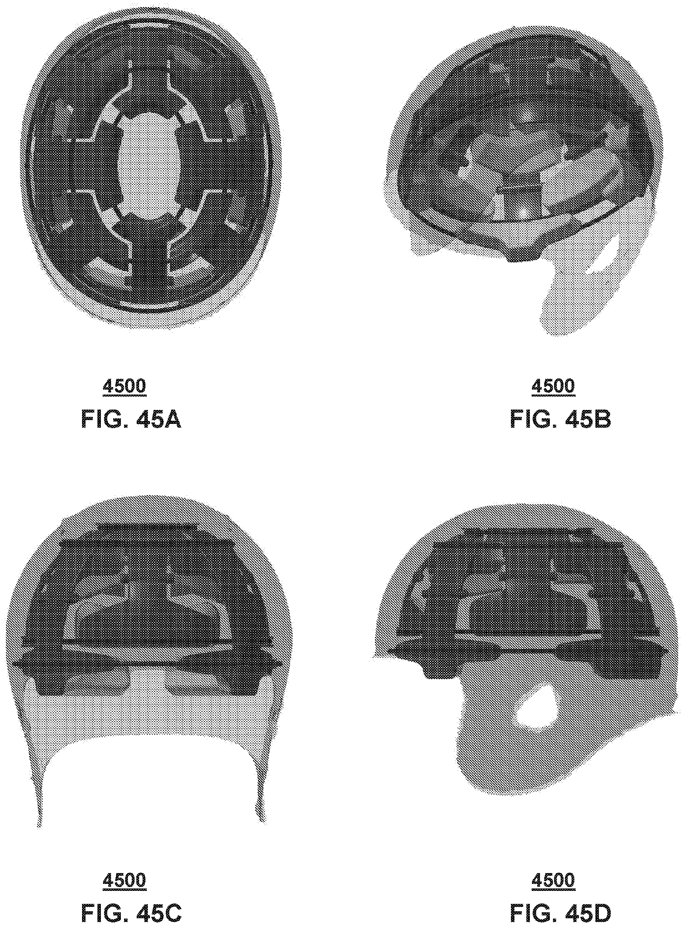

FIGs. 45A-45D depict top, bottom perspective, rear and side views of the alternative helmet system of FIG. 23A, placed within the example football helmet of FIG. 23B;

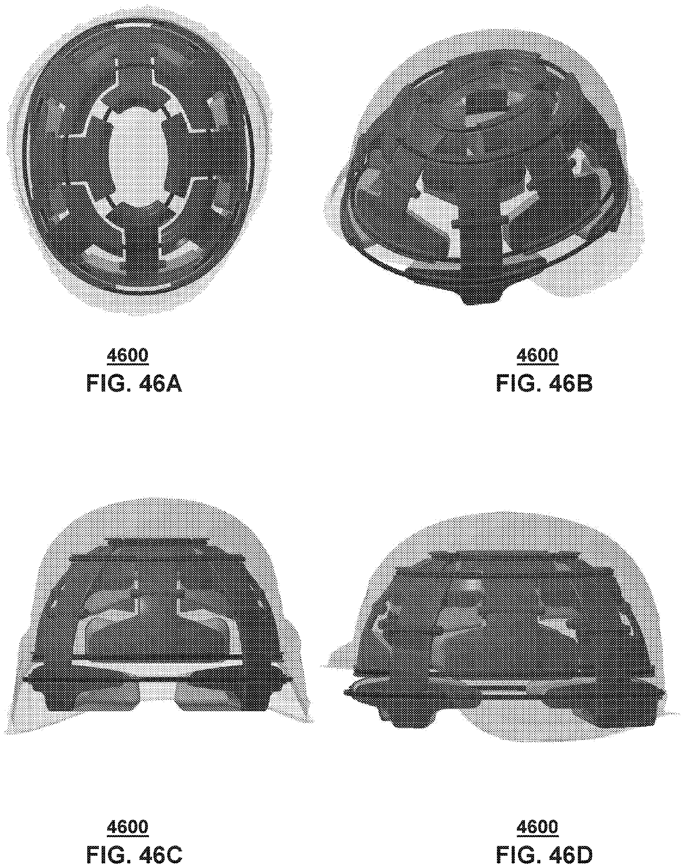

FIGs. 46A-46D depict top, bottom perspective, rear and side views of the alternative helmet system of FIG. 23A, placed within the example military helmet of FIG. 23C;

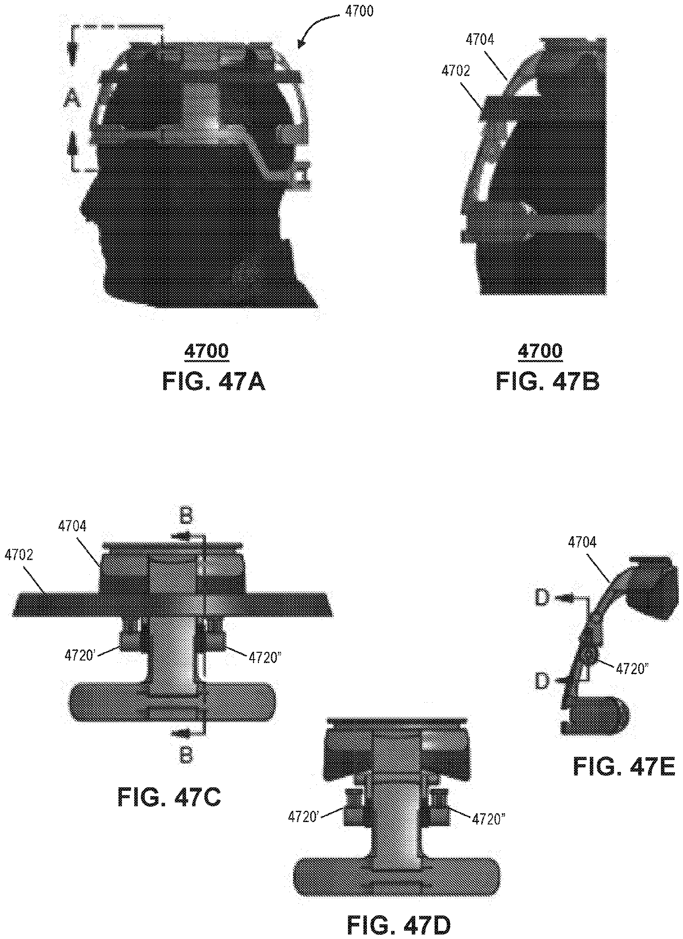

FIG. 47A-47E depict views of an embodiment of an alternative lever assembly of a helmet system which does not form part of the present invention;

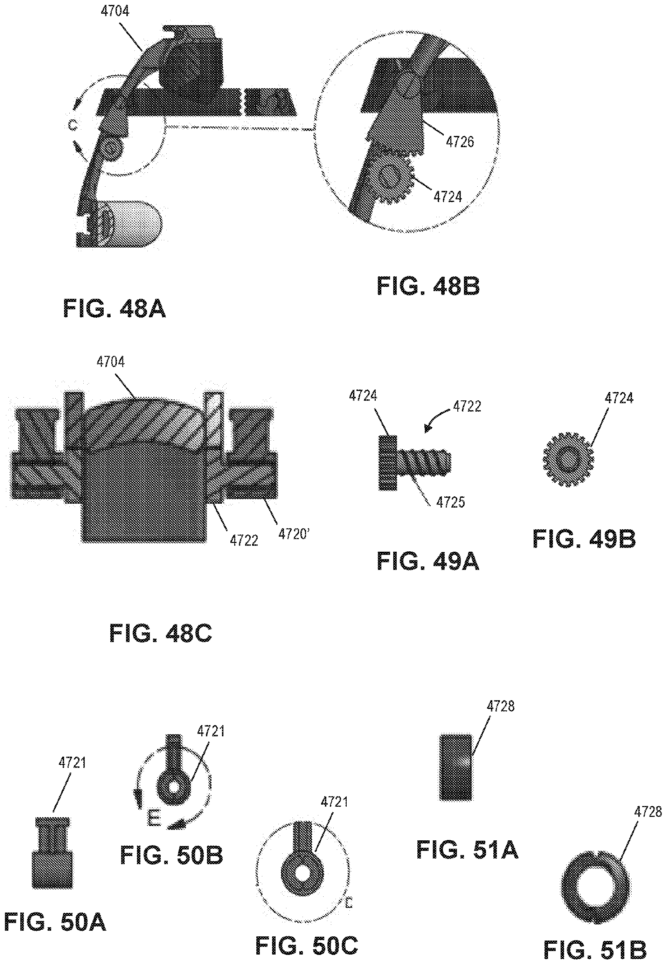

FIGs. 48A-48C depict more detailed views of the alternative lever assembly depicted in FIGs. 47A-47E;

FIGs. 49A-49B depict more detailed views of a rotary member of the alternative lever assembly depicted in FIGs. 47A-47E;

FIGs. 50A-50C depict more detailed views of a dampening mechanism of the alternative lever assembly depicted in FIGs. 47A-47E;

FIGs. 51A-51B depict more detailed views of a nut of the alternative lever assembly depicted in FIGs. 47A-47E;

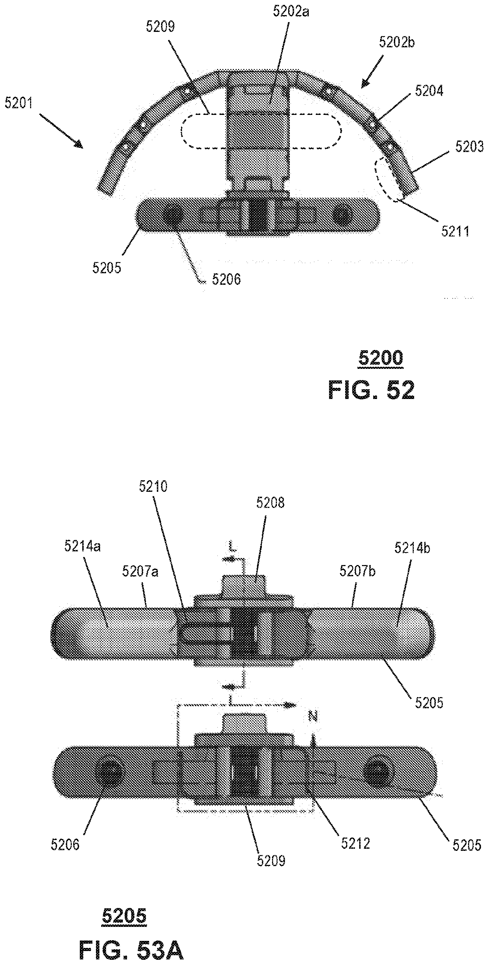

FIG. 52 depicts depict an embodiment of floating pivot helmet system which does not form part of the present invention;

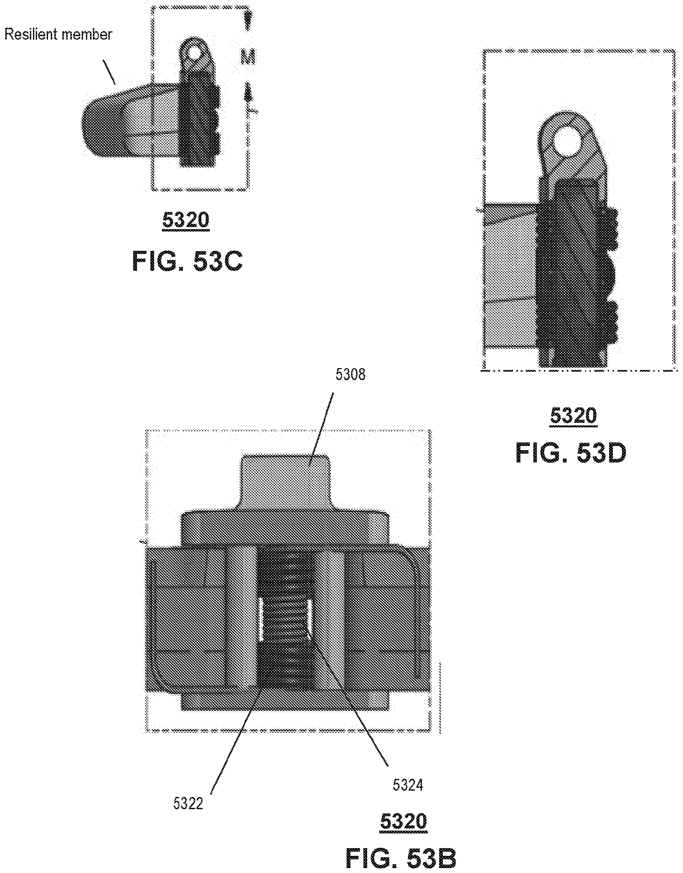

FIGs. 53A depicts a more detailed view of a lever assembly of the floating pivot helmet system depicted in FIG. 52;

FIGs. 53B-53D depict more detailed views of spring portions of the lever assembly depicted in FIG. 53A;

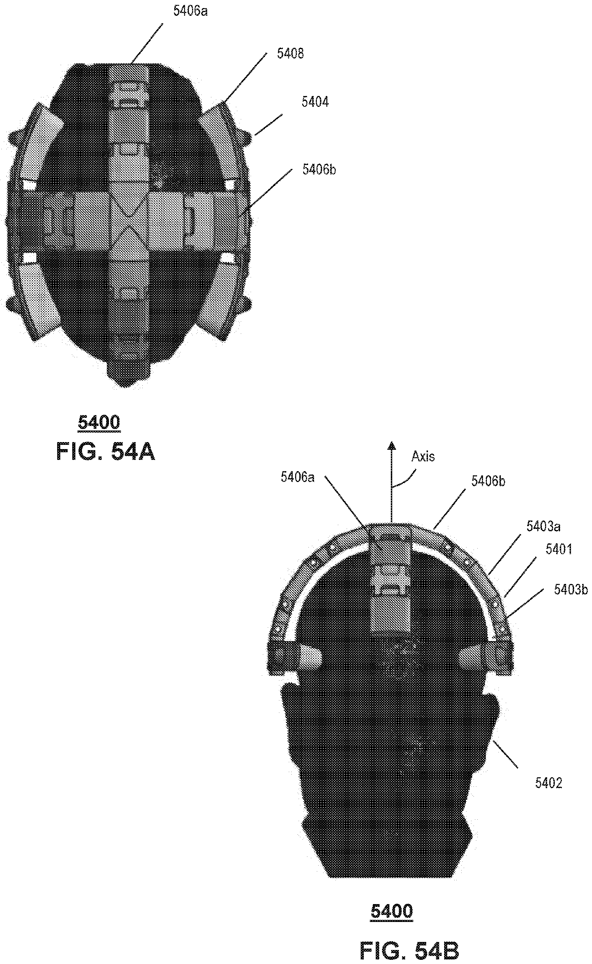

FIGs. 54A-54B depict an embodiment of the floating helmet system placed upon a human head;

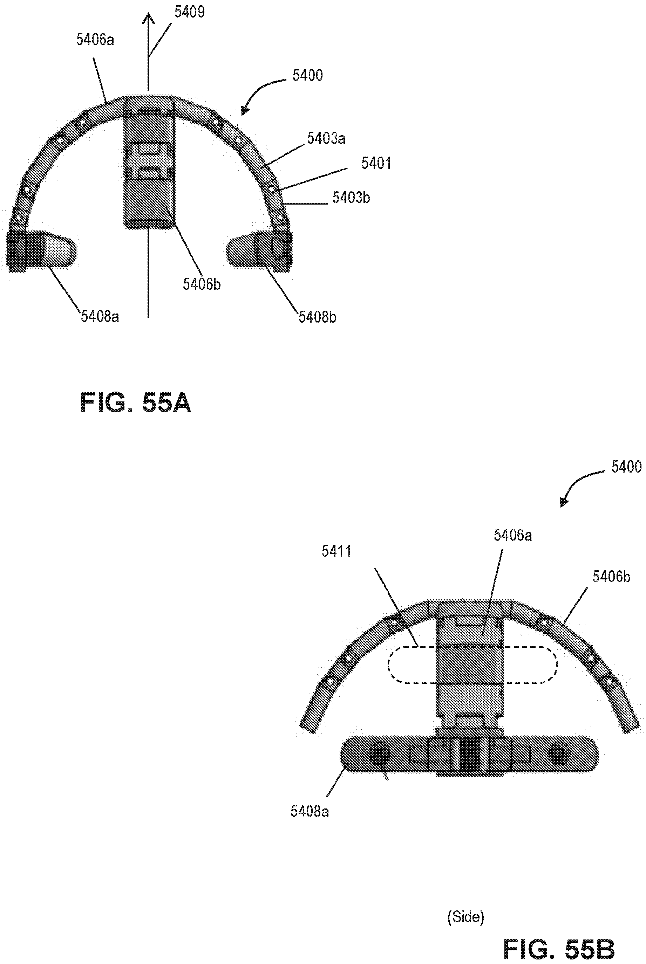

FIGs. 55A-55B depict front and lateral views of the floating helmet system depicted in FIG. 52;

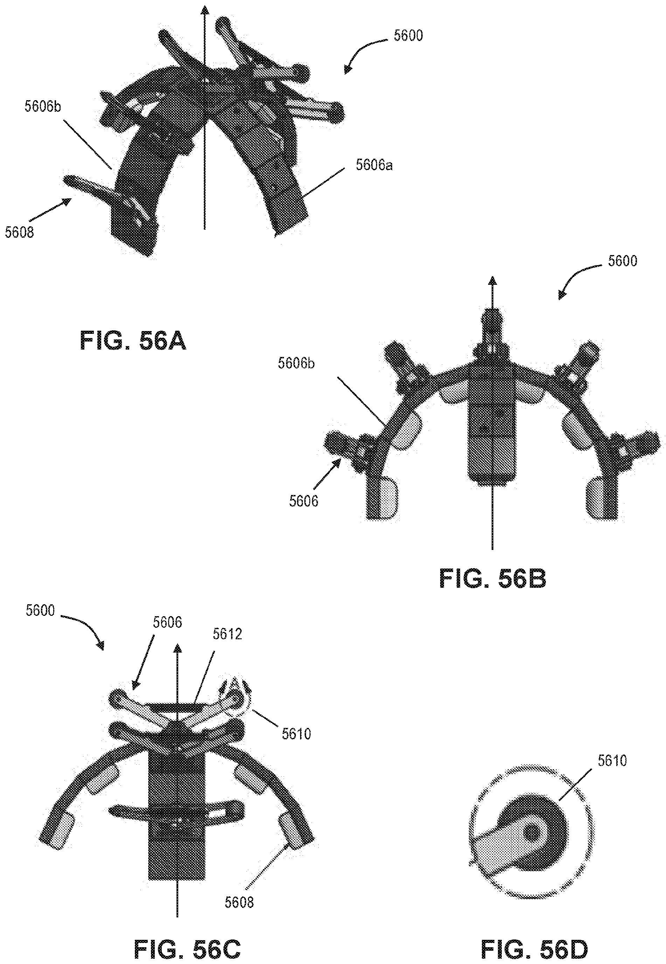

FIGs. 56A-56C depict top perspective, front and side views of another embodiment of a helmet system which does not form part of the present invention;

FIG. 56D depicts detail view A identified in FIG. 56C;

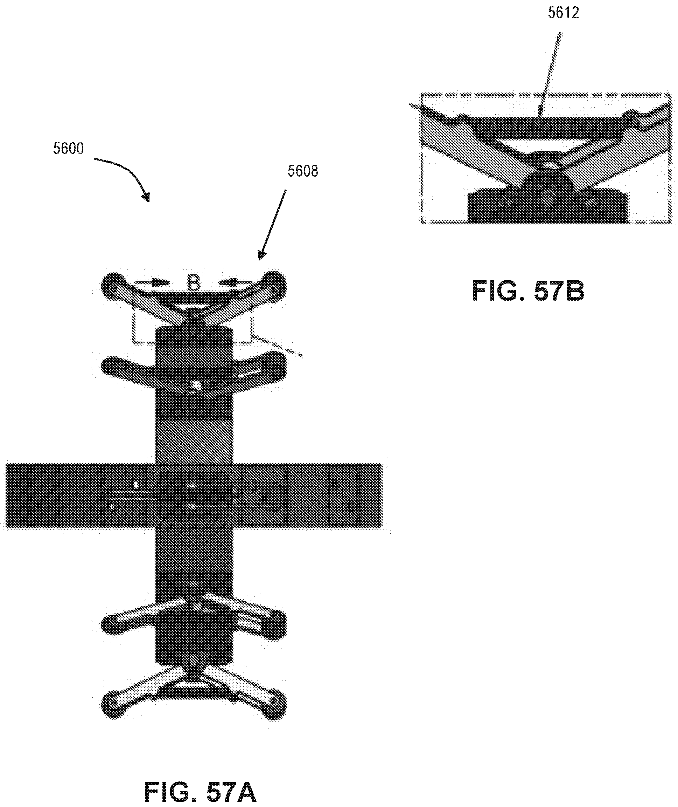

FIGs. 57A depicts a top view of the embodiment of the helmet system depicted in FIGs. 56A-56C;

FIG. 57B depicts detail view B identified in FIG. 57A;

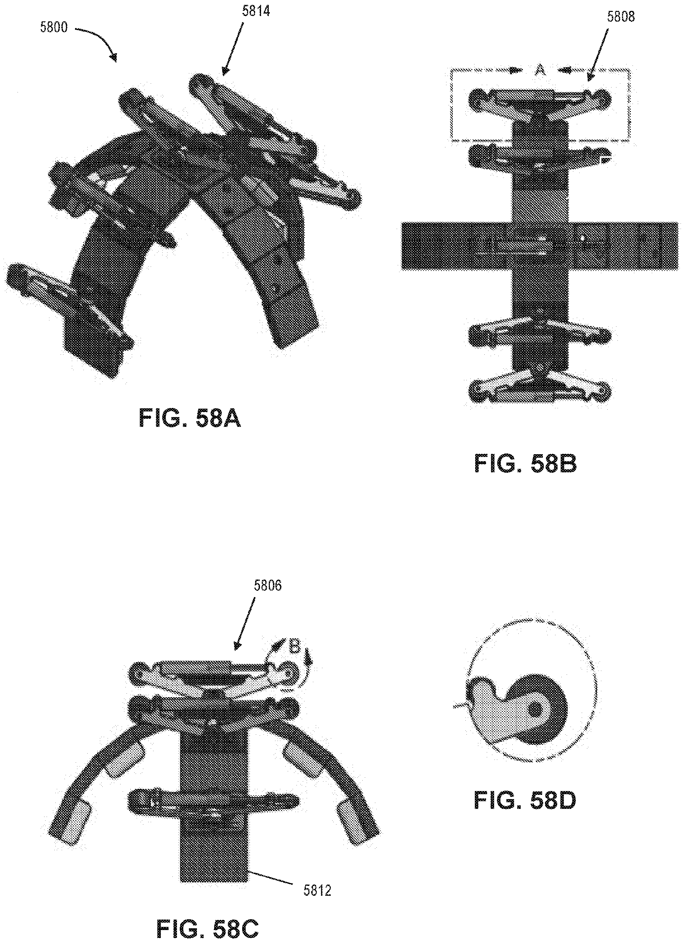

FIGs. 58A-58C depict top perspective, top and side views of another embodiment of a helmet system which does not form part of the present invention;

FIG. 58D depicts detail view B identified in FIG. 58C;

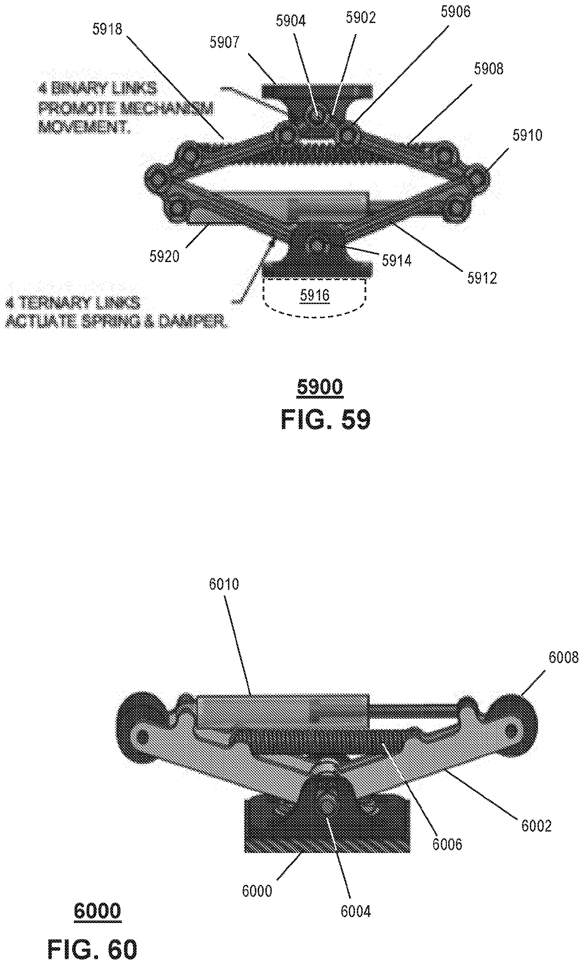

FIG. 59 depicts a side view of a an embodiment of a linked lever shock abatement assembly which does not form part of the present invention;

FIG. 60 depicts a more detailed view of a lever assembly of the helmet system depicted in FIGs. 58A-58C;

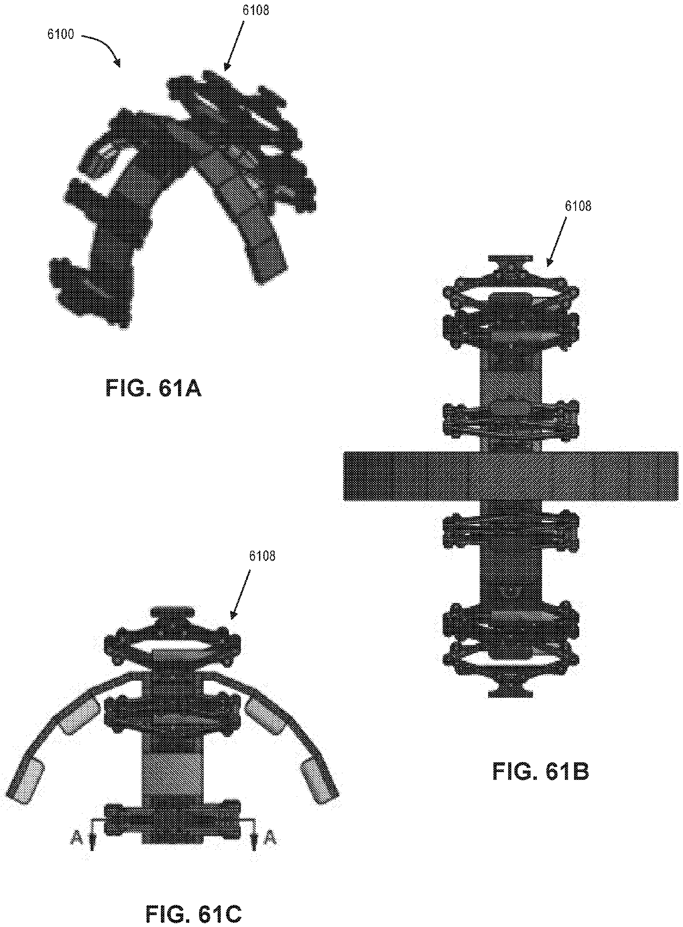

FIGs. 61A-61C depict top perspective, top and side views of yet another embodiment of a helmet system which does not form part of the present invention;

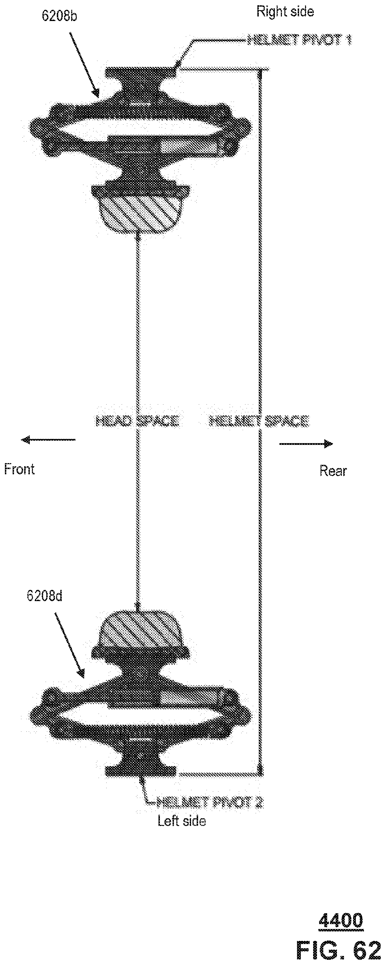

FIG. 62 depicts a cross-sectional view of a helmet system including the linked lever shock abatement assembly depicted in FIG. 59;

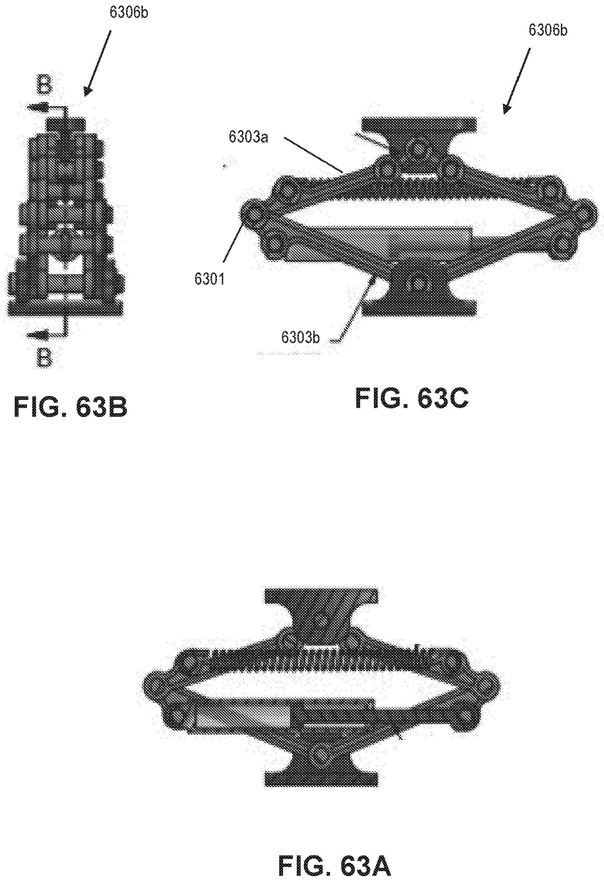

FIGs. 63B-63C depict, in more detailed, end and side views of a component of the helmet system depicted in FIG. 59;

FIG. 63A depicts cross-sectional view B-B depicted in FIG. 63B;

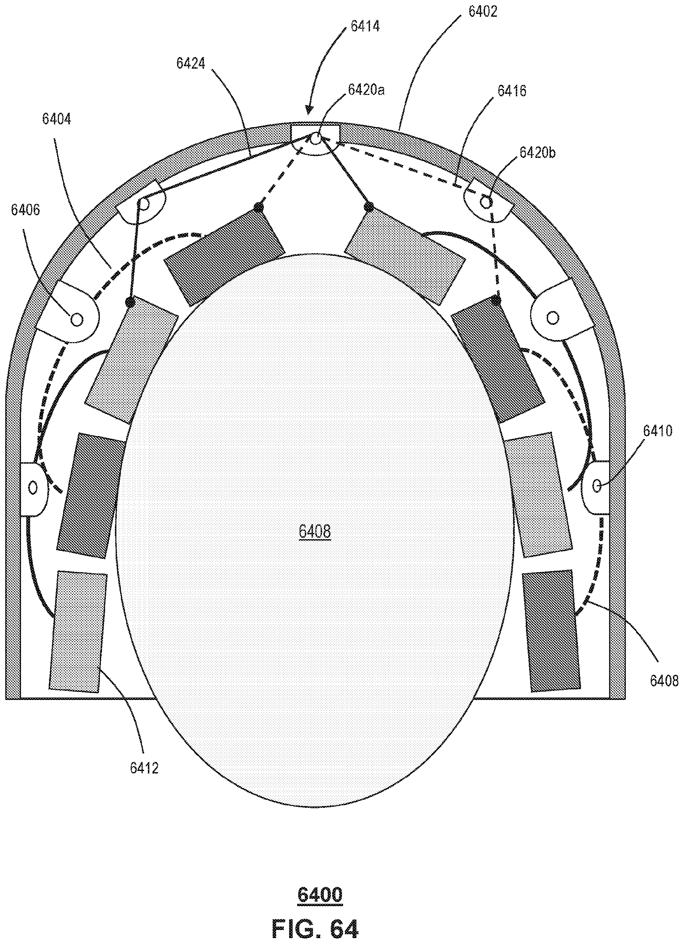

FIG. 64 depicts a cross section view of a helmet including an embodiment of a pulley system which does not form part of the present invention;

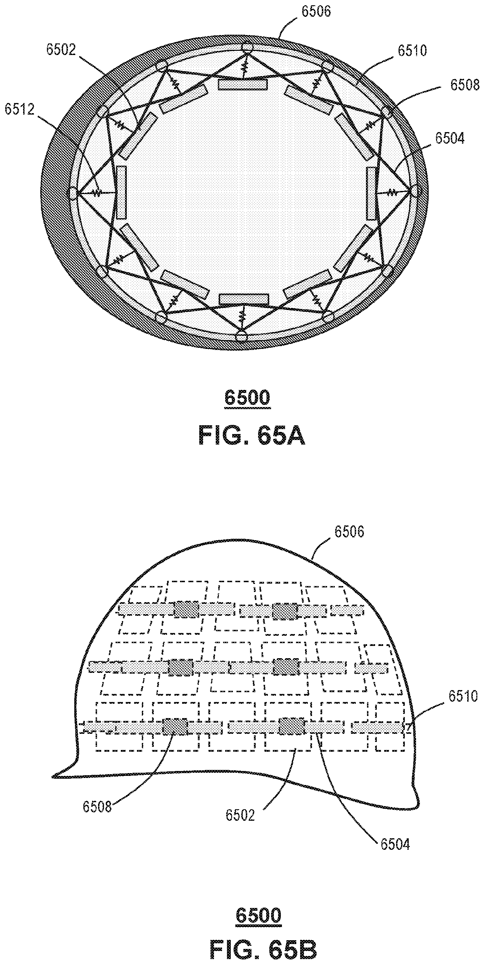

FIGs. 65A-65B depict bottom and side views of an embodiment of a helmet system which does not form part of the present invention;

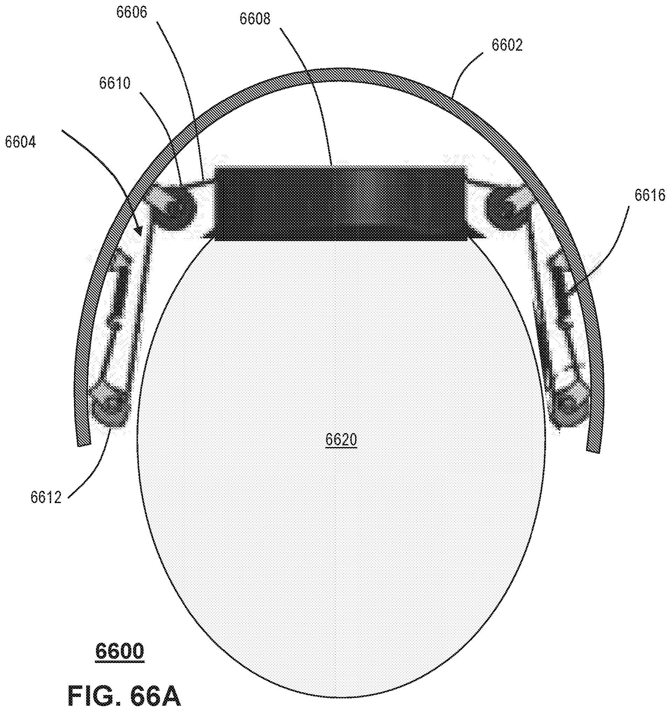

FIGs. 66A depicts a front view another embodiment of a helmet system, which does not form part of the present invention, positioned on a human head;

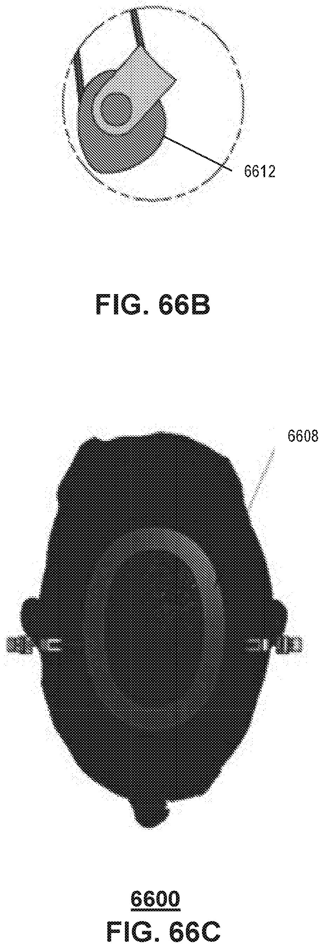

FIG. 66B depicts a more detailed portion of an embodiment of a cam of the helmet system depicted in FIG.66A;

FIG. 66C depicts a top view of the helmet system of FIG. 66A positioned on a human head;

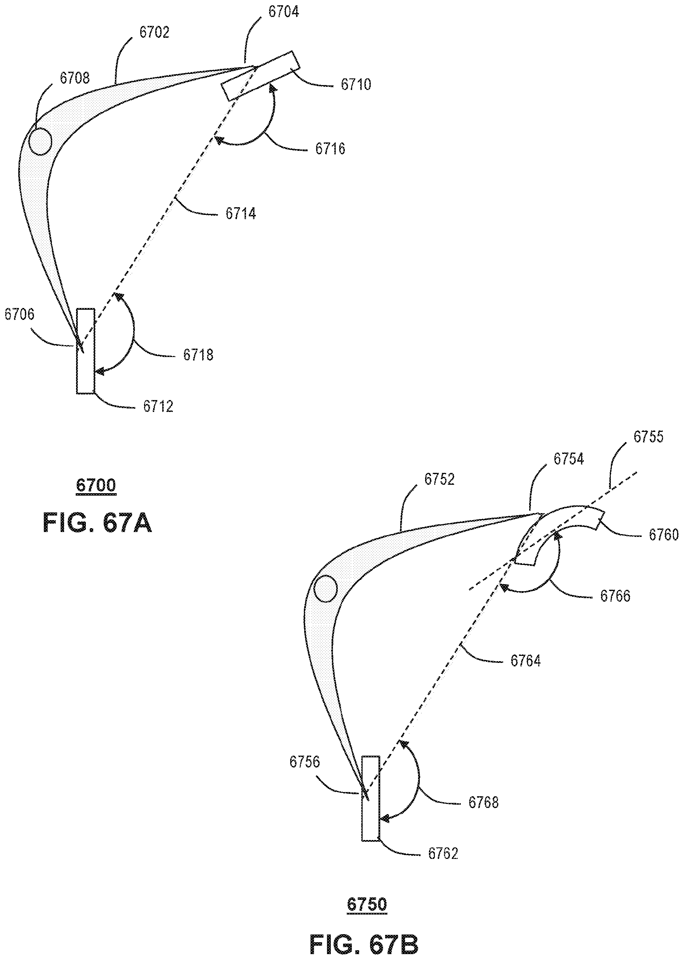

FIG. 67A depicts a schematic representation of an embodiment of a lever;

FIG. 67B depicts a schematic representation of another embodiment of a lever;

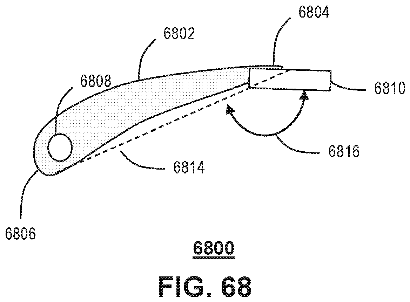

FIG. 68 depicts a schematic representation of yet another embodiment of a lever; and

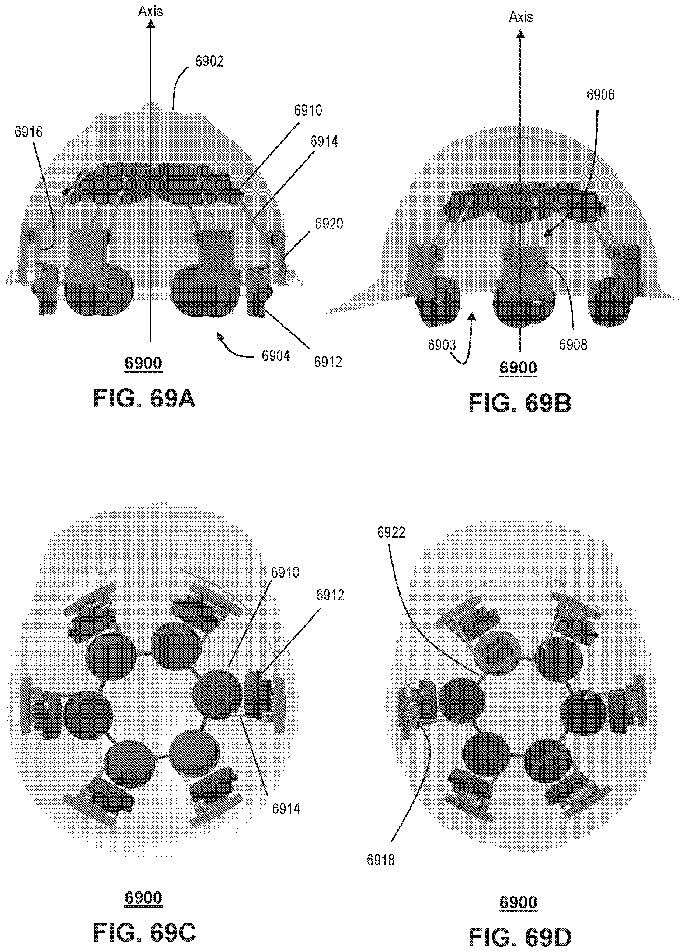

FIGs. 69A-69D depict, respectively, front, side, bottom and top views of yet another alternative helmet system.

## DETAILED DESCRIPTION

The subject disclosure describes, among other things, illustrative embodiments of devices and processes that abate impact shocks by enacting a machine that redirects at least a portion of an impact force imposed along one trajectory to a reaction force distributed along another trajectory. Other embodiments are described in the subject disclosure.

One or more aspects of the subject disclosure include a device having a helmet system that includes a protective shell defining an interior portion and a shock abatement assembly positioned at least partially within the interior portion according to claim 1. The shock abatement assembly includes a group of levers including a group of elongated members, each elongated member of the group of elongated members extending along a respective length between one end and another end. The shock abatement assembly further includes a fulcrum engaging one of the group of elongated members at a pivot location along a length of the one of the group of elongated members. The one of the group of elongated members, responsive to an application of an impact force along a direction, moves about the fulcrum to obtain a lever response based on a collision between the protective shell and an object. The shock abatement assembly further includes an end portion positioned at the one end of the one of the group of elongated members, wherein the end portion defines a surface having a non-parallel orientation with respect to a line extending between the one end and the another end. The end portion, in response to the application of the impact force, facilitates a reaction force having a directed force determined in part by the direction and in part by the non-parallel orientation of the surface. The shock abatement assembly further includes a deformable member in communication with the one of the group of levers and adapted to deform to obtain a deformation based on the lever response, wherein the deformation absorbs a first non-trivial portion of a kinetic energy of the collision.

One or more aspects of the subject disclosure not forming part of the claimed invention, include a shock abatement system, including a protective shell and a shock abatement assembly in communication with the protective shell. The shock abatement assembly includes a group of machines having a group of members, each member of the group of members extending along a respective length between opposing ends. The shock abatement assembly further includes a fulcrum engaging one of the group of members at a pivot location along a length the one of the group of members. The one of the group of members, responsive to an application of an impact force along a direction, moves about the fulcrum to obtain a machine response based on a collision between the protective shell and an object. The shock abatement assembly further includes an extension positioned at one of the opposing ends of the one of the group of members, wherein the extension defines a surface having a non-parallel orientation with respect to a line extending between the one of the opposing ends and another one of the opposing ends, wherein the extension, in response to the application of the impact force, facilitates a reaction force including a directed force determined in part by the direction and in part by the non-parallel orientation of the surface. The shock abatement assembly further includes a deformable member in communication with the first one of the plurality of machines and adapted to deform to obtain a deformation based on the machine response.

One or more aspects of the subject disclosure include a process, which does not form part of the present invention, that includes providing a protective shell defining a cavity and inserting a group of machines at least partially within the cavity. At least one machine of the group of machines extends between opposing ends and include an end portion defining a surface having a non-parallel orientations with respect to a line extending between opposing ends. The process further includes providing a deformable member in communication with the group of machines, and engaging the group of levers with fulcra, wherein the at least one lever of the group of levers, pivots about a respective fulcrum of the fulcra in response to an impact force received along a direction at an external surface of the protective shell. The impact force results from a collision between the protective shell and another object, wherein the end portion, in response to the impact force, facilitate reaction forces including directed forces determined in part by the direction and in part by the non-parallel orientations of the surfaces, and wherein the deformable member absorbs a non-trivial portion of a kinetic energy of the collision.

One or more aspects of the subject disclosure include a device, that includes a helmet defining an open ended cavity that receives a portion of a human body and a shock abatement assembly disposed at least partially within the open ended cavity. The shock abatement assembly includes a number of levers, wherein each lever of the number of levers comprises an elongated member extending between a first end and a second end. A number of fulcra pivotally engage the number of levers wherein a fulcrum of the number of fulcra engages a lever of the number of levers between the first end and the second end, wherein at least one lever of the number of levers rotate about the number of fulcra in response to an impact force of a collision between the helmet and a foreign object to obtain a lever response, wherein the impact force is applied along a first direction to an exterior surface of the helmet. The shock abatement assembly further includes a deformable member engaging at least one lever of the number of levers, wherein a deformation of the deformable member based on the lever response occurs in a second direction different from the first direction, and wherein the deformation absorbs a non-trivial portion of a kinetic energy of the collision.

One or more aspects of the subject disclosure include a lever assembly, wherein the lever assembly is configured to be worn upon a head portion, a neck portion, or both, of a human body. The lever assembly includes a lever having an elongated member extending between a first end and a second end and a pivot location. A fulcrum pivotally engages the pivot location of the lever, wherein the lever rotates about the fulcrum, to obtain a lever action in response to an impact force applied along a first direction to an exterior surface of the helmet system, and wherein the impact force is based on a collision between the helmet system and another object. The lever assembly further includes a spring engaging the lever, wherein a deformation of the spring based on the lever action, absorbs a non-trivial portion of a kinetic energy of the collision. The deformation of the spring occurs in a second direction different from the first direction, and the lever action redirects a portion of the impact force to the portion of the human body.

One or more aspects of the subject disclosure include a process, which does not form part of the present invention, that includes providing a helmet system including a number of levers rotatable about a group of fulcra, wherein at least one lever of the number of levers rotates about a respective fulcrum of the group of fulcra in response to an impact force received along a first direction at an external surface of the helmet system resulting from a collision between the external surface of the helmet system and another object. A deformable member of the helmet system engaging at least one lever of the group of levers deforms in response to a rotating of at least one lever of the number of levers. The deforming of the deformable member occurs along a second direction, wherein the deforming of the deformable member absorbs non-trivial portion of a kinetic energy of the collision. A portion of the applied force directed toward a body is redirected in response to the rotating of the group of levers.

The subject disclosure describes, among other things, illustrative embodiments of devices and processes that abate impact shocks by enacting a machine that redirects at least a portion of an impact force imposed along one trajectory to a reaction force distributed along another trajectory. Other embodiments are described in the subject disclosure.

One or more aspects of the subject disclosure include a process, which does not form part of the present invention, in which a helmet system including a machine receives a collision force along a first direction resulting from kinetic energy of an impact encountered at an external surface of the helmet system to obtain a received collision force. The helmet system, when worn on a head portion, a neck portion, or both of a body, positions the machine in a proximate relationship to the head portion, the neck portion, or both. The received collision force transferred is redistributed by the helmet system. The actuation of the machine occurs responsive to the received collision force, wherein the redistributing of the received collision force is based on the actuation of the machine. A collision energy transferred to the head portion, the neck portion, or both, resulting from the kinetic energy of the impact, is reduced based on the actuation of the machine. An impact response of the head portion, the neck portion, or both, is also reduced based on the actuation of the machine.

One or more aspects of the subject disclosure include a process, which does not form part of the present invention, in which a helmet system including a machine receives an impact force resulting from a collision between an external surface of a helmet system and a foreign object to obtain a received collision force. The helmet system, when worn on a head portion, a neck portion or both of a body, positions the machine in a proximate relationship with the head portion, the neck portion, or both. A collision parameter is based on the received collision force. A machine of the helmet system is selectively actuated based on the collision parameter exceeding at least one threshold, wherein a first portion of the kinetic energy is expended by the actuating of the machine, and wherein the received collision force is redistributed based on the actuation of the machine.

One or more aspects of the subject disclosure include a process, which does not form part of the present invention, in which a helmet system including a machine is provided. The helmet system is wearable upon a head portion, a neck portion, or both of a body to place the machine in a proximate relationship to the head portion, the neck portion or both. The helmet system is configured to receive a collision force along a first direction resulting from kinetic energy of an impact encountered between an external surface of the helmet system and a foreign object, to obtain a received collision force. The machine is selectively actuated based on a collision parameter exceeding a threshold, wherein a first portion of the kinetic energy is expended by the actuating of the machine and wherein the received collision force is redistributed based on the actuation of the machine.

One or more aspects of the subject disclosure include a process, which does not form part of the present invention, that provides a helmet system, that when placed on a head portion, a neck portion, or both, of a user, positions the machine in a proximate relationship to the head portion, the neck portion, or both. The helmet system receives a collision force along a first direction resulting from kinetic energy of an impact encountered at an external surface of the helmet system to obtain a received collision force. The helmet system provides a redistributing of the received collision force. The redistributing of the received collision force is based on the actuation of the machine. A collision energy transferred to the head portion, the neck portion, or both, resulting from the kinetic energy of the impact is reduced based on the actuation of the machine, and an impact response of the head portion, the neck portion, or both, is reduced based on the actuation of the machine.

As used herein the term machine generally refers to one or more devices that use and/or apply mechanical energy and/or power to perform a particular task. A machine can include one or more parts, each with a definite function, that cooperate together and/or with other structures to perform the particular task. In general, machines can transmit and/or modify force and/or motion. The particular tasks can include, without limitation, a redistribution of a collision force, a redistribution of energy or both. The term machine includes one or more elementary mechanisms, such as a lever, a wheel and axle, a pulley, a screw, a wedge, and an inclined plane, generally referred to as simple machines. In at least some applications, the term machine can include complex machines, e.g., including a combination of one or more simple machines.

Machines can include, without limitation, devices that can be actuated, e.g., by applied energy and/or power. Actuation of the machine can set one or more parts or components of the machine into motion. The motion can include a controlled movement that can be controlled at least in part in a predetermined manner according to a structure of the machine. For example, controlled movement can allow parts to move in one direction while preventing the parts to move in another direction. Motion can include linear motion, rotational motion, and any combination thereof. In at least some embodiments, machines can include one or more elements that result in an irreversible transformation of at least a portion of energy applied to the machine.

A collision generally refers to a short-duration interaction between two or more bodies, resulting in a change in motion of the bodies involved due to internal forces acting between them. Collisions can be elastic, inelastic or some combination of both. All collisions conserve momentum. Elastic collisions conserve both momentum and kinetic energy; whereas, inelastic collisions conserve momentum, but not kinetic energy. A coefficient of restitution, e.g., ranging between 0 and 1, provides a measure of a degree to which a collision is elastic, "1", or inelastic "0".

A line of impact can be defined as a line drawn between centers of mass of two colliding bodies that passes through a contact point between the bodies. Collisions can be "head on" in which a velocity of each body just before impact is along the line of impact. Alternatively, collisions can be non-head on, also referred to as oblique collisions, e.g., glancing blows, in which the velocity of each body before the impact is not along the line of impact.

A magnitude of a relative velocity between two colliding bodies at a time of impact can be referred to as a closing speed. In a collision between two bodies, a change in motion of one of the bodies resulting from a collision with another one of the bodies depends on how the bodies collided, how long it took the bodies to stop or slow, across what distance the collision occurred, and a degree of deformity of one or both of the bodies.

Collisions also involve forces related to changes in velocities of the different colliding bodies. Namely, each body involved in a collision experiences a respective impact force. The collision causes a change in acceleration of each body resulting from the collision that occurs over a time interval of the collision. The impact force can be estimated or otherwise approximated as a product of the body's mass and the acceleration, e.g., a change in velocity with respect to time, resulting from the collision. In some instances the impact force can be represented as an average value, e.g., $\boldsymbol{F} =$

*ma,* in which the acceleration, *a,* is an average acceleration based on the collision. In general, it is understood that the acceleration can include one of a linear acceleration, a rotational acceleration, or both. Accelerations can be positive or negative. For example, a body at rest hit by another body will experience an acceleration, whereas, a body moving that hits another body at rest will experience a deceleration.

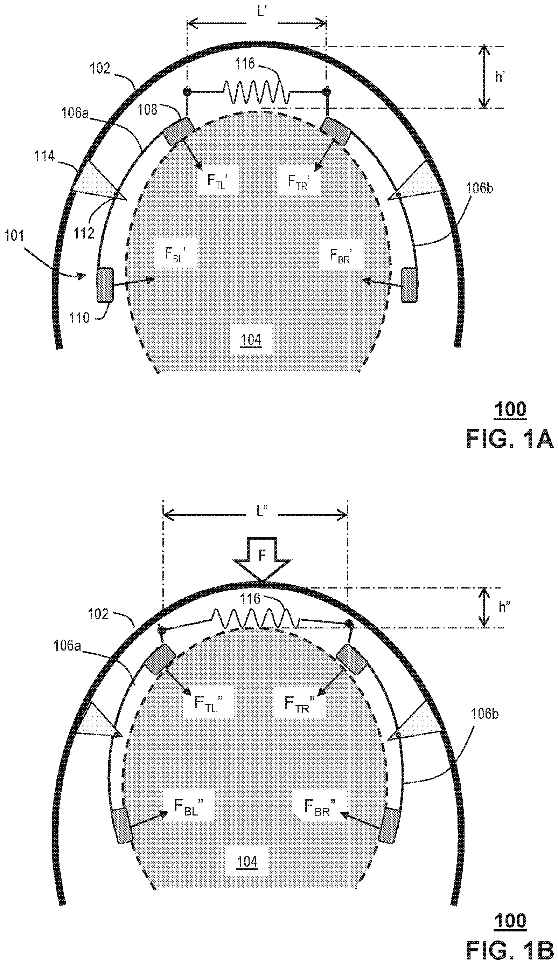

FIGs. 1A-1B depict schematic diagrams of a vertical cross-section of a protective system 100 in the form of a helmet system adapted for shock abatement. The example system 100 includes a protective shell 102 in the form of a helmet. The helmet 102 is worn upon a user's head 104 to protect the user's head 104 from trauma and/or injury associated with a collision or impact of the helmet 102 with a foreign object.

Generally speaking, a foreign object includes any object capable of colliding with the protective system 100. Examples of foreign objects include, without limitation, any movable object, such as a vehicle, a body, a portion of a body, an article, goods, materials, merchandise, and the like, including other protective systems 100. Alternatively or in addition, the foreign object can include immovable or substantially immovable objects, such as a building, a portion of a building, a wall, a floor, the ground, a tree, a guardrail, and the like. In some scenarios, one of the protective system 100 or the foreign object is stationary just prior to a collision, whereas, the other one is moving. In other scenarios both the protective system 100 and the object are moving, e.g., towards each other, away from each other, according to virtually any relative position, direction, speed, and/or acceleration that results in a collision between the protective system and the foreign object.

The example protective system 100 includes a machine 101 that is actuated in response to a collision. The machine 101 can redistribute an impact force of the collision, e.g., to one or more directions that differ from a line of impact of the collision. Alternatively or in addition, the machine 101 can expend at least a portion of kinetic energy associated with the impact to reduce a portion of collision energy transferred to the user's head. In at least some embodiments, the machine 101 introduces a delay between an instant of the collision and a time at which energy and/or force is transferred to the user's head. Such expenditures of energy and/or delays in response generally contribute to a reduction in acceleration and/or deceleration experienced by the user's head in response to the collision.

The example machine includes a first lever 106a and a second lever 106b, generally 106. Each lever 106 includes an elongated support arm, e.g., a strut, extending between a first, e.g., top, end 108 and a second, e.g., bottom 110 end. Each lever 106 is pivotally engages a respective fulcrum 114 at a position between opposing ends of the lever 106, such that each lever 106 rotates about its fulcrum.

The example system 100 also includes at least one resilient component 116. The example resilient component includes a spring 116 extending between the first lever 106a and the second lever 106b. The spring 116 is illustrated as being coupled between top ends 108 of the two levers 106.

Referring to FIG. 1A, the protective system 100 is in a use mode or configuration, sometimes referred to as a static use mode. Namely, the helmet 102 is worn upon the user's head 104, without being subject to any substantial external forces, such as impulsive forces as might be experienced when the helmet 102 collides against another structure. The top and bottom ends 108, 110 of the lever 106 can include deformable members, such as pads or similar features to provide comfort to the user's head 104 during use. It is understood that the pads can include compressible elements, compressible materials including resilient materials, such as foams, springs and the like to facilitate comfort during static use and/or shock abatement during periods of dynamic use, e.g., during a collision.

It is understood that one or more of the top pads and/or one or more of the bottom pads can be in contact with the user's head 104 during static use periods. In the illustrative example, only the top pads are in contact with the user's head 104. An example separation between top ends of the levers 106 is L', and a corresponding height or separation distance between a top of the user's head 104 and a facing interior surface of the helmet 102 is h'.

A first portion of the impact force and/or kinetic energy of the collision is redistributed based on the actuating of the machine 101. Redistribution can include a change in direction. For example, a collision force received along a line of action can produce a change in motion of the collision receiving body, such as a movement of at least the outer portion of the helmet system. A resulting impact force, and/or a relative motion between the outer portion of the helmet system, e.g., resulting from a transfer of energy, can squeeze the machine 101 along a first direction, e.g., generally towards the protected object along the line of action, e.g., along the direction of the collision force F. Actuation of the machine 101, however, causes movement of one or more portions of the machine 101 that introduces forces upon one or more of the shell 102 and the user's head 104.

In at least some embodiments, resulting forces act on the user's head 104 in directions that are orthogonal to the line of action and/or the impact force F acting upon the force processing mechanism. In at least some embodiments, the redistributions or redirection can introduce opposing forces acting upon the user's head 104. It is understood that the user's head 104 can experience a resulting compression, e.g., without a corresponding translation and/or rotation. In at least some embodiments, the resulting forces act on the user's head 104 in directions that are substantially opposite to the line of action and/or the impact force acting upon the force processing mechanism.

In at least some embodiments, a second portion of the impact force and/or kinetic energy of the collision that would otherwise be transferred toward the user's head 104 is expended, absorbed, and/or otherwise reduced. This expenditure can include one or more of absorbing and/or dissipating energy associated with the collision. The absorbing and/or dissipating energy can occur, at least in part, along a direction other than the line of action. Alternatively or in addition, a reduction of at least a portion of the impact force can include an elastic and/or plastic behavior of materials to transform at least a portion of impact kinetic energy. Namely, impact energy can be absorbed by a break or fracture, a dent, a deformation or other temporary and/or permanent alteration of a protective system component. For example, some protection systems, such as motorcycle and/or bicycle helmets that are designed to break, fracture and/or otherwise deform in response to a collision. In at least some embodiments, energy absorption can be accomplished by distortion of a resilient and/or compliant member. Examples include, without limitation, storing kinetic energy of the collision in mechanical energy, e.g., potential energy of a distorted spring, a compressed resilient pad, and the like.

Referring next to FIG. 1B, the system 100 is shown in a dynamic response mode or configuration. Namely, the helmet 102 worn upon the user's head 104 is subjected to an external force, F, shown for illustrative purposes as a vertically downward force. The external force F, e.g., resulting from a collision of the helmet 102 with another object, is applied to an exterior surface of the helmet 102 as shown. The force F pushes the helmet 102 downward with respect to the user's head 104. The fulcra 114 securely engage the interior surface of the helmet 102 and move downward in a corresponding manner with respect to the user's head 104. A relative movement of the helmet 102, the fulcra 114 and the user's head 104 decreases the separation distance between the top of the user's head 104 and the facing portion of the interior surface of the helmet to a distance h", where h" < h'. The relative movement forces the top ends 108 of the levers 106 into adjacent regions of the user's head 104. The user's head 104 provides a reaction force that results in a rotation of the levers 106 about the respective fulcra 114, as shown. In the example embodiment, the resulting rotation causes bottom portions 110 of the levers to move inward towards the user's head 104.

Additionally, the rotation of the levers results in a separation of the top ends 108 of the levers 106, resulting in an increased separation distance L", where L" > L'. The expansion in the separation distance applies a tension to the spring 116 causing a distortion of the spring, e.g., and elongation. The elongation of the spring 116 results in a conversion of at least a portion of kinetic energy resulting from the collision into potential energy in the form of the distorted spring.

Beneficially, rotation of the levers provides several advantages that facilitate an abatement of the collision force acting upon the user's head 104 and/or other parts of the body, such as the neck, spine and the like. For example, rotations of the levers 106 reconfigured at least a portion of the downward or vertical force F into a different direction, e.g., a horizontal direction, pushing inward on side portions of the user's head 104. Thus, at least a portion of the downward force F that would otherwise tend to compress a user's neck and/or spine is converted to opposing lateral forces that tend to compress the user's head 104, without necessarily moving and/or compressing the spine.

Moreover, that portion of the kinetic energy that is converted to potential energy in the spring is absorbed or otherwise prevented from acting upon the user's head 104 or body. In the illustrative example, removal of the force F, e.g., after a collision, can result in a subsequent transfer of the potential energy of the spring 116 into kinetic energy of the levers 106 to rotate the levers back towards their original static use positions. Such backward rotation can result in a relative movement of the helmet 102 and the user's head 104, e.g., to increase the separation distance from h" back to h'. It is anticipated that such releases of potential energy will not result in forces that would otherwise injure the user 104.

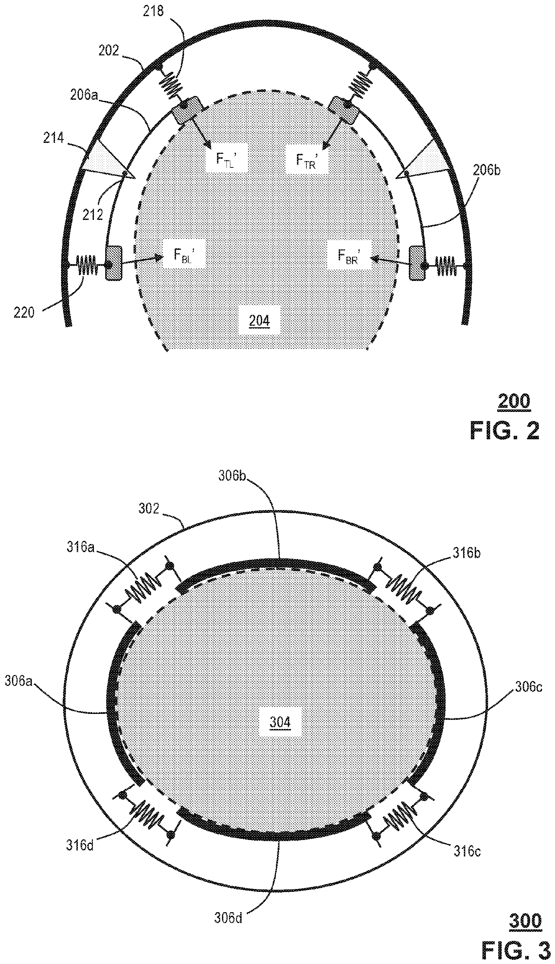

FIG. 2 depicts a schematic diagram of a vertical cross-section of another embodiment of a protective system 200. The system 200 includes levers 206a, 206b, generally 206 that pivot about respective fulcra 214. Each lever includes a first spring 218 coupled between a top end of the lever 206 and an interior surface of a helmet 202. Each lever 206 can include a second spring 220 coupled between a bottom end of the lever 206 and the helmet 202 as shown. It is understood that the levers can include other configurations of springs, e.g., including one or more springs coupled between top and/or bottom ends of the levers 206.

FIG. 3 depicts a schematic diagram of a horizontal cross-section of yet another embodiment of a protective system 300. The system 300 includes four lever extensions 306a, 306b, 306c, 306d, generally 306 that include arcuate surfaces configured to surround at least a portion of a perimeter of a user's head 304. For example, the lever extensions 306 can be positioned at top and/or bottom ends of levers, such as the aforementioned example levers 206 (FIG. 2).

The illustrative example includes deformable members that include springs 316a, 316b, 316c, 316d, generally 316, coupled between adjacent pairs of the lever extensions 306. An external force F is applied to a side of the helmet 302 results in a relative displacement between the helmet 302 and the user's head 304. One or more of the springs 316 can be deformed in response to a relative movement of the helmet 302, the user's head 304 and/or one or more of the levers 306.

In some embodiments, one or more of the levers can be configured to twist. For example, the twisting can be in response to a force applied to one or more elongated extensions at either or both ends of a lever assembly. In some embodiments, twisting is permitted by one or more of a mechanical configuration or a choice of material. Twisting of one or more of the levers can contribute to deformation of one or more deformable members, or springs, e.g., to convert a kinetic energy to a potential energy based on the twisting. In at least some embodiments, twisting includes a rotational displacement of one end of a lever with respect to an opposing end of the lever.

In at least some embodiments, one or more of the elongated portion of the lever and the extension are substantially rigid and joined by way of a linkage that facilitates a twisting. Alternatively or in addition, a twisting can be facilitated by a pivot about which the lever rotates. For example, the pivot can be flexibly mounted to one of a mounting frame and/or an interior surface of a protective shell or helmet. It is understood that one or more of the levers can include one or more joints, such as ball and socket joints, universal joints, spring joints, and the like. In at least some embodiments, the lever is joined to one of a mounting bracket and/or a protective shell, e.g., a helmet, by way of an axial joint. The axial joint can include at least one axis having a first alignment, e.g., positioned at a pivot location. Alternatively or in addition, the axial joint can include at least one other axis having another alignment. In at least some embodiments, the first alignment and the second alignment differ by about 90 degrees, e.g., as in a so-called universal joint or linkage.

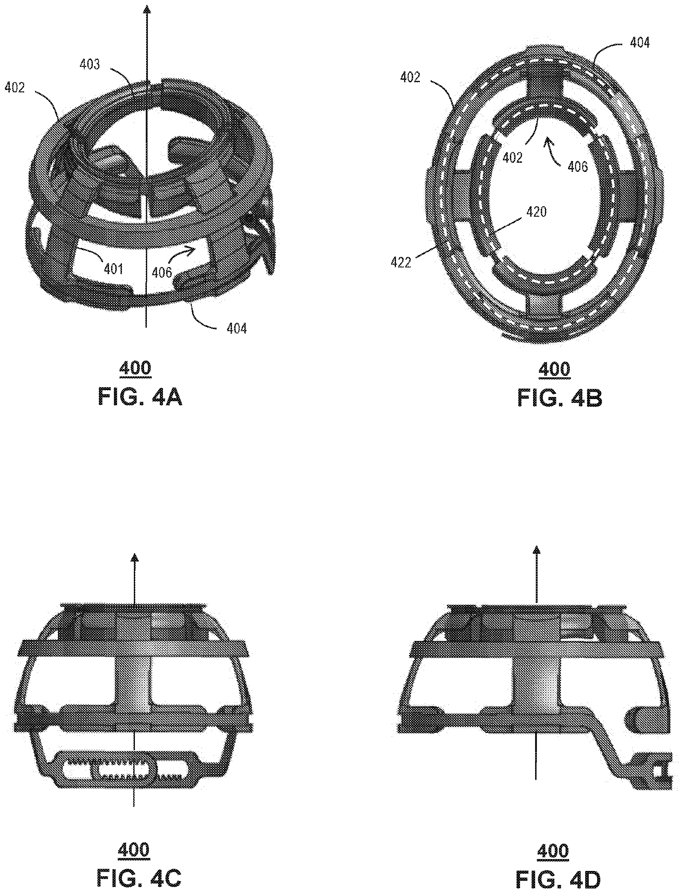

FIGs. 4A-4D depict top perspective, bottom, front and side views, respectively, of an illustrative embodiment of a lever assembly 400. The lever assembly 400 can be referred to as a shock abatement system and/or a helmet suspension system that can be used in combination with a protective helmet wearable upon a portion of a human head, a neck or both. The illustrative helmet lever assembly 400 can be used alone or in combination with a protective helmet shell. For example, the protective helmet shell can be molded or otherwise formed from a material, such as a polymer, a composite, e.g., including a resin and a fibrous matrix, a metal, e.g., as used in armor, or any combinations thereof. In at least some embodiments, the helmet shell can be rigid. It is understood that the protective shell, e.g., the helmet, without limitation, can include a single layer of material or multiple layers of material and provides an external surface that is configured to receive a collision force. The multiple layers of material can be of the same or similar materials or different materials. For example, materials with a structural orientation, such as materials including fibers, e.g., woven materials, can be layered having different orientations.

The direction, number, and/or magnitude of an applied, e.g., collision, force depends upon an intended application for the helmet. In some instances, it is possible to generally categorize protective gear into at least four general categories, including those intended for: (i) single impact, single direction; (ii) single impact, multiple directions; (iii) multiple impacts, single direction, and (iv) multiple impacts, multiple directions. It should be understood that the shock abatement systems and protective techniques disclosed herein can be applied to one or more of these categories.

The lever assembly 400 includes a mechanism that facilitates mitigation of impact forces upon a user. For example, the mechanism can include a force-redirecting mechanism that, when placed between the protective shell and the human body, facilitates redirection of a portion of the collision force transferred to the human body.

The illustrative example helmet lever assembly 400 includes four levers 406 disposed about a central axis, corresponding to a vertical axis of an upright, or standing, human body. Each of the levers 406, respectively, extends between an upper end 403 and lower end 404. The levers 406 are pivotally attached to a pivot ring 402 providing a group of fulcra pivotally attached to the group of levers 406 at locations between their respective upper and lower ends 403, 404. When used with a protective shell, such as a helmet, the lever assembly 400 reacts to an applied force by pivoting one or more of the levers 406 about its respective fulcrum. It is believed that the pivoting action of the levers in reaction to in impulsive or impact force mitigate injuries to a human head, neck and/or back, when it is fully assembled. A vertical axis corresponding to a longitudinal axis of an upright human body or head is illustrated for reference. A vertical blow is primarily directed downward from above substantially along the vertical axis. Such impacts can result from falling objects, e.g., in a construction site and/or impacts resulting from the helmet being driven into another object, such as a beam, a mine shaft, and the like as might be caused by movement of objects and/or movement of a user.

In some embodiments, the lever assembly 400 can be assembled as a self-contained, wearable unit. In the illustrative example, the lever assembly 400 can be assembled into a free-standing assembly that can be worn with or without a protective shell, but the claimed system includes the shell. It should be understood that the shock abatement systems disclosed herein can be assembled into free-standing assemblies and used without protective shells. Such free-standing assemblies can be pre-assembled and inserted into or otherwise combined with protective shells. Alternatively or in addition the shock abatement systems can be combined with one or more protective shells and/or assembled in combination with such shells. In some embodiments, one or more components, e.g., the fulcra, can be attached to and/or integrally formed with the protective shell. It is envisioned that in at least some embodiments, one or more cantilevered segments can be formed by removing material from a portion of a shell. At least one of the cantilevered segments can be operatively coupled to one or more of the example levers and/or lever assemblies disclosed herein to redistribute a non-trivial portion of a collision energy that absorbs and/or dissipates energy in directions other than a line of impact of the collision.

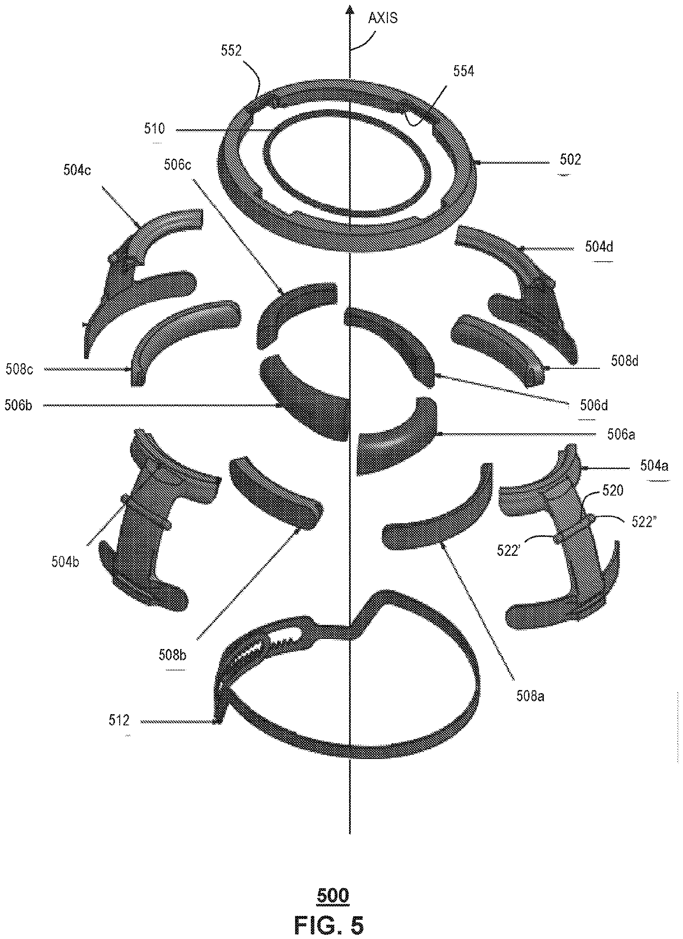

FIG. 5 depicts a top perspective, exploded view of an embodiment of a helmet shock abatement system 500, similar to the system 400 depicted in FIGs. 4A-4D. The example shock abatement system 500 includes a lever array 504. The lever array 504 includes four levers: a front lever 504a, a right side lever 504b, a rear lever 504c, and a left side lever 504d, generally 504. The levers 504 are elongated extending between a first end, e.g., a top end, and a second end, e.g., a bottom end. Each lever 504 also includes a respective pivot location 520 situated between the first and second ends that abuts a corresponding fulcrum. Each of the levers 504 rotates about its respective fulcrum. Although four levers are shown for illustration, it is understood that more or fewer levers can be employed. For example, a two lever application can include two levers that can be arranged in opposition, e.g., front and rear or left and right side.

Other embodiments can include different numbers of levers, e.g., without limitation, three, five, six, nine, twelve.

In some embodiments, lever rotation can occur within a plane. Consider a hinge-type pivot in which rotation is substantially constrained to a plane substantially perpendicular to an axis of the pivot. Alternatively or in addition, rotation can occur more freely, e.g., within three dimensions. Consider a point fulcrum in which the lever 504 can rotate in three dimensions. By way of non-limiting arrangements, a pivot can include a ball-and-socket style joint or coupling. Such an engagement can include a partially spherical protrusion, e.g., a ball or a partially spherical cavity, e.g., a socket positioned at a pivot location along the lever 504 and a corresponding socket or ball positioned at an adjacent fulcrum. The ball-and-socket joint generally allows for multidirectional movement and rotation.

The example shock abatement system 500 also includes a mounting structure, e.g., a mounting frame 502 to which the levers of the lever array 504 are pivotally attached. The example mounting frame includes an enclosed ring 502, e.g., a circle or an oval, e.g., an ellipse or egg shape. The mounting frame 502 includes a fulcrum for each of the levers. The example fulcrum includes a recess 552 and an opposing pair of mounting points 554.

Each lever 504 of the lever assembly 500 includes a respective pivot location 520 including opposing pivot extensions 522', 522", generally 522. In the illustrative embodiment, the pivot location 520 can include a pivot axle, e.g., defined at least in part by the pivot extensions 522 that can be integrally formed with each lever 504. It is understood that other embodiments can include separate parts, such as a pivot axle, and the like. The pivot extensions 522 are pivotally attached to respective mounting points 554, e.g., notches, channels, grooves or the like of the mounting frame 502. The mounting frame 502, e.g., by its mounting points 554, provides fulcra that support the levers 504. Accordingly, each lever of the lever array 504, when mounted to the mounting frame 502 by way of the pivot extensions 522, is rotatable about its respective fulcrum, e.g., about a pivot axis 520.

In the example system 500, each of the levers 504, includes a respective top deformable member 506a, 506b, 506c, 506d, generally 506, disposed at a respective top end of each of the levers 504. Likewise, each of the levers 504 also includes a respective bottom deformable member 508a, 508b, 508c, 508d, generally 508, disposed at a respective bottom end of each of the levers 504. One or more of the deformable members 506, 508 can include a spring, a compressible element, a resilient material, a compressible material, a compliant material, a conformable material, or any combination thereof. Deformable materials can include, without limitation, compressible materials, including, without limitation, spongy materials, foams, rubbers, polymers, gels, composites and the like. It is understood that one or more of the deformable members 506, 508 can be in contact with a portion of a body, such as a human head, face and/or neck. One or more of the deformable members 506, 508 can be configured to touch the body during normal wear, e.g., static use, during periods of reaction to external forces including impulsive or impact forces as might be experienced during a collision, and/or subsequent to any such collisions.

Each of the top deformable members 506, or more generally top attachments 506, can be attached to the first end, or top portion of each lever 504. The size, shape and or composition of each of the top attachments 506 can be sized, shaped and/or otherwise positioned to be in contact with an adjacent anatomical feature of the body. For the example helmet application, the top attachments 506 are sized and/or shaped to conform to a top or crown portion of a user's head. For example, the top attachments 506 can form part of the helmet shock abatement mechanism to facilitate action of the levers 504 in response to a substantially vertical impact received on an external surface of the helmet, while also offering an added measure of protection to the user. Namely, the top attachments 506 can be formed from a deformable material that can change shape, at least temporarily, under an impact to absorb energy, without injuring an adjacent region of the user's scalp. For example, the top attachments 506 can be formed from a resilient material.

Alternatively or in addition, one or more of the bottom deformable members 508, or more generally bottom attachments 508, can be formed from a resilient material and/or a compressible material and attached to the lower portion of each lever 504. The size, shape and or composition of each of the bottom attachments 508 can be sized, shaped and/or otherwise positioned to be in contact with an adjacent anatomical feature of the body. For the example helmet application, the bottom attachments 508 are sized and/or shaped to conform to a side portion of a user's head, e.g., a frontal or forehead region, a side or temple region and/or a rear or occipital region. It is understood that one or more of the bottom attachments can be configured to conform to multiple regions of a bodily anatomy, such as forehead-temple and/or temple-occipital, and the like. In at least some embodiments, one or more of the bottom attachments 508 can form part of the shock abatement mechanism to facilitate action of the levers 504 in response to a side or vertical impact received on an external surface of the helmet, while also offering an added measure of protection to the user. Namely, the bottom attachments 508 can be formed from a compressible material that can deform, at least temporarily, under an impact to absorb energy, without injuring an adjacent region of the user's scalp.

The shock abatement system 500 can include one or more springs, such as a top spring member 510 that absorb and/or store energy in response to movement of the levers 504. In the example shock abatement system 500, the spring member 510 includes an enclosed loop disposed along an outer facing surface of a top portion of each of the levers 504. The top resilient member 510 can include a spring and/or an elastomeric material, such as an elastic band, a rubber band, or a resilient O-ring. Although the illustrative examples portray an enclosed elastomeric loop, it is understood that any deformable material and/or configuration can be used. For example, a top portion of one of the levers 504 can be attached to a top portion of one or more of the other levers 504 by one or more springs. For example, springs can be used between adjacent levers 504, and/or between non-adjacent levers 504, e.g., between opposing levers 504. According to any of the example configurations, an impact or collision force induces a rotation of one or more of the levers 504, which results in a deformation of the one or more spring members 510 to absorb, and/or store, and/or dissipate kinetic energy of the impact/collision. It is understood that deformations of any of the various devices and/or materials disclosed herein can include one of plastic deformations, elastic deformations, or any combination thereof.

In at least some embodiments, one or more deformable members, such as the example spring members 218 of FIG. 2, can be placed between the levers 504 and a protective shell 202 (FIG. 2). Accordingly, when the levers 504 move, energy may be absorbed by deformation of the springs. More generally, the deformable members, e.g., spring members, do not have to be limited to contact foams and/or o-rings. More generally, any other kinds of spring can be used. Such springs, in operation, can cooperate with action of the levers. It is understood that such spring members alone or in combination can facilitate a "threshold strategy" in which a type of mechanical response of the protective system can differ based on a magnitude and/or acceleration of a collision.

The spring member 510, without limitation, can include a tension spring having one or more of a coil spring or an elastomeric material, e.g., such as an elastic band. In the example embodiment the upper tension spring, 510, is an elastic or rubber O-ring, e.g., about 4 mm in diameter. Other embodiments can use any spring or rubber like material that can work under tension that can absorb energy by deformation in a different direction than that of the vector of the original impact. In this embodiment extrusion is used to create a cylindrical rubber band that is later cut, e.g., at a 45 degree angle in each of its ends, and glued together using an epoxy adhesive to form an enclosed ring of a predetermined size and shape.

The top resilient member 510 can remain in tension and/or slack with respect to any and/or all of the levers 504 during normal periods of usage. Periods of use can be described generally as a static storage mode, a static use mode, and a dynamic impact mode. The static storage mode can include periods during which the helmet and/or shock abatement system is not placed on a portion of a body, e.g., during periods of non-use or storage. The static use mode can include periods during which the helmet and/or shock abatement system is placed on a portion of a body, e.g., during periods of usage or wear. The dynamic use mode can include periods during which the helmet and/or shock abatement system is placed on a portion of a body and exposed to external forces, such as exposed to during periods of impacts or collisions of the helmet with another object.

By way of example, in response to a vertically applied force, e.g., to a top portion of the helmet or head, the top portions of the levers 504 generally rotate outward, away from the central axis. Such outward rotation of the top portions of the levers 504 generally deforms the top resilient member 510 by stretching it. The stretching absorbs and/or otherwise stores kinetic energy of the lever rotation as potential energy by the expansion and/or compression of the resilient material of the top resilient member 510. In at least some embodiments, upon a removal of the vertical force, the potential energy stored in the top resilient member 510 can be transferred back to the levers 504 to induce a rotation that returns the levers 504 to a pre-stressed configuration.

In at least some embodiments, the shock abatement system can be configured with clasps, locks, catches, ratchet mechanisms or the like, to retain the levers in a rotated configuration, thereby preventing a transfer of potential energy stored in the top resilient member 510 back to the levers. Although the illustrative examples include transformations of a kinetic energy associated with a collision into a potential energy, e.g., by deformation of a resilient material, such as a spring, it is understood that other energy absorbing and/or dissipating techniques can be used. For example, energy of a collision force can include transforming a kinetic energy to one of a potential energy, a mechanical energy, a thermal energy, an acoustic energy, an electrical energy, a magnetic energy, or any combination thereof.

In the example system, each of the levers is substantially aligned in a plane that contains the central axis. Rotation of each lever can be substantially confined to this plane in a manner that controls positions of the top and/or bottom attachments with respect to a user's head and/or neck. The pivot portions of the levers and/or the fulcra are disposed in a plane perpendicular to the central axis. Accordingly, the example arcuate top portions 506, collectively, can form a first oval 420 (FIG. 4B) having a first size, e.g., small, during static modes of operation, and a second oval 422 (FIG. 4B) having a second size, e.g., large, during dynamic modes of operation. Likewise, the example arcuate bottom portions 508, collectively, can form a first oval having a first size, e.g., large, during static modes, and a second oval having a second size, e.g., small, during dynamic modes of operation. Sizes and/or shapes of the ovals can be controlled by one or more of the sizes of the levers 504, positions of the pivots 520, size, shape and/or orientation of the top attachments 506 and/or the bottom attachments 508, and/or characteristics, e.g., size, shape, resiliency of the top spring member 510.

The levers 504 of the example shock abatement system 500 are curved to provide a concave surface facing inward towards the central axis. For the example helmet application, the shock abatement system 500 includes an open-ended interior region that is sized and/or otherwise shaped to accommodate at least a top portion of a user's head.

In the illustrative embodiment, the shock abatement system 500 includes an adjustment band 512 that includes an occipital support with adjustment mechanism of the ratchet kind. However other embodiments can use any of the available adjustment mechanisms and/or occipital supports. Alternatively or in addition, the adjustment band can include one or more other components to facilitate fitting and/or securing the shock abatement system 500. Examples include, without limitation, a strap, belt or pad(s) that conforms to a portion of the object being protected, such as an adjustable strap that conforms to anatomical portion of the body, e.g., an adjustable nape or chin strap.

The adjustment band 512 in this example embodiment can be made of a flexible material with high tensile resistance like polymers, e.g., polypropylene. This material can be injected, casted, press-cut formed, or the like, using known manufacturing techniques to fully form all the details of the grooves needed for the adjustment mechanism. However, other embodiments that use other adjustment mechanisms can use different means of manufacturing, such as punching. Any flexible material with relatively high tensile strength can be used like other polymers, leather, metals, foils, etc.

The adjustment band 512 is illustrated along an outer bottom end of at least some of the levers 504. It is understood that other configurations can include one or more adjustment bands, with at least some of the adjustment bands being fitted or otherwise placed along an interior or inner portion of the lever, along an exterior or outer portion of the lever, or along a combination of interior and exterior portions of different levers. For example, the lever 504 can be formed with an opening, such as a loop, a slot, a channel, and the like, to accommodate at least a portion of the adjustment band 512, e.g., as in a belt threaded through a belt loop of a garment. In at least some embodiments, the adjustment band 512 does not inhibit movement of the levers. For example, the adjustment band can be placed along and/or at attached to an interior region of the protective shell, without inhibiting movement of the levers.

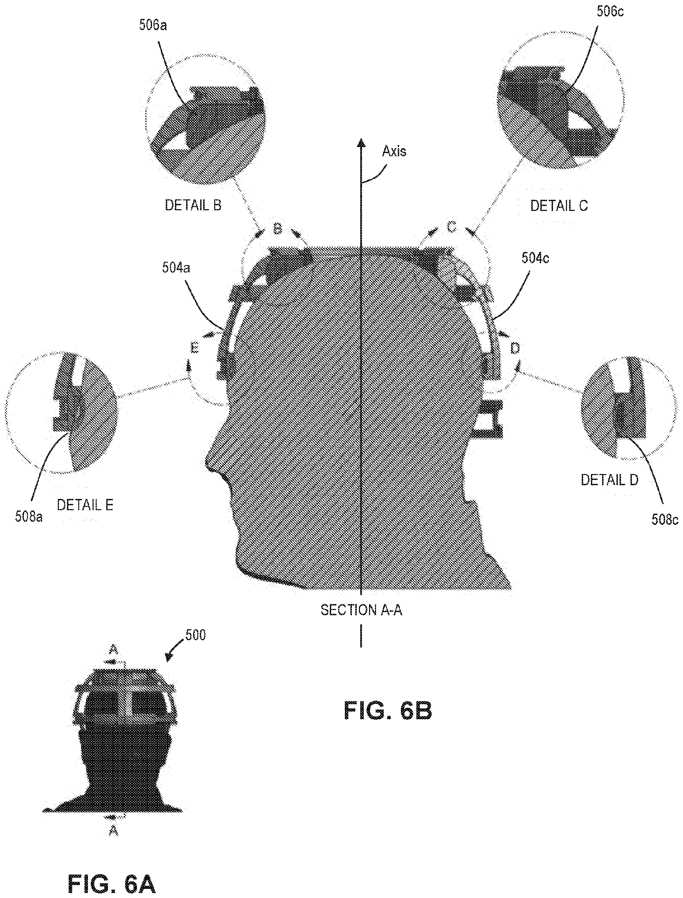

FIG. 6A depicts a front view of the example shock abatement system 500 worn upon a head portion of a human. FIG. 6B depicts a sagittal plane cross-section of the human head bearing the example helmet shock abatement system 500 depicted in FIGs. 4A-4D and 5. Although a protective shell is not shown for clarity it should be understood that the shock abatement system 500 is positioned between a protective shell and the user's body. It is generally understood that a size and or shape of a protective helmet shell can be determined according to one or more of an application, e.g., sports, work, military, vehicular, a user preference, and the like. In particular, the cross-sectional view illustrates positioning of front and rear top attachments, e.g., resilient members 506a, 506c along a longitudinal plane at the crown of the user's head. Also shown, are positioning of the front and rear bottom attachments, e.g., compressible members 508a, 508c along a lower periphery of the user's head, e.g., in a longitudinal plane positioned slightly above the brow and or adjacent to an occipital region.

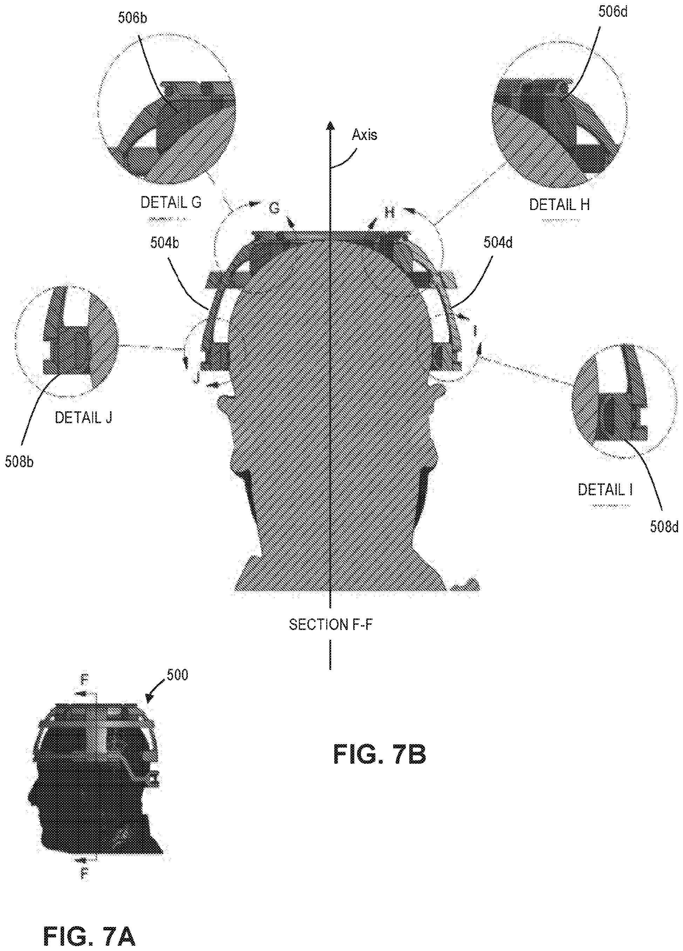

FIG. 7A depicts a side view of the example shock abatement system 500 worn upon a head portion of a human. FIG. 7B depicts a frontal plane cross-section of the human head bearing the helmet shock abatement system depicted in FIGs. 4A-4D and 5. In particular, the cross-sectional view illustrates positioning of left and right side top resilient members 506b, 506d along a transverse plane at the crown of the user's head. Also shown, are positioning of the left and right side bottom compressible members 508b, 508d along a lower periphery of the user's head, e.g., in the transverse plane positioned adjacent to a temple region of the user's head.

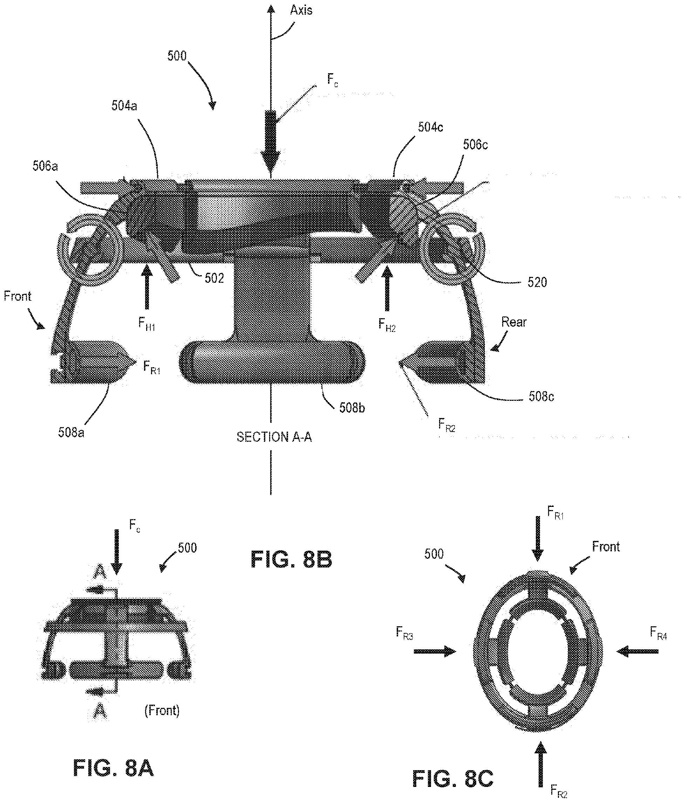

FIG. 8A depicts a front view of the shock abatement system 500 depicted in FIGs. 4A-4D and FIG. 5. FIG. 8B depicts a sagittal plane cross-section of the shock abatement system 500 along section A-A shown in FIG. 8A. In particular, an impact or collision force $F_c$ is shown directed downward, along the central axis. It is generally understood that the example helmet shock abatement system 500 fits within a protective helmet shell. A region of engagement between the shock abatement system 500 and the helmet shell (not shown) can occur along an outer surface, e.g., an outer slanted surface, of the mounting assembly, or pivot ring 502. It is further understood that in at least some embodiments, an open space is provided between portions of the shock abatement system 500 and an interior surface of the protective helmet shell. The open space is generally sufficient to allow a mechanism of the shock abatement system 500, such as the levers 504, to operate, e.g., pivot, about their respective axes without interfering with or otherwise being hindered by the protective helmet shell. Beneficially, the open space allows for air circulation, cooling and/or mitigation of perspiration.

In more detail, the downward collision force Fc pushes the protective helmet shell in a downward direction along the central axis (this can be viewed from a frame of reference of the helmet, in which it would appear that the user's head is moving upward, towards the point of impact). The downward movement of the helmet shell (upward movement of the head) urges the pivot ring 502 in the same, downward direction. The collision force result in multiple collision force elements applied through each of the resilient top portions 506 to the crown portion of the user's head. The head, in turn, provides head reaction force components $F_{H1}$, $F_{H2}$, generally $F_H$, operating against respective ones of the resilient top portions 506. The head reaction force components $F_H$ cause the top portions of the levers 504 to rotate upward and outward, e.g., the front lever 504a rotates counterclockwise, whereas the rear lever 504c rotates clockwise.

Referring next to FIG. 8C, the outward rotation of the top portions of the levers 504 is accompanied by an inward rotation of the bottom portions of the levers. The inward rotation of the lower lever portions moves the lower compressible portions 508 inward towards the user's head. Namely, the lower portions of the levers induce inward redistribution forces $F_{R1}$, $F_{R2}$, $F_{R3}$, $F_{R4}$, generally $F_R$. In the illustrative example, a vertical collision force upon a top portion of a helmet shell that would tend to compress portions of a user's neck and/or spine is transformed into a lesser first annular force applied to a crown portion of the top of the head, a second lateral force directed inward towards the central axis, and absorption and/or storage of at least some of the kinetic energy of the collision by one or more of the deformable components and/or dampening or dispersive components. Beneficially, the lateral or inward directed forces do not compress the spine or neck of the user. Accordingly, the shock abatement system 500 transforms a substantially unidirectional, e.g., vertical, force into multiple component forces, e.g., perpendicular, over a variety of different directions, including directions that are at least 90 degrees from an incident direction of the collision force.

The pivot location or axis 520 can be located at a predetermined position along a length of the lever 504a. For example, the pivot axis 520 can be located centrally, substantially equidistant from either end of the elongated lever 504a. Alternatively or in addition, the pivot axis 520 can be located closer to one end or the other. It is understood that in at least some applications, the pivot location can be at one of the top and/or bottom ends of the lever 504. In the illustrative example, the pivot axis 520 is located closer to a top portion than a bottom portion of the lever 504a. In operation, the lever 504 rotates about the pivot axis 520. It is generally understood, as with lever machines in general, that a mechanical advantage can be obtained according to the location of the pivot position. For analytical applications, a mechanical advantage of a lever 504 can be equated to a transformer of an electrical circuit in which a driving voltage can be stepped up or stepped down according to the number of turns of the transformer windings. That is, the mechanical advantage or transformer effect can be controlled to increase or decrease a redistribution of a driving force based on a positioning of the pivot along the lever 504. A ratio of turns corresponds to placement of the pivot position along the lever.

In addition to mechanical advantage, lengths of travel of respective ends of the lever 504a when rotated about the pivot axis 520 can be controlled, at least to some degree, by placement of the pivot position or axis 520 along the length of the lever 504a. According to the illustrative example in which the pivot axis 520 is closer to a top portion of the lever 504a, the top portion will travel less than the bottom portion. Lengths of travel of the respective ends can be determined according to a product of a length between the pivot axis 520 and the respective end and an angular displacement of the lever measured in radians.

In some embodiments the pivot axes 520 of every lever of the lever assembly are positioned at a common distance from one end, e.g., the top, of the lever 504. In the example embodiment, the levers are substantially the same length, and the pivot axes are located at a common distance with respect to all levers of the lever assembly 504. Alternatively or in addition, one or more of the levers can have different lengths from the pivot axes 520 to the other ends of the lever, e.g., the bottom. In some embodiments, placement of the pivot axes differ among the levers 504. Such lever length and/or pivot location can be used to tailor a desired redistribution of forces in response to a driving, e.g., collision or impact force.

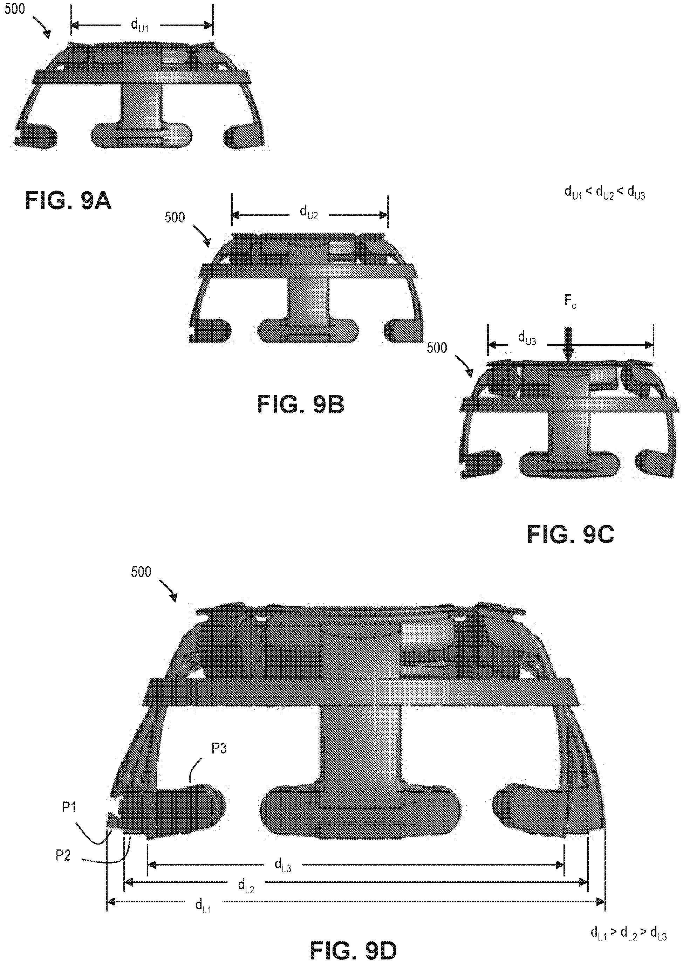

FIGs. 9A-9D depict a lateral view of the helmet shock abatement system 500 depicted in FIGs. 4A-4D in various stages of deformation when exposed to a vertical impact or collision force. FIG. 9A illustrates a side view of the shock abatement system 500 in a static mode at rest and without deformation, e.g., not placed on a user's head. The top portions of opposing levers 504a, 504c in the sagittal plane are separated by a first distance $d_{U1}$. FIG. 9D illustrates a corresponding separation of the bottom portions of the same levers 504a, 504c in the sagittal plane, $d_{L1}$. FIG. 9B illustrates a side view of the shock abatement system 500 in a static use mode, e.g., at rest upon a user's head. In the example configuration, the static use mode results in a relatively small deformation. Namely, the top portions of opposing levers 504a, 504c in the sagittal plane are separated by a second distance $d_{U2}$. FIG. 9D illustrates a corresponding separation of the bottom portions of the same levers 504a, 504c in the sagittal plane, $d_{L2}$. Likewise, FIG. 9C illustrates a side view of the shock abatement system 500 during a dynamic impact mode, e.g., responding to a vertically downward collision force Fc applied to a top of the user's head, which results in a relatively large deformation. The top portions of opposing levers 504a, 504c in the sagittal plane are separated by a third distance dus. FIG. 9D illustrates a corresponding separation of the bottom portions of the same levers 504a, 504c in the sagittal plane, $d_{L3}$. According to the example shock abatement system:

$$d_{L1} > d_{L2} > d_{L3} \qquad\qquad \text{Eq. 1}$$

and

$$d_{U1} < d_{U2} < d_{U3} \qquad\qquad \text{Eq. 2}$$

It is understood that in some embodiments configurations of the static at rest and static use modes can be substantially the same, e.g., $d_{L1} = d_{L2}$ and/or $d_{U1} = d_{U2}$.

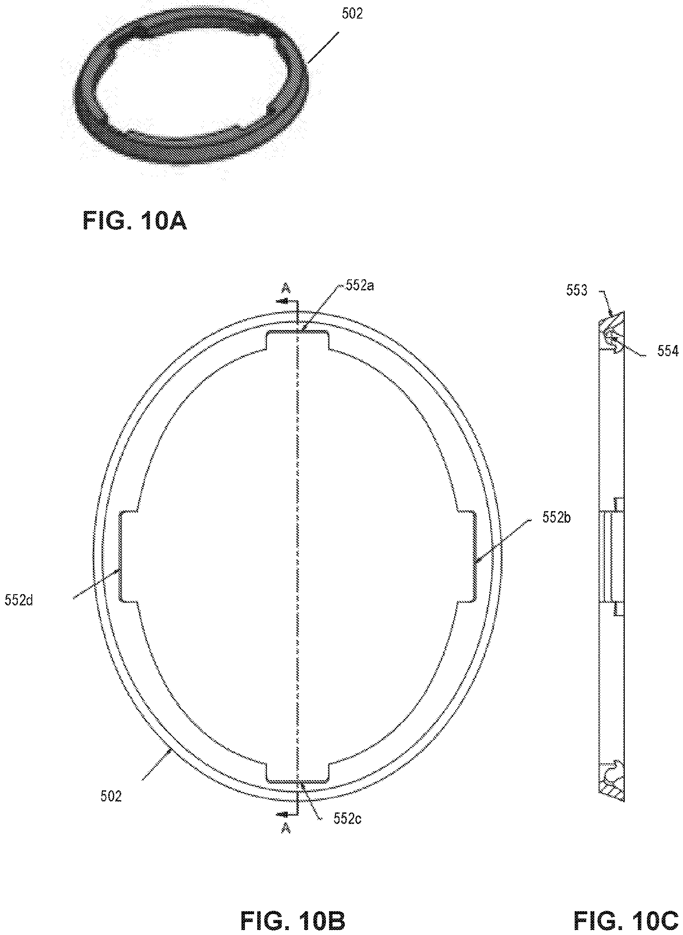

FIGs. 10A-10C depict top perspective, top and section side views, respectively, of an illustrative embodiment of the mounting frame portion 502 of the helmet shock abatement system 500 depicted in FIGs. 4A-4D. In particular, FIG. 10C depicts a cross section along section A-A depicted in FIG. 10B. By way of illustration, the pivot ring, 502, is used to hold each lever 504a, 504b, 504c, 504d (FIG. 5), in place and allows the levers to pivot freely. In the illustrative embodiment, the mounting frame 502 includes an enclosed curved structure, e.g., a circle or oval. Although the illustrative mounting structure includes an enclosed ring-like structure, it is understood that the mounting frame 502 can include an open structure, such as an open-ring, e.g., a split ring or "C" shape, a series of arcs and/or one or more substantially straight segments.

In the illustrative embodiment, an interior perimeter of the mounting structure, or pivot ring 502, includes a front lever cavity 552a, a right side lever cavity 552b, a rear lever cavity 552c, and a left side lever cavity 552d, generally 552. The lever cavities are formed as a cutout, notch or indent from an otherwise unbroken interior perimeter, allowing the levers 504 to be positioned in a low-profile manner, at least partially within the pivot ring 502.

In more detail, each of the lever cavities 552 includes a pair of opposing pivot cavities 554. The pivot cavities 554 are sized and positioned to accept the pivot extensions 522 (FIG. 5). The pivot cavities 554 provide a fulcrum that generally allows the pivot extensions 522 to rotate within the pivot cavities 554, to facilitate rotation of the levers 504 in response to collision forces.

In at least some embodiments, the pivot ring 502 includes an angled side perimeter 553, or a slanted surface, that facilitates a wedging of the pivot ring 502 within an interior region of a helmet. It is understood that other shapes can provide a desirable wedging action, including curved surfaces, e.g., convex as in a circular or parabolic arc. In some embodiments, the slanted surface 553 of the pivot ring 502 forms a frictional engagement with the interior surface of the protective shell, or helmet without requiring any other fasteners, such as glues and/or adhesives. In some embodiments, the interior surface of the helmet includes a feature, such as a retaining lip, ridge, groove, snap, or the like, that facilitates a snap fit and/or in interference fit between the pivot ring 502 and the helmet. Alternatively or in addition, an adhesive is applied to one or more of the pivot ring 502 and/or an interior surface of the helmet to hold a mechanism formed by the pivot ring 502 and the lever assembly 504 in place, inside the helmet.

In some embodiments, the pivot extensions 522 (FIG. 5) fasten to the interior portion of the protective shell, or helmet. For example, the interior surface of the helmet can include pivot supports (not shown) into which the pivot extensions 522 are placed. In some embodiments, the pivot extensions 522 attach to the pivot supports using a snap-fitting arrangement. Alternatively or in addition, a separate pivot mounting structure can be provided for each of the levers 504 (FIG. 5) to secure the levers 504 in a rotatable engagement about their respective pivot axes 522.

The slanted or wedging outer surface of the example pivot ring 502 responds to a downward vertical blow, by forcing the wedging surface further into an interior surface of the helmet, e.g., towards a top of the helmet. Beneficially, the pivot ring 502, when engaged, can move together with the helmet shell, allowing the levers to react to external forces, such as the impact force, promoting a relative displacement of the user's head and the helmet shell. The displacement together with rotations of one or more of the levers 504 can facilitate a redirection and/or redistribution of a reaction forces to the impact force of the collision.

One or more of the general shape of the pivot ring and the wedging surface facilitate a secure fit for a variety of different helmets. Namely, the pivot ring 502 can provide a universal frame that mounts to multiple helmets. For example, the pivot ring 502 fits into a dome by including a wedge that wedges the pivot ring 502 into an anchored position, and maintains the pivot ring 502 in the anchored position when exposed to a hit from a top of the head. An impact from the top results in the whole anchored ring moving with helmet. The size and/or shape of the ring can allow for a universal fit, allowing the levers to work in any shell as long as elliptical, semi-elliptical, or egg-shaped.

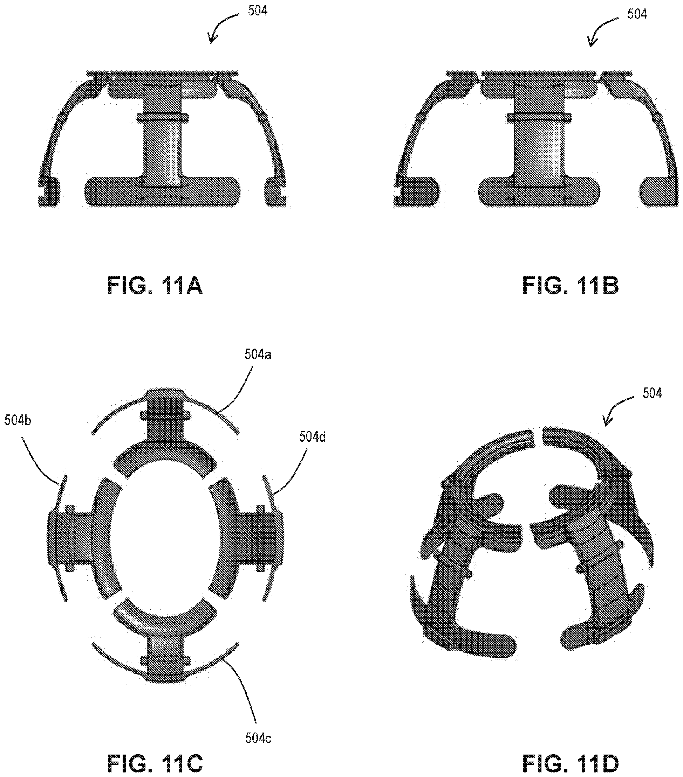

FIGs. 11A-11D depict front, side, bottom and top perspective views, respectively, of an example lever assembly 504 of the helmet shock abatement system 500 depicted in FIGs. 4A-4D. In some embodiments, one or more of the levers 504a, 504b, 504c, 504d are formed from a substantially rigid material, such as a rigid polymer, a rigid composite, a metal, an alloy, a ceramic, or any combination thereof. Alternatively or in addition, one or more of the levers 504a, 504b, 504c, 504d are formed from a flexible material, such as a polymer, a composite, a metal, an alloy or any combination thereof. The levers 504 can be formed by injection molding, casting, machining, mechanical assembly, or any combination thereof.

It is understood that in at least some embodiments, one or more of the levers 504 can provide different material properties. For example, front and rear levers 504a, 504c can be substantially rigid, whereas, side levers 504b, 504c can be flexible. Alternatively or in addition, one or more of the levers 504 can provide different material properties within the same lever 504. For example, an elongated central portion of the lever 504 extending between the first and second ends can be substantially rigid, whereas, top and/or bottom portions extending outward and away from the elongated central portion can be substantially flexible. In at least some embodiments, the elongated central portion and the top and bottom extensions can provide different material properties, e.g., having different stiffness profiles.

It is further understood that one or more of the levers can be formed as a unitary member, e.g., according to one or more of molding, casting and/or machining processes. Alternatively or in addition, one or more of the levers can be formed as an assembly, in which one or more elements of the lever, e.g., the elongated central portion, the top extensions, the bottom extensions, the pivot extensions, and the like can be formed as an assembly. Assembly can include the use of one or more mechanical fasteners, chemical fasteners, thermal or welding techniques, and combinations thereof. Mechanical fasteners can include, without limitation, screws, nails, staples, snap fit engagements, and the like.

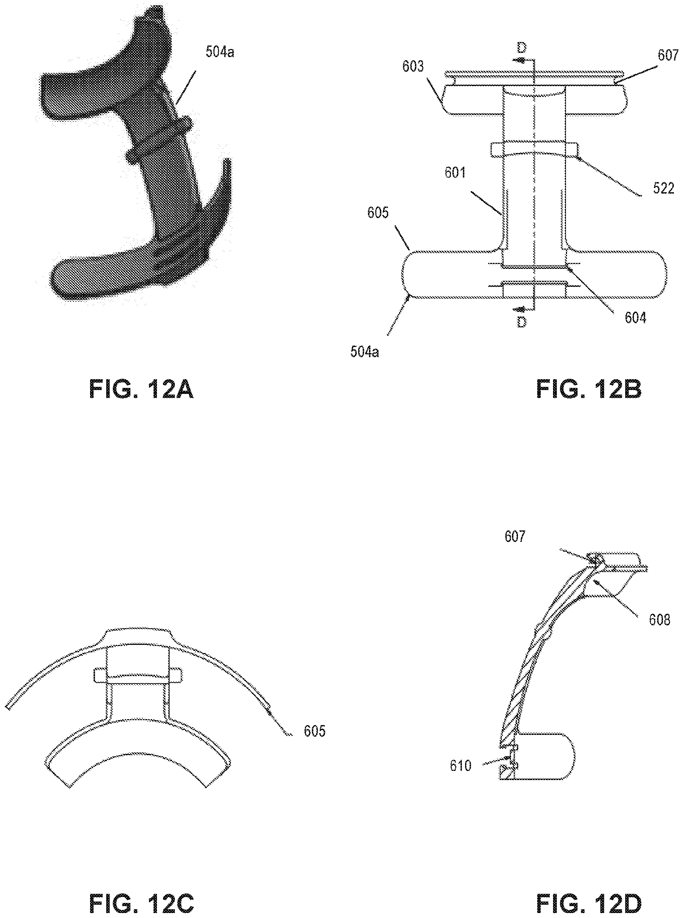

FIGs. 12A-12D depict bottom perspective, front, bottom and side cross-section views, respectively, of the front lever 504a of the example lever assembly 504 depicted in FIGs. 11A-11D. The lever 504a includes an elongated central member 601 extending at least partially in a longitudinal direction, e.g., along a central axis. The elongated member 601 can be substantially straight, at least partially curved, piecewise linear, curvilinear. In the illustrative example, the elongated member 601 is curved along a lateral plane cross-section to provide structural support, while allowing a controlled flexing or bending under lateral stresses, and curved along a longitudinal plane cross section, e.g., section D-D depicted in FIG. 12B. The example lever 504a extends from a first or top end to a second or bottom end, having a top extension 603 and a bottom extension 605.

The example lever 504a is curved in cross-section. Such curved cross section can enhance strength of the elongated member of a given thickness. It is understood that lever cross sections can include one or more of convex curves, concave curves, linear segments, e.g., forming obtuse and/or acute angles, or any combination thereof. Such non-linear configurations can hinder and/or otherwise prevent leaf-spring action of the lever 504a as disclosed herein.

In this embodiment all of the levers 504a, 504b, 504c, 504d, have common elements that follow a predefined design logic. The top extension member 603 extends laterally from an axis of the elongated central member 601. In more detail, the example embodiment of the top extension member is curved about the axis. The top extension member at least partially defines a shaped surface, e.g., a scoop 608. In some embodiments, the shaped surface 608 can be planar, e.g., slanted. Alternatively or in addition the shaped surface can be curved, e.g., in a convex or concave manner, as shown. It is understood that shapes can be combined, e.g., having one or more straight segments and/or one or more curved segments.

The example scooped surface 608 defines an arc, e.g., a quarter circle arc. An upper deformable material, e.g., spring, 506a, 506b, 506c, or 506d can be attached to at least a portion of the scooped surface 608, e.g., using an adhesive. More generally, any suitable fastening means can be employed, such as adhesives, tapes, glues and the like, mechanical fasteners, such as staples, rivets, pins, screws, nails, snap-fit arrangements, over-molding, and the like. The example geometry promotes a snug fit between the top extensions 603 of the levers 504 and the upper springs 506a, 506b, 506c, 506d. In general, any of the deformable materials disclosed herein can be formed by one or more techniques, such as, molding, over-molding, casting, extruding, machining, assembling, or any combination thereof.

It is understood that in some embodiments, the upper side of the levers and the deformable material can be fashioned as a single unit, e.g., from the same material. It is understood further that densities and/or shapes/configurations of the deformable material can differ from the levers to provide different resiliencies, e.g., allowing the lever to be stiffer than the deformable material.

In the illustrative example, the upper surface of the scoop 608 defines an arc. It is understood that other shapes can be used, such as an inclined plane, or combination of inclined planes at different angles. The arc and/or other shapes promote action of the levers 504 to transfer an upward reaction force, e.g., of a user's head, against the upper extension 603 to promote a rotation about a pivot that distorts, e.g., expands, the upper resilient member, e.g., O-ring 510 (FIG. 5). Namely, the configuration of the upper surface of the lever 504a can facilitate transitions between vertical and horizontal forces. Alternatively or in addition, the configuration facilitates operation of the levers 504 against a reaction of the deformable members, e.g., foams, towards the scoops.

Each lever 504 in the example embodiment includes pivoting elements 522 made of the same material as the levers 504, e.g., being casted or injected at the same time as the levers 504 themselves. In at least some embodiments the pivoting element 522 can include an independent component. The independent component made from similar and/or different materials. In at least some embodiments, the pivoting elements 522 can include steel rods, and the like, about which the levers 504 rotate. Each pivoting element 522 can include a generally cylindrical shape. In at least some embodiments, each cylinder provides a generally smooth surface that allows the cylinder of the pivoting element 522 to rotate easily and freely inside the pivot cavity 554 (FIG. 10C).

Each lever 504 has a lower surface or scoop 605 providing a geometry similar to the inside of the pivot ring 502 that can mimic a shape of an adjacent or facing portion of a user's head. Without limitation, the lower scoop 605 in each lever can be casted, injected and/or machined at the same time as the rest of the lever 504 and forms an integral part of the lever 504. Each lower scoop 605 in its inside surface area can use an adhesive over-molding, and/or a mechanical fastener, such as a snap fitting, to hold the lower springs, 508a, 508b, 508c or 508d respectively. The lower scoops 605 of the front lever 504a, lateral levers 504b and 504d and back lever 504c have an injection molding mold split 604 that pierces completely from side to side of the scoop 605. This slit 604 is placed there so that the adjustment band groove 610 can be formed during the process of injection or casting without the need of a special mechanized mold, this allows the mold to be made using a more economical process. It is understood that other embodiments of the levers can be formed without necessarily requiring the use of a slit 604.

In the illustrative embodiment, the back or exterior facing surface of the lower scoops 605 of the front lever 504a and lateral levers 504b, 504d have an adjustment band groove 604 that is used to guide the adjustment band 512 (FIG. 5) and secure it to the levers. It is understood that other embodiments of the levers can be formed without necessarily requiring the use of a groove.

Likewise, the lever 504a includes an extended bottom member 605 disposed at a bottom end of the central member 601 and extending away from the elongated central member 601. In the example embodiments, the extended bottom member 605 extends along a curved perimeter in a bottom lateral plane. A perimeter or lateral width, or extent of each of the top member 603 and/or the bottom member 605 can be varied. In the illustrative embodiment the lateral widths are substantially greater than a width of the central member 601 to form an "I" shaped structure when viewed in frontal profile. Resilient and/or compressible elements, e.g., pads can be attached to interior surfaces of one or more of the top member 603 and/or bottom member 605.

In the illustrative embodiment, an external surface of the top member 603 includes a channel, groove or slot 607. The slot 607 can be sized or otherwise shaped to retain at least a portion of the deformable member 510. In at least some embodiments, one or more of the levers 504 can include a similar slot along the upper and/or lower portions 603, 605. Lower slots (not shown) can be sized or otherwise shaped to retain at least a portion of another deformable member, when present. To the extent other embodiments use other spring arrangements that do not require an enclosed loop, e.g., O-ring, the lever 504a can include other features, such as anchors to facilitate attachment of springs, and the like. It is understood that the levers can include more than one of the upper slots 607, the lower slots or both, e.g., to accommodate more than one resilient members. For example, multiple elastic bands or O-rings can be flexibly retained within respective slots to control or otherwise vary an amount of energy absorbed, stored and/or dissipated in response to an impact force.

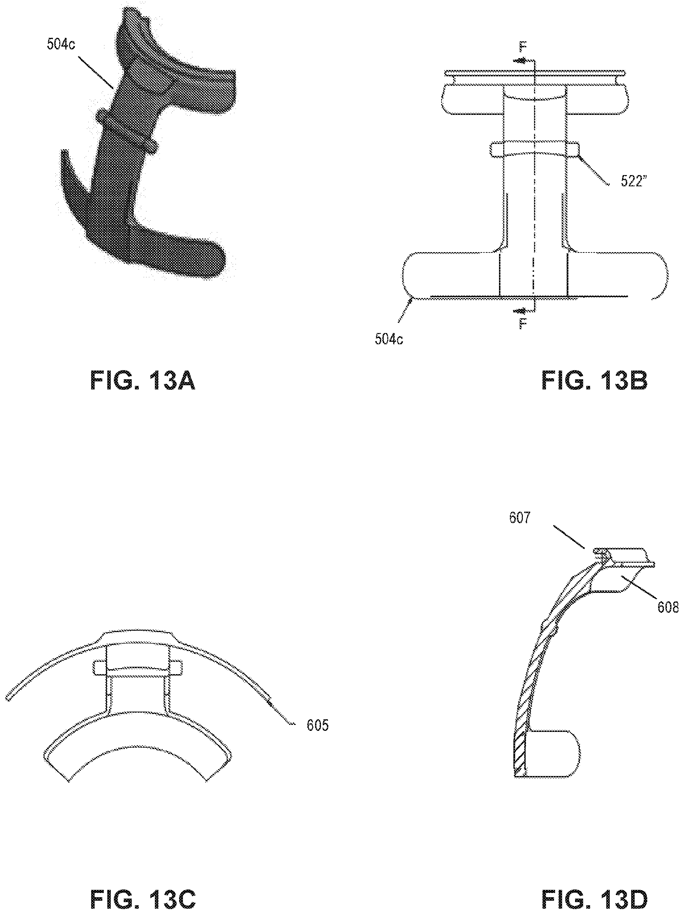

FIGs. 13A-13D depict top perspective, front, bottom and side cross-section views, respectively, of an alternative embodiment of a rear lever 504c. The example does not include a lower slot, e.g., to regain an adjustment band, because the example adjustment band 605 extends below the lever to provide occipital support to the user's head. In particular, FIG. 13D depicts a cross section taken along section F-F depicted in FIG. 13B.

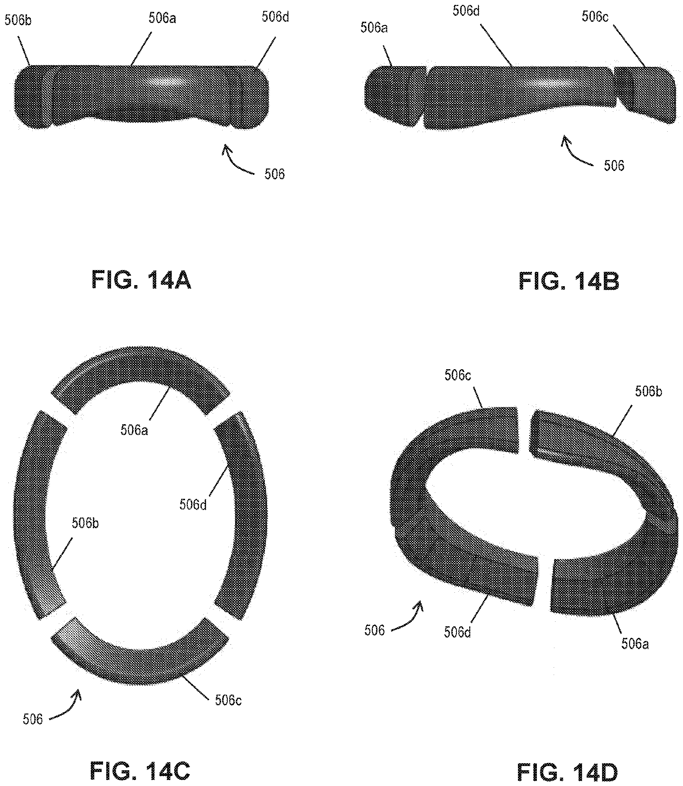

FIGs. 14A-14D depict front, side, bottom and bottom perspective views of an upper pad assembly 506 of the helmet shock abatement system 500 depicted in FIGs. 4A-4D. In more detail, the upper pad assembly 506 includes four individual deformable members 506a, 506b, 506c, 506d, respectively disposed at a top end of each of the levers 504. The individual deformable members 506 can be shaped, e.g., collectively, to conform to a portion of the body, such as a crown portion of a head. Alternatively or in addition, the individual deformable members 506 can be further shaped, e.g., to conform to a mounting surface of a top portion of each lever 504.

The example set of upper deformable members or springs 506a, 506b, 506c, 506d, are configured to fit an upper portion of a human head, e.g., using a dome shape of the head in conjunction with angled surfaces, e.g., in the geometry of the springs to help enact the levers 504 in a presence of an impact force applied to an exterior surface of the helmet. In the illustrative embodiment, the set of upper springs 506 can be visualized as a single large spring, e.g., an oval, cut to size to fit each respective upper lever extension or scoop 608. For example, a particular number of upper springs 506 can be determined by a corresponding number of levers, e.g., four levers requires four springs, six levers requires six springs, and so on. This set of upper springs 506 has a geometry that follows the contour of the upper dome of a human head. The example shape provides a comfortable, non-irritating fit to the user's head by providing a surface that conforms to an adjacent portion of the user's head, e.g., providing a slanted and/or curved surface.

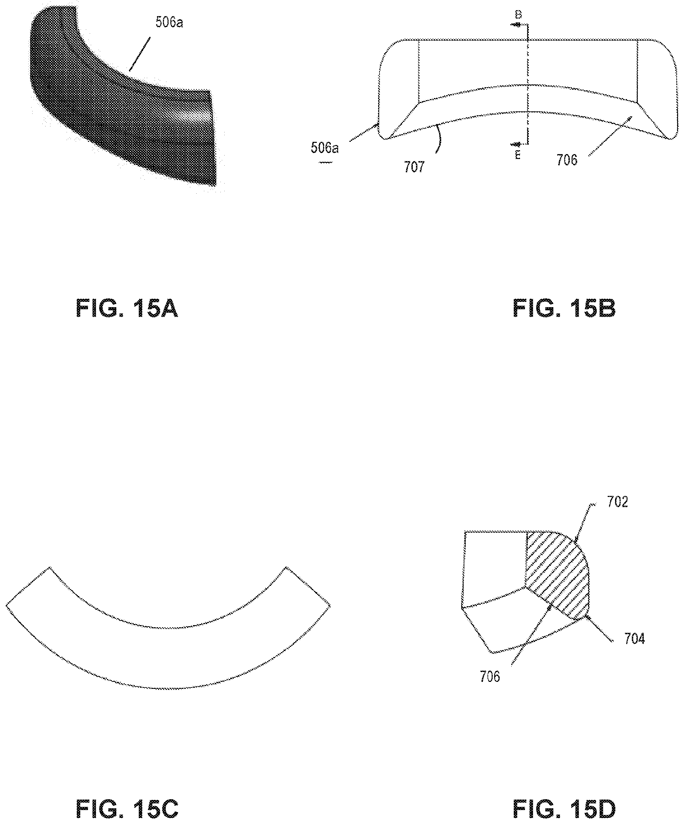

FIGs. 15A-15D depict top perspective, front, top and cross-sectional views of a front pad 506a of the upper pad assembly depicted in FIGs. 14A-14D. In particular, FIG. 15D depicts a cross section taken along section B-B depicted in FIG. 15B. The cross sectional view of the frontal upper spring 506a shows an approximate quarter circular section 702 that matches up with a corresponding exposed surface of the upper scoop 608. The approximate quarter circular section 702 is configured to promote the upper spring's 506a, 506b, 506c or 506d transfer of forces in substantially any vector from vertical to horizontal from the head back to the upper scoop 608.

Also the upper spring 506a shows an inner surface having a curve, e.g., a radius 707 that allows the upper part of the head to slide and wedge itself easily and comfortably into the inside contour of the upper spring 506a, 506b, 506c, 506d. The cross section also shows the contact angled surface 706 of the deformable member, e.g., foam, that promotes a fit with the dome of the head, and also works as a wedge that forces the spring to react against the upper scoop 608 of the lever 504 forcing it to act and transfer a portion of the force to the lower scoop 605. It is understood that a distance or displacement of an upper end of the lever 504, e.g., in reaction to a collision promotes a displacement of the shock abatement system 500 in relation to a top portion of the user's head. Namely, as the top ends of the levers 504 move away from a central axis, resulting in a separation or opening of adjacent annular spring 506 to allow the user's head to translate along the central axis, e.g., upward into the opening provided by the springs 506. A distance of translation of the head along the vertical axis can be controlled, at least to some extent, according to the angles of rotation of the levers, sizes of the levers, size and/or shape of the annular spring 506, and so on.

The upper springs 506a, 506b, 506c, and 506d can be made of deformable members, for example, including a highly resilient material that is injected into a mold or casted. In this embodiment, example resilient materials can include one of a polyurethane or platinum silicone foam, or silicone or urethane rubber. Other embodiments can use other materials, e.g., foams, providing similar characteristics. At least one purpose of this material is to be highly resilient so as to have a deformation and a maximum reaction to the force being applied so as to enact operation of the levers.

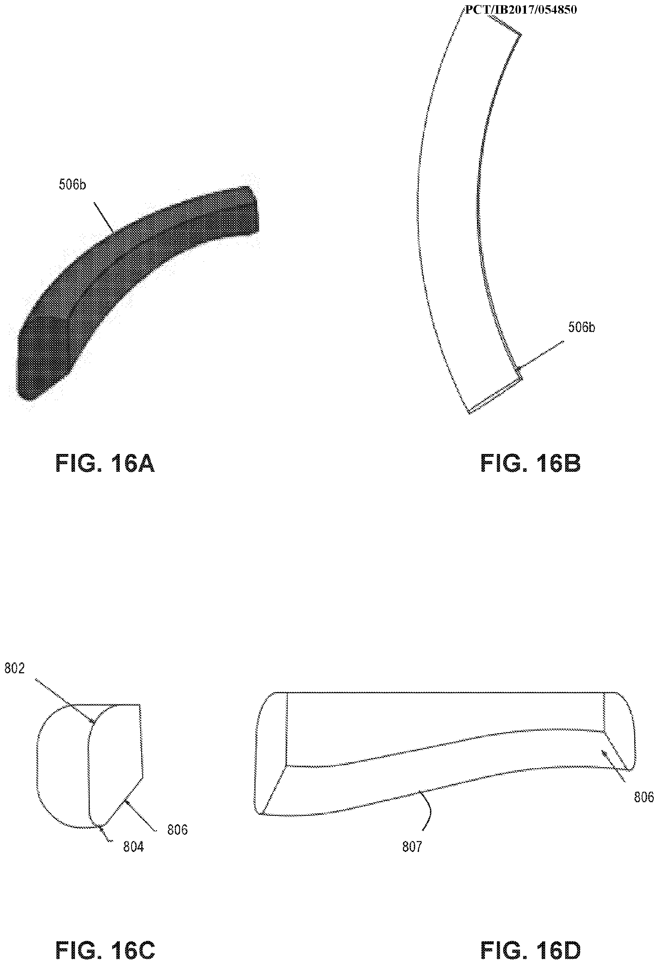

FIGs. 16A-16D depict top perspective, top, side and front views of a side pad 506b of the upper pad assembly depicted in FIGs. 14A-14D. The end view of the side pad 506b shows an approximate quarter circular section 802 that matches up with a corresponding exposed surface of the upper scoop 608b. Also the upper spring 506b shows an inner surface having a contour or curve 807 that allows the upper part of the head to slide and wedge itself easily and comfortably into the inside contour of the upper spring 506b. The end view also shows a contact angled surface 806 of the foam that promotes a fit with the dome of the head, and also works as a wedge that forces the spring to react against the upper scoop 608b of the lever 504b forcing it to act and transfer a portion of the force to the lower scoop 605b.

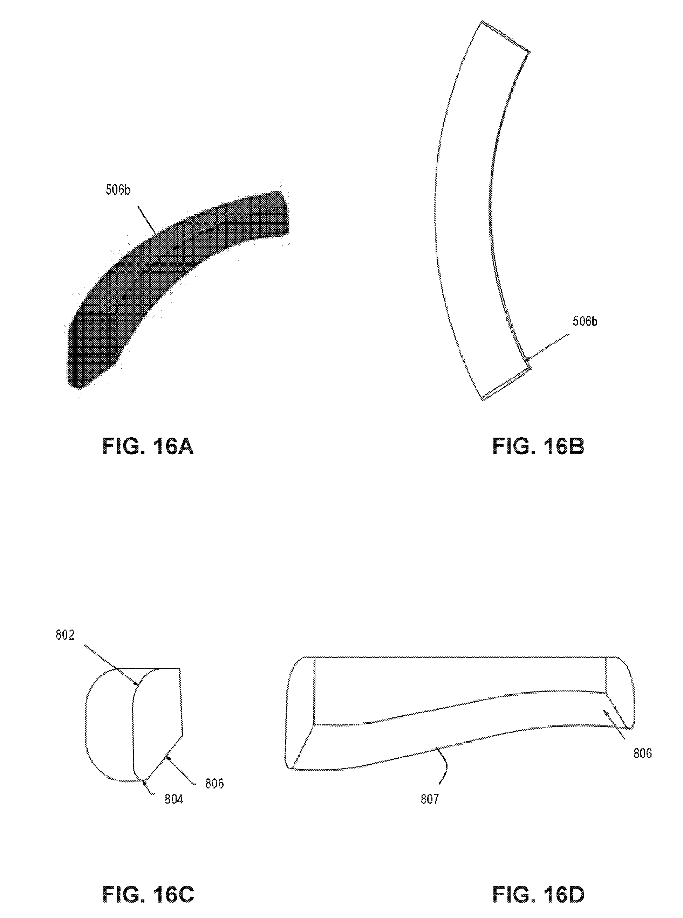

FIGs. 17A-17D depict top perspective, top, front, and side cross-sectional views of a rear pad 506c of the upper pad assembly depicted in FIGs. 14A-14D. In particular, FIG. 17D depicts a cross section taken along section C-C depicted in FIG. 17C. The cross-sectional view of the side pad 506c shows an approximate quarter circular section 902 that matches up with a corresponding exposed surface of the upper scoop 608c. Also the upper spring 506c shows an inner surface having a contour or curve 907 that allows the upper part of the head to slide and wedge itself easily and comfortably into the inside contour of the upper spring 506c. The cross-sectional view also shows a contact angled surface 906 of the foam that promotes a fit with the dome of the head, and also works as a wedge that forces the spring to react against the upper scoop 608c of the lever 504c forcing it to act and transfer a portion of the force to the lower scoop 605c.

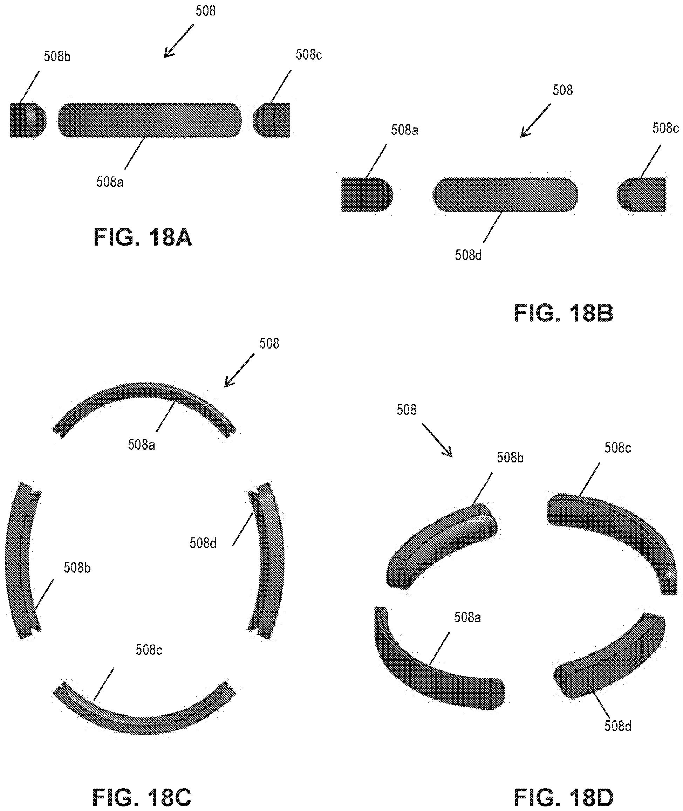

FIGs. 18A-18D depicts the front, side, a bottom and top perspective views of a lower pad assembly 508 of the helmet shock abatement system depicted in FIGs. 4A-4D. The lower spring set 508a, 508b, 508c, 508d can be made of a deformable and resilient material to absorb energy by deformation in response to an impact or collision force. In some embodiments, the lower springs 508a, 508b, 508c, 508d in the spring set 508 have different sizes, shapes and/or thicknesses, e.g., to better adjust the foams to the shape of the human head. More generally, the individual deformable members 508 can be shaped, e.g., collectively, to conform to a portion of the body, such as a lower perimeter portion of a head. Alternatively or in addition, the individual deformable members 508 can be further shaped, e.g., to conform to a mounting surface of a bottom portion of each lever 504.

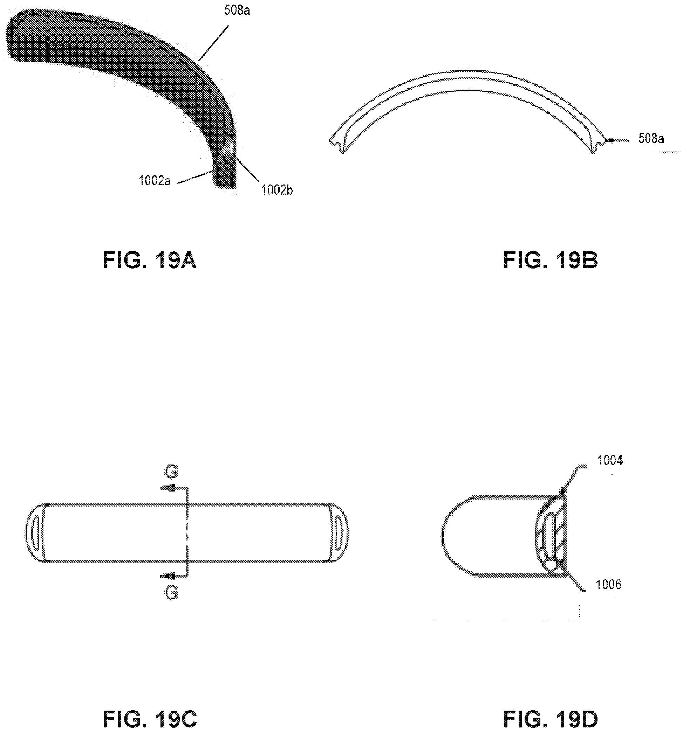

By way of illustrative example, two different embodiments are presented as options for one embodiment of the shock abatement system 500. The first embodiment shown in FIGs. 19A-19D includes an embodiment of the lower front pad 508a that includes a hollow foam construction. In particular, FIG. 19D depicts a cross section taken along section G-G depicted in FIG. 19C. For example a relatively firm resilient foam can be used to form the totality of this pad or spring 508a, allowing for a base of deformable padding, e.g., along the exterior surface 1002b covered by a hollow padding, e.g., including the open channel 1006 along the interior surface 1002a. The hollow portion serves a purpose of deforming easily. Such configurations provide a dual function, e.g., a first deformation response that responds to placement on the user's head to assure comfort and/or fit, while also providing a second deformation response that responds to an impact to absorb energy, effectively slowing down an impact. Such multi-deformation response, e.g., dual resilient, materials can be used for any of the deformable members or springs disclosed herein, including the upper and lower resilient members 506, 508. This embodiment can be manufactured by injection or by extrusion and are made of a polyurethane foam. Other embodiments can use other materials and foams, and can be casted.

The first resilient response for fit can be accommodated to at least some degree by a comparatively thin wall of the relatively firm resilient foam that yields to a relatively low force, e.g., associated with static operation of the helmet placed upon a user's head. The second resilient response for shock absorption can be accommodated to at least some degree by a comparatively thick wall of the relatively firm resilient foam that yields to a relatively greater force, e.g., associated with dynamic operation of the helmet placed upon the user's head. In at least some embodiments, the relatively thick wall includes an interior surface 1002a collapsed against an exterior surface, such that there is little or no open channel 1106.

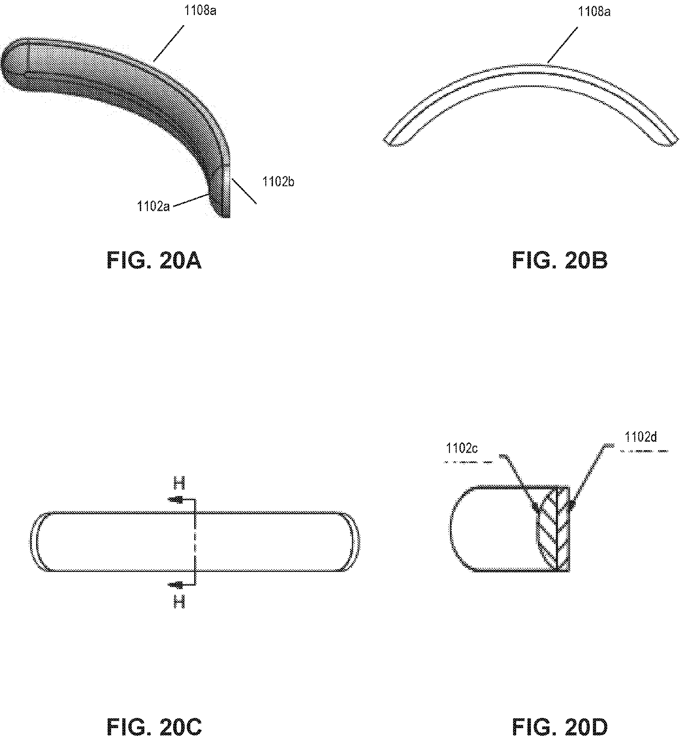

FIGs. 20A-20D depict top perspective, bottom, side and cross-sectional views of another embodiment of a lower front pad or spring 1108a of the lower pad or spring assembly 508 that can be substituted for one or more pads of the lower pad assembly 508 depicted in FIGs. 18A-18D. In particular, FIG. 20D depicts a cross section taken along section H-H depicted in FIG. 20C. A lower front pad 1108a includes an interior surface 1102a that faces the body, when worn. The lower front pad 1108a also includes an exterior surface 1102b that abuts an interior surface of the bottom member 605. In some embodiments, the lower front pad 1108a includes a deformable material. The deformable material can include a resilient material that absorbs energy when compressed. The front pad 1108a is made up of two or more deformable elements, e.g., deformable materials. Such materials can be made of a foam, such as a polyurethane material that can be adhered together in layers. The layers range from least firm or softest foam in contact with the head to firmest or hardest foam closer to the lower scoop 605. In this embodiment the softest foam provides a comfort padding 1102c that lies in contact with the human head, whereby the deformable padding 1102d is adhered or otherwise attached to the lower scoop 605.

In the illustrative embodiment, the lower front pad 1108a includes multiple layers of material having different properties, e.g., different resiliencies. For example, the lower front pad 1108a includes a deformable safety padding 1102d along an exterior portion, and a comfort padding 1102c along an interior portion. In some embodiments, the comfort padding 1102c can be relatively soft, deforming under a relatively gentle pressure. The softness can facilitate a secure fit and comfort when worn. Conversely, the deformable safety padding 1102d can be relatively stiff, e.g., deforming only under a relatively high pressure. Accordingly, the safety padding 1102d may deform, compress or the like under collision forces or impacts, while remaining substantially non-compressed during normal periods of usage. It is understood that in at least some embodiments, one or more of the pads, e.g., the front lower pad 508a, can include additional layers of other materials, such liquid absorbing materials to prevent sweat from interfering with a user's vision.

Performance properties of the various components, systems and materials disclosed herein can include one or more of deformability, elasticity, resilience, compliance, density, compressibility, stiffness, rigidity, flexibility or pliability. Choices of components, systems, materials, component configurations and/or material configurations can be made according to one or more of the performance properties. For example, any of the deformable members disclosed herein can include a compressible element. The compressible element can include one of an elastic property, an inelastic property, or a combination of elastic and inelastic properties. For example choices can be made to ensure that levers do not fail under anticipated collision forces, that compressive members maintain their compressibility under anticipated forces, and the like.

It is understood that compressibility of a deformable element can result from one of a bulk material property, a geometry or shape, or a combination thereof. The compressible element can include any form of springs and/or shapes, such as corrugated shapes. In at least some embodiments, the compressible element can include a compressible material. Examples of compressible materials include, without limitation, one of a gas, a liquid, a solid, a gel, a foam, and combinations thereof, resilient materials, compliant materials. Alternatively or in addition, the deformable member can include a deformable system or assembly. Examples of deformable systems and/or assemblies can include airbag systems, and the like.

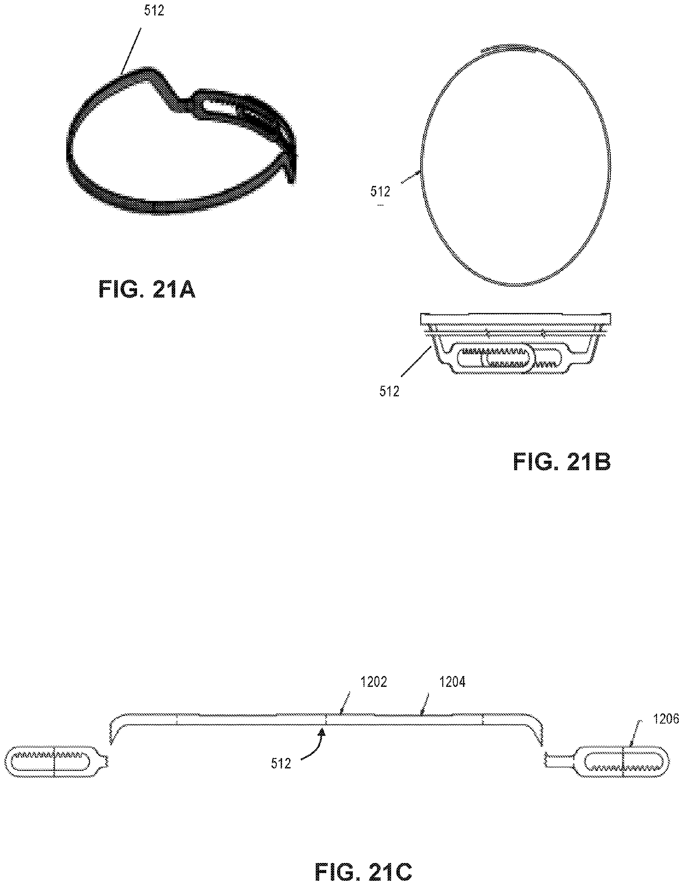

FIGs. 21A-21C depict top perspective, top and rear, and expanded views of an example of an adjustment band 512 of the helmet shock abatement system 500 depicted in FIGs. 4A-4D. When the adjustment band 512 is tightened the lower spring set 508a, 508b, 508c, 508d (FIG. 18A-18D) is slightly deformed against the head of the user securing the machine, and the helmet on to the head, while allowing the levers to rotate in response to an impact. When an impact is received the deformable padding will deform to absorb energy. The example adjustment band, 512, is placed inside adjustable band guide grooves 610 along the outer surface of the lower scoops 605 of the front and lateral levers 504a, 504b, 504d, where it can slide and aid in the adjustment of the machine to the head. The adjustment band 512 can include one or more notches 1204 that ease the process of inserting the band 512 inside the adjustment band groove guide 610 and a regular adjustment band width 1202 that will fit securely inside said adjustment band groove guide 610.

It is understood that in at least some embodiments, the adjustment band 512 can be positioned inside of one or more of the levers 508, e.g., to prevent any possibility of interference with rotation of one or more of the levers 508 that might otherwise result from an overtightening of the adjustment band 512. For example, the adjustment band 512 can be attached to a helmet shell and positioned so that the adjustment band does not interfere with rotation of the levers 508 and/or performance of the shock abatement system.

In the illustrative embodiment, the adjustment band also has an occipital support with adjustment mechanism 1206 of the ratchet kind. However other embodiments can use any of the available adjustment mechanisms and/or occipital supports.

The adjustment band 512 in this embodiment can be made of a flexible material with high tensile resistance like polymers, e.g., polypropylene. This material can be injected, casted, press-cut formed, or the like, using known manufacturing techniques to fully form all the details of the grooves needed for the adjustment mechanism. However, other embodiments that use other adjustment mechanisms can use different means of manufacturing, such as punching. Any flexible material with relatively high tensile strength can be used like other polymers, leather, metals, foils, etc.

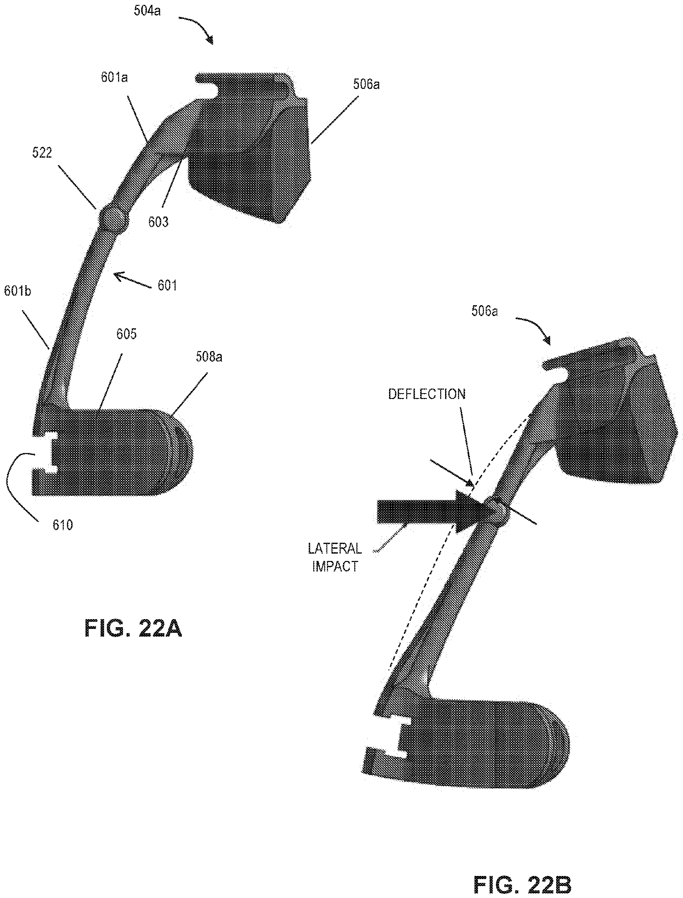

FIG. 22A depicts a side view of an example of a lever assembly 504a of the helmet shock abatement system 500 depicted in FIGs. 4A-4D. In particular, the lever assembly 504a is in a normal, e.g., non-stressed configuration, providing a slight bow with an open concave portion facing the user's head when worn. FIG. 22B, depicts a side view of the lever assembly 504a of FIG. 22A subjected to a force acting upon the pivot 522. Such a force can be induced by a downward and/or side collision or impact to a helmet containing the shock abatement system 500 that includes a force component directed towards and/or away from the pivot 522. Forces applied above and/or below the pivot tend to cause a rotation of the lever assembly 504a, whereas forces directed towards/away from the pivot 522 tend to cause a leaf spring response of the lever assembly 504a. A rotational response, a leaf-spring response or a combination of both is an example of a controlled movement offered by the lever assembly 504a.

In the illustrative example, the elongated member 601 includes a lever shaft having a first, e.g., upper, portion 601a and a second, e.g., lower, portion 601b distinguishable by reference to a location of the pivot 522. The bowed length of the lever shaft 601 flexes, bends or otherwise yields in response to the lateral force, providing a leaf-spring response. Namely, the bending of the elongated member 601 results in a momentary displacement of a central portion or pivot 522 of the lever 504a, inward, towards the user's head. The inward distortion can transfer at least a portion of kinetic energy resulting from an impact into an absorbed, stored and/or otherwise dissipated energy. In at least some embodiments, more than one of the levers 504a, 504b, 504c, 504d provides similar leaf spring function. Namely, in response to a vertical force, the lever pivots about its pivot axis. Alternatively or in addition, in response to a vertical and/or lateral force, the lever deforms, e.g., bends, providing a momentary displacement of the upper and lower spring members with respect to the pivot axes.

FIG. 23A depicts a front view of an alternative helmet shock abatement system 2000 placed on a human head 2001. The alternative shock abatement system 2000 can be used with safety helmets, e.g., construction helmets, sports equipment, such as the football helmet 2010 depicted in FIG. 23B, and/or the military helmet 2020 depicted in FIG. 23C.

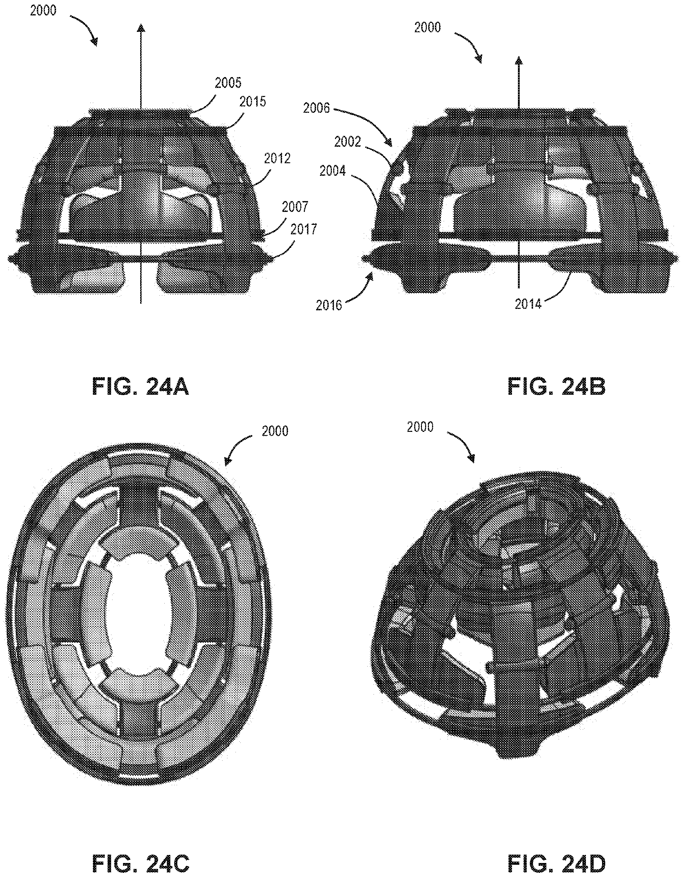

FIGs. 24A-24D depicts front, side, bottom, and top perspective views of the alternative helmet shock abatement systems depicted in FIG. 23A. Generally, the shock abatement system 2000 includes at least two sets of levers, or arrays. A first lever assembly 2006 and a second lever assembly 2016 are interspersed about the user's head 2001 when worn. The example first lever assembly 2006 includes four levers 2004 rotatable about respective pivots 2002. The first lever assembly 2006 includes a top spring 2005 in communication with a top end of each of the levers 2004 of the first lever assembly 2006, and a bottom spring 2007 in communication with a bottom end of each of the levers 2004. Likewise, the example second assembly 2016 includes four levers 2014 rotatable about respective pivots 2012. The second lever assembly 2016 includes a top spring 2015 in communication with a top end of each of the levers 2014 of the second lever assembly 2016, and a bottom spring 2017 in communication with a bottom end of each of the second levers 2014. Each of the levers 2004, 2014 can be similar to the levers disclosed hereinabove, e.g., having an elongated lever arm extending between first and second ends, a pivot at a position along the lever arm between the first and second ends, one or more pivot extensions, upper and/or lower extensions to which resilient pads or springs can be attached, and the like.

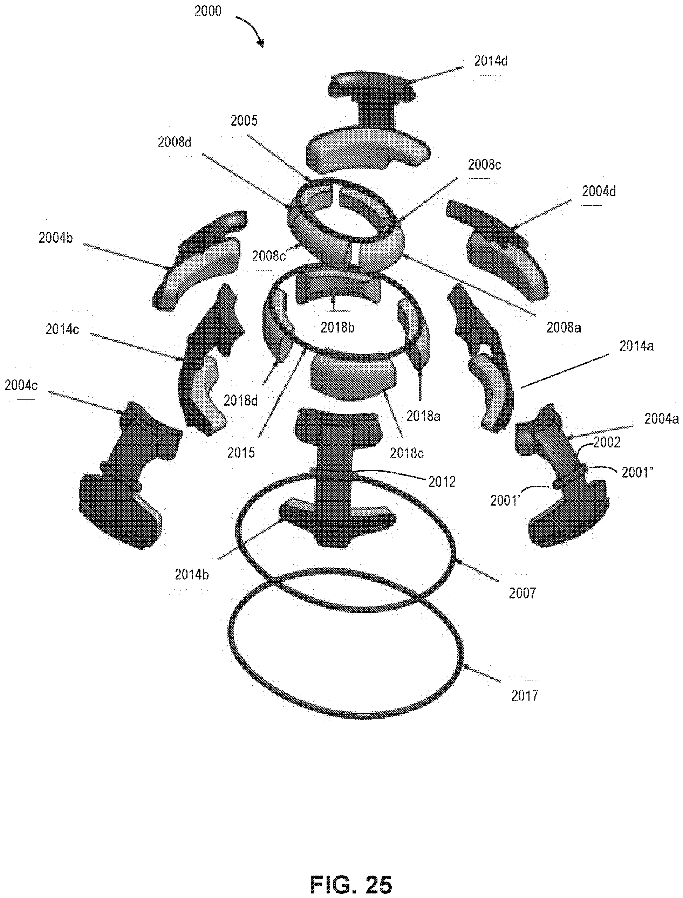

FIG. 25 depicts an exploded view of the alternative helmet shock abatement system depicted in FIG. 23A. A first lever assembly or array 2006 includes a front lever 2004a, a right side lever 2004c, a rear lever 2004b and a left side lever 2004d, generally 2004. Each of the first levers 2004 rotates about a respective pivot axis 2002 aligned within a common first plane substantially orthogonal to a central axis. Each of the first levers 2004 can rotate in a respective plane that includes the central axis.

Likewise, in the illustrative example, the levers 2014 of the second lever assembly 2016 is offset, rotationally about a central axis, e.g., at about 45 degrees from the levers 2004 of the first lever assembly 2006. The second lever array 2016 includes a front-right lever 2014b, a rear-right side lever 2014c, a rear-left side lever 2014d and a front-left side lever 2014a, generally 2014. Each of the second levers 2014 rotates about a respective pivot axis aligned within a common second plane substantially orthogonal to the central axis. The first and second planes can be separated along the central axis, as shown, or located at the same location. In the illustrative example the pivot axes 2002 of the first lever assembly 2006 lies within the first plane located above the second plane containing pivot axes 2012 of the second lever assembly 2016.

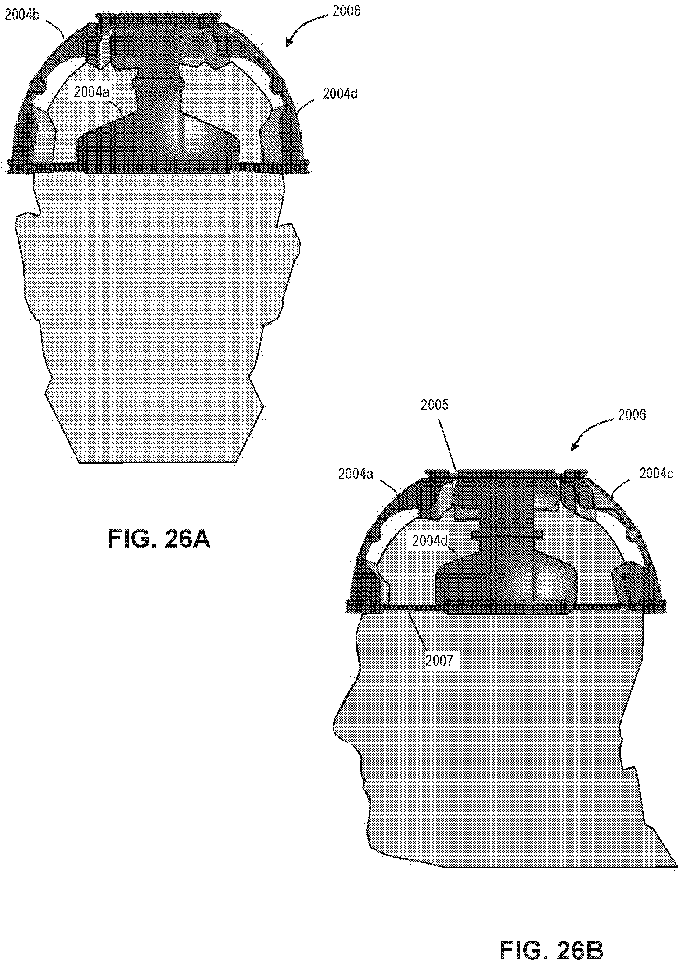

FIGs. 26A-26B depicts front and side views of the first lever assembly 2006 of the alternative helmet shock abatement system depicted in FIG. 23A. The first lever assembly 2006 includes at least one top spring 2005 and at least one bottom spring 2007. The top and bottom springs 2005, 2007 react against pivotal rotations of the first levers 2004. Namely, one or more of the top and/or bottom springs 2005, 2007 distort, e.g., stretch, in response to in impact force that causes a rotation of one or more of the first levers 2004.

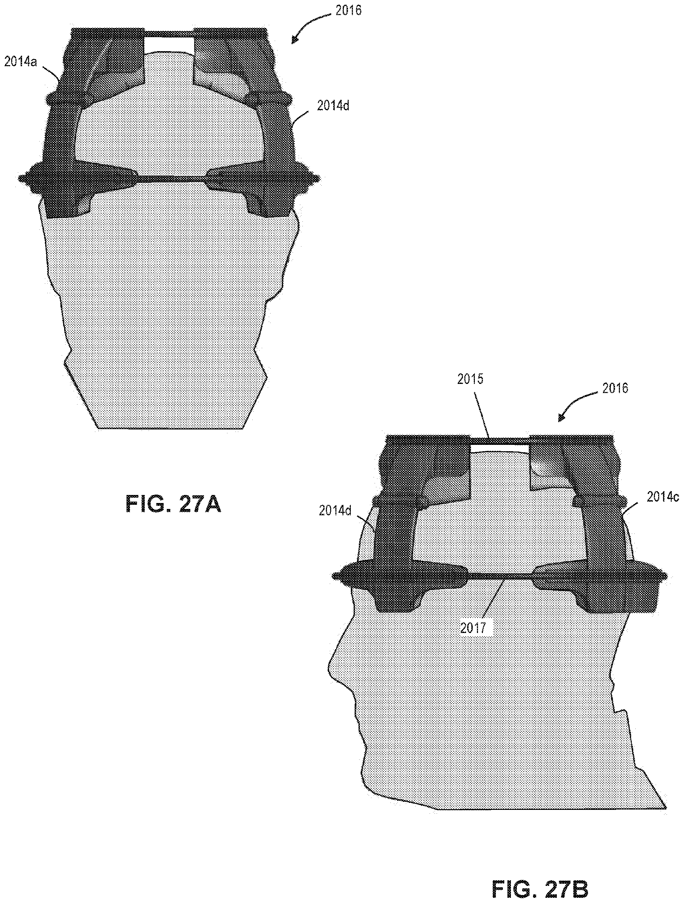

FIGs. 27A-27B depicts front and side views of a second, e.g., lower, lever assembly 2016 of the alternative helmet shock abatement system depicted in FIG. 23A. The lower lever assembly 2016 includes a top spring 2015 and a bottom spring 2017. The top and bottom springs 2015, 2017 react against pivotal rotations of the lower levers 2014. Namely, one or more of the top and/or bottom springs 2015, 2017 distort, e.g., stretch, in response to in impact force that causes a rotation of one or more of the lower levers 2014.

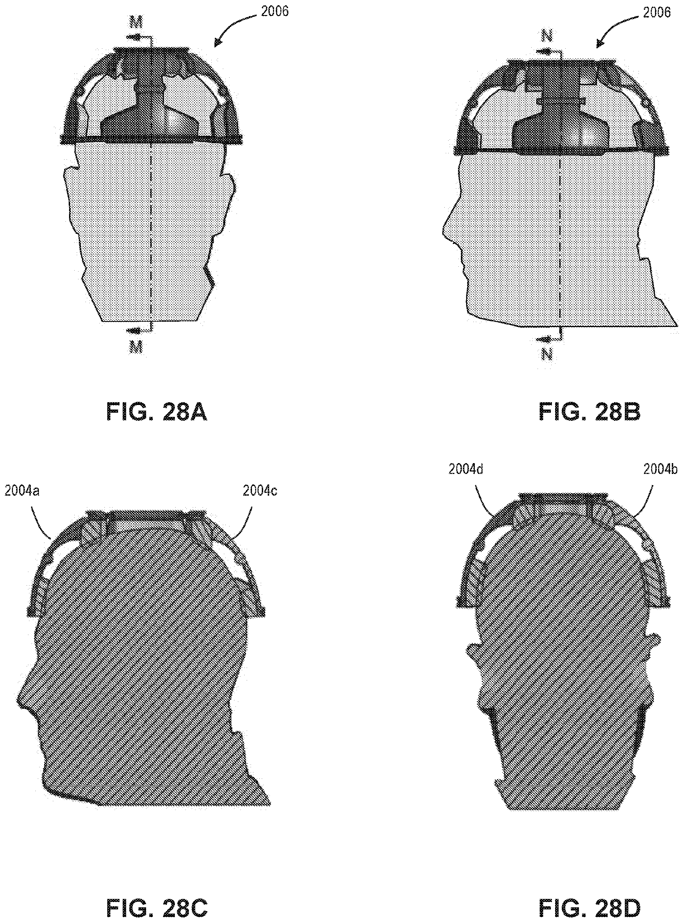

FIGs. 28A-28B depict front and side views, respectively, of the first lever assembly 2006 of the alternative helmet shock abatement system of FIG. 23A placed on the human head 2001.

FIGs. 28C depicts a sagittal cross-sectional view of the first level assembly 2006 along section M-M of FIG. 28A.

FIGs. 28D depicts a frontal cross-sectional view of the first level assembly 2006 along section N-N of FIG. 28B.

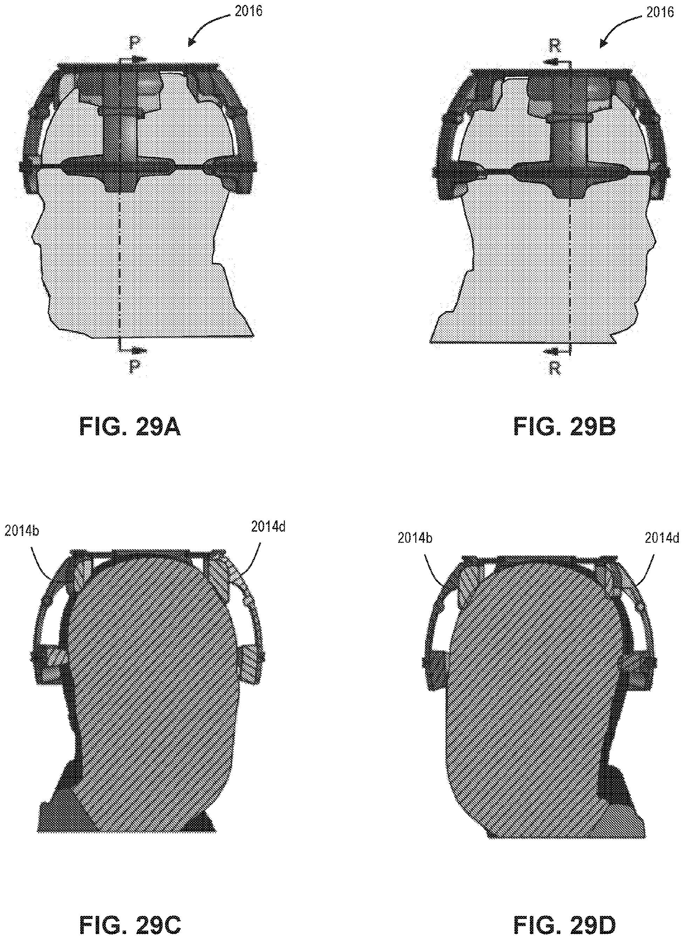

FIGs. 29A-29B depict front and side views, respectively, of the second lever assembly 2016 of the alternative helmet shock abatement system of FIG. 23A placed on a human head.

FIGs. 29C depicts a cross-sectional view of the first level assembly 2016 along section P-P of FIG. 29A.

FIGs. 29D depicts a cross-sectional view of the first level assembly 2016 along section R-R of FIG. 29B.

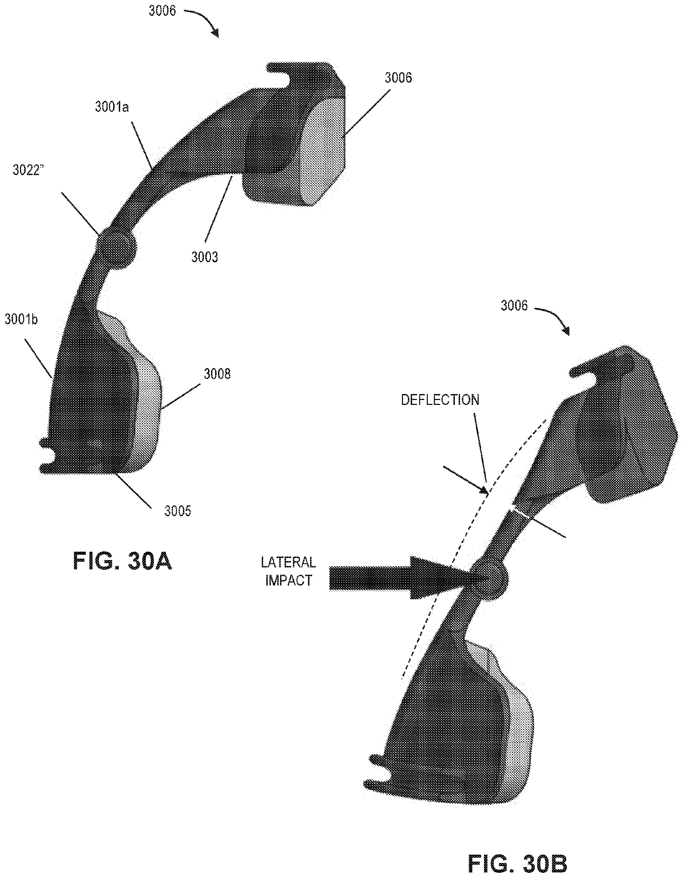

FIG. 30A depicts a side view of an example of a lever assembly 3006 of the first lever assembly 2006 of the alternative helmet shock abatement system depicted in FIG. 24B. In the illustrative example, the second lever assembly 2016 extends below a bottom extremity of the first lever assembly 2006. Accordingly, the lever assemblies can be distinguished according to a top lever assembly 2006 and a bottom lever assembly 2016. In particular, the top lever assembly 3006 is depicted in its normal, e.g., non-stressed configuration. FIG. 30B, depicts a side view of the top lever assembly 3006 of the top lever assembly 2006 of FIG. 23A subjected to a lateral force. Such a lateral force can be induced by a side collision or impact to a helmet containing the shock abatement system 2000. In particular, a length along the lever shaft, e.g., an upper shaft segment 3001a, a lower shaft segment 3001b, or a combination of the upper and lower shaft segments 3001a, 3001b, flexes, bends or otherwise yields in response to the lateral force. The bending can result in a momentary displacement of a central portion of the lever in a direction of the collision force. In at least some embodiments, the one or more of the levers 2004a, 2004b, 2004c, 2004d also provide a leaf spring function. Namely, in response to a vertical force, the lever pivots about its pivot axis. Alternatively or in addition, in response to a lateral force, the lever assembly 3006 bends providing a momentary displacement of the upper and lower spring members with respect to the pivot axes. The levers 2014 of the lower lever assembly 2016 can provide a similar leaf spring response to non-axial forces. Each of the pivotal and leaf spring responses can occur alone or in combination for one or more of the levers 2004, 2014 of one or more of the lever assemblies 2006, 2016. A particular response of any single lever can be determined by a direction of the collision, e.g., along the line of impact, and/or a response of one or more levers of the same lever assembly or a different lever assembly.

The first and second lever assemblies 2006, 2016 can offer different responses based on their respective configurations. For example, levers of the first lever assembly 2006 can include a first pivot axis located at a first distance along the levers to provide a first mechanical advantage. Likewise, levers of the second lever assembly 2016 can include a second pivot axis located at a second distance along the levers to provide a second mechanical advantage. The first and second mechanical advantages can be the same or different. Alternatively or in addition, other features can be varied among and/or between levers of the different lever assemblies 2006, 2016. Such features include, without limitation, lever lengths, lever shapes, lever materials, lever spring constants, lever pad sizes, and so on. In some embodiments, the levers are stacked and/or interlinked such that, in an event of an impact, at least some of the levers provide a leaf-spring response, while, at least some of the levers rotate about respective pivot axes. Such configurations provide a dual protection. For example, an impact may result in levers of an upper lever array rotating about their respective pivots. The same impact may result in levers of a lower lever array providing a leaf spring response. It is understood that one or more levers of one or more of the lever arrays can provide one or both of the rotational and bending responses in response to the same impact.

In some embodiments, a padding size, e.g., thickness, can be varied. Dimensions, shape and/or placement of the various pads used with the levers can be arranged to facilitate movement of the levers. Movement of the levers can include a first rotation in reaction to a downward force, and a second rotation in reaction to a side force. Accordingly, one or more of the lever arrays respond to impact forces from one or more directions.

In some instances the levers rotate "down" from the crown of the head toward the sides of the head. Alternatively or in addition the levers can rotate "up" from the side of the head to the crown of the head. The particular rotation, including a combination of down and up rotations, generally depends upon a direction and/or a location of the impact force or forces. By allowing the levers to rotate in more than one direction, the shock abatement system is able to react to one or more forces applied along one or more various directions.

It is understood that the shock abatement system 2000 can be placed within a protective shell, such as a helmet shell. Alternatively or in addition, the shock abatement system 2000 can be used without a separate protective shell. In the latter configuration, a collision force would be received directly upon an exterior facing surface of one or more of the levers 2004, 2014. In either configuration, one or more of the levers respond to the collision according to the various response disclosed herein. For example, one or more of the levers 2004, 2014 can pivot and/or flex in response to the collision force.

In operation, a first rotation of at least one lever 2004 of the first, or upper, lever assembly 2006 results in a top end of the lever(s) 2004 rotating inward, towards the central axis. The first rotation also results in a bottom end of the lever(s) 2004 rotating outward, away from the central axis. The outward rotation of the bottom end of the lever(s) 2004 results in an expansive deformation of the bottom spring 2007. A second rotation of at least one lever 2004 of the first lever assembly 2006 results in a top end of the lever(s) 2004 rotating outward, away from the central axis. The second rotation also results in a bottom end of the lever(S) 2004 rotating inward, toward the central axis. The outward rotation of the top end of the lever(s) 2004 results in an expansive deformation of the top spring 2005.

Similarly, a first rotation of at least one lever 2014 of the second, or lower, lever assembly 2016 results in a top end of the lever(s) 2014 rotating inward, towards the central axis. The first rotation also results in a bottom end of the lever(s) 2014 rotating outward, away from the central axis. The outward rotation of the bottom end of the lever(s) 2014 results in an expansive deformation of the bottom spring 2017. A second rotation of at least one lever 2014 of the second lever assembly 2016 results in a top end of the lever(s) 2014 rotating outward, away from the central axis. The second rotation also results in a bottom end of the lever(s) 2014 rotating inward, toward the central axis. The outward rotation of the top end of the lever(s) 2014 results in an expansive deformation of the top spring 2015 Protection systems including multiple lever assemblies are adapted to process forces coming from different directions, to absorb and/or dissipate energy in a direction different from direction of collision force.

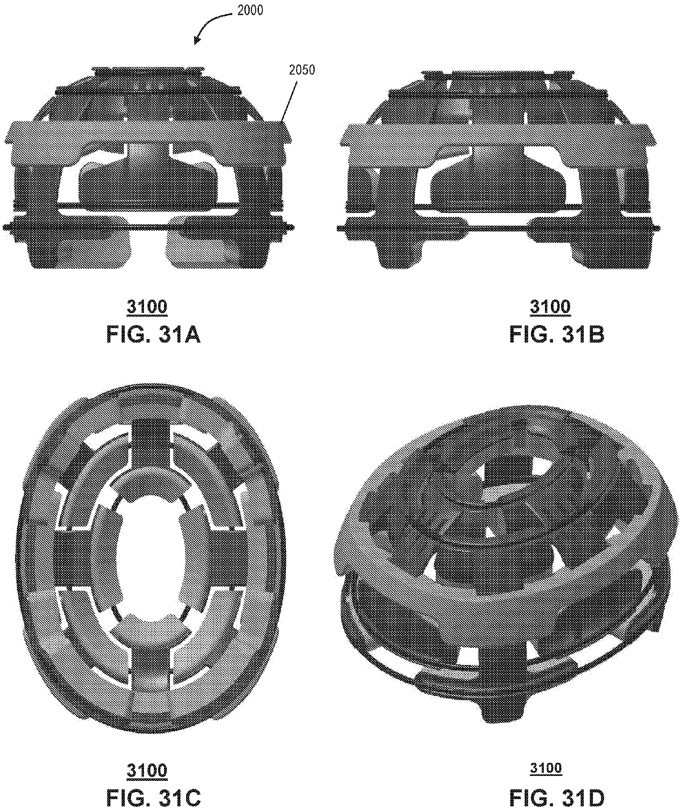

FIGs. 31A-31D depict front, side, bottom and top perspective views of another embodiment of the alternative helmet shock abatement system depicted in FIG. 23A. The assembly includes a mounting structure, e.g., a mounting ring 2050. The mounting ring 2050 can be similar to the mounting ring 502 described hereinabove, except that the mounting ring 2050 can include two sets of lever cavities, e.g., one for the top lever assembly 2006 and another for the bottom lever assembly 2016. Each of the lever cavities can include respective pivot cavities to accept and/or retain pivots of respective levers, allowing the levers to rotate about their respective pivot axes. In at least some embodiments, the pivot cavities are offset, such that levers of the top lever assembly 2006 rotate about pivot axes in a first transverse plane, whereas levers of the lower lever assembly 2016 rotate about pivot axes in a second transverse plane. It is understood that some embodiments can include multiple mounting rings, e.g., one for each of the respective lever assemblies 2006, 2016. Alternatively or in addition, one or more levers of one or more lever assemblies 2006, 2016 can be pivotally mounted to a mounting ring, a helmet, or any combination thereof. For example, a protective shell or helmet can include pivot mounts, e.g., cavities that are casted or otherwise integrally formed with the helmet.

FIGs. 32A-33A, which do not form part of the present invention, depict schematic diagrams of a mechanical and electrical analog of the helmet shock abatement system depicted in FIG. 32D and FIGs. 4A-4D. The example shock abatement system 3202 includes four levers, each rotatable about a respective pivot axis. The levers include top and bottom resilient pads or springs that interact with a head of the user. A mechanical system 3200 includes a first parallel arrangement of four springs 3204 corresponding to the spring members of the top portion of the levers, e.g., between a pivot position and a top attachment. Likewise, the mechanical system 3200 includes a second parallel arrangement of four springs 3206 corresponding to the spring members of the bottom portion of the levers, e.g., between the pivot portion and the bottom attachment. An interaction of forces between the top and bottom portions of the levers can be controlled by the mechanical advantage of the levers, e.g., where the pivot axis is located along the lever. In this regard, the upper and lower spring arrangements 3204, 3206 can be joined together by way of a transformer 3208. In the illustrative example, the transformer 3208 can represent one or more levers, e.g., providing, by way of electrical analogy, a transformer action. A performance of the transformer 3208, e.g., based on numbers of turns of coil(s), orientations of turns, and the like, are based on a location of the pivot in relation to loads and/or forces acting upon the levers.

An electrical schematic diagram 3300 represents an electrical circuit corresponding to the mechanical schematic 3200 and the physical configuration of the shock abatement system 500. Each of the four spring members of the top portion of the lever array 3202 is represented by a first group of series connected capacitors C1, C2, C3, C4. The capacitors store energy as do the mechanical springs. Likewise, each of the four spring members of the bottom portion of the lever array 3202 is represented by a second group of series connected capacitors. Once again, the second group of capacitors store energy as do the corresponding mechanical springs. Interactions between a left portion of the circuit and a right portion of the circuit is based on a central transformer.

Depending upon a particular configuration of the transformer, a first voltage $V_1$ applied to a left side of the transformer induces a second voltage $V_2$ at the right side of the transformer. A relationship between the first and second voltages can be controlled by the transformer to provide a step up in voltage, such that $V_2 > V_1$, or a step down, in which $V_2 < V_1$. Thus, positioning of the pivot point provides a transformation to the redistribution of forces resulting from a collision. The transformation leverages a mechanical advantage of the lever.

The levers of the foregoing embodiment can be described as being vertical levers. Namely, rotations of the levers about their fulcra occur within a vertical plane. It is understood that other embodiments can include one or more non-vertical levers, e.g., for which rotation occurs in a non-vertical plane. For example, a helmet application can include one or more levers that pivot in a horizontal plane, e.g., rotated about 90 degrees from the example levers disclosed herein. Other levers can be aligned in virtually any direction. Moreover, it is understood that levers of more than one orientation can be applied to a single application. For example, a helmet application can include one or more vertical levers, one or more horizontal levers, and/or one or more slanted levers that rotate in planes that are neither vertical nor horizontal.

FIGs. 32B-33B, which do not form part of the present invention, depict schematic diagrams of a mechanical and electrical analog 3240, 3340 of another embodiment of a helmet shock abatement system. The example shock abatement system 3240 also includes four levers, each rotatable about a respective pivot axis. The levers include top and bottom resilient pads or springs that interact with a head of the user. The example mechanical system 3240 includes a first parallel arrangement of four springs 3244 corresponding to the spring members of the top portion of the levers, e.g., between a pivot position and a top attachment. Likewise, the mechanical system 3240 includes a second parallel arrangement of four springs 3246 corresponding to the spring members of the bottom portion of the levers, e.g., between the pivot portion and the bottom attachment. An interaction of forces between the top and bottom portions of the levers can be controlled by the mechanical advantage of the levers, e.g., where the pivot axis is located along the lever. In this regard, the upper and lower spring arrangements 3244, 3246 can be joined together by way of a transformer 3248. In the illustrative example, the transformer 3248 can represent one or more levers, e.g., providing, by way of electrical analogy, a transformer action. A performance of the transformer 3248, e.g., based on numbers of turns of coil(s), orientations of turns, and the like, are based on a location of the pivot in relation to loads and/or forces acting upon the levers.

This illustrative example, the shock abatement system includes dampers, such as dashpots $d_1, d_2, d_3, d_4, d_5, d_6, d_7, d_8$ associated with each of upper levers and lower levers of a lever assembly, e.g., similar to the helmet shock abatement system 4700 depicted below in FIGs. 47A-47E, with the addition of dampers. The dampers can dissipate a non-trivial portion of energy of a collision force. Energy dissipation provided by the dampers can include transforming a portion of a kinetic energy of a collision into thermal energy.

FIG. 33C, which does not form part of the present invention, illustrates a schematic diagram of another mechanical analog of another embodiment of a helmet shock abatement system. In particular, the illustrative mechanical analog 3360 includes provisions for an o-ring, such as the example o-ring in communication with upper levers of an example lever assembly. Other analogs are possible to accommodate any of the various example embodiments disclosed herein using well established techniques.

It is understood that one or more of the electrical schematic 3300 and the mechanical schematic 3200 can be used to evaluate any of the example systems disclosed herein, including various combinations of one or more of the individual features. In some embodiments, configurations or circuits, such as the example electrical 3300 and/or mechanical 3200 schematic diagrams can be used to synthesize particular system configurations, including one or more of system configurations and system component values, e.g., spring constants.

FIG. 34, which does not form part of the present invention, depicts a process 3400 for abating shock resulting from a collision. An applied force is received at an external surface of a protective shell worn upon a body at 3402. The protective shell can include any of the devices disclosed herein, including, without limitation, a helmet system including a protective shell and a machine. The applied force can be responsive to a collision, e.g., between the protective shell and another object. The other object can be mobile, e.g., as in a projectile and/or another movable object. Alternatively, the other object can be immobile, e.g., a wall or the ground. It is understood that a collision can be a simple collision occurring substantially along a single line of action, e.g., a direction of the applied force.

Alternatively, the collision can be complex. For example, the collision can include multiple forces applied along multiple directions. Consider an example of a helmet being driven into an interior 90 degree corner, such that both walls exert respective forces upon the helmet. Complexity can include a sequence of collisions that can be applied in a rapid and possibly overlapping manner. According, an initial state of any single collision can be a resting state, e.g., static worn state, or a distorted state as may have resulted from an immediately preceding collision.

A movable part of the machine disposed between the protective shell and the body is activated, responsive to the receiving of the applied, or impact, force at 3404. The machine can include movable parts, such as any of the example mechanisms and components disclosed herein. For example and without limitation, machines can include one or more of levers, screws, gears, pulleys, inclined planes, hinges, wedges, and the like.

A portion of the applied force transferred toward the body is redistributed based on the actuating of the movable part at 3406. Redistribution of the forces can include redirecting of the force, e.g., by an angular displacement. Example angular displacements can include, without limitation, greater than about 15 degrees, about 90 degrees and/or greater than 90 degrees. For example, a collision force applied vertically to a helmet worn upon a head can result in one or more horizontal forces directed inward on one or more side portions of the head. In at least some embodiments, such inward forces can be opposing, e.g., being directed inward along radii toward a central vertical axis.

In at least some embodiments, the process 3400 includes providing and/or assembling a helmet system that includes a protective shell that receives or otherwise experiences an impact force in response to a collision between the protective shell and another external object at 3402. The shell can include any of the various protective shells disclosed herein, such as unitary shells, sections and/or segmented shells. The providing of the helmet system, including any of the example helmet systems disclosed herein, can include providing only an operative portion of the helmet system, such as a machine, e.g., lever system, that when combined with a protective shell, operates as described herein. Alternatively or in addition, the providing of the helmet system can include providing an assembled helmet system and/or assembling the entire system and/or at least an operative part of the helmet system, such as the machine and/or mechanisms that are actuated responsive to a collision to redirect the received collision force, and/or to absorb at least a portion of the kinetic energy of the collision.

In at least some embodiments, the process 3400, includes reducing a portion of the impact force and/or energy that would otherwise be transferred toward the protected body at 3408 (shown in phantom). This reduction can include one or more of absorbing and/or dissipating energy associated with the collision. The absorbing and/or dissipating energy can occur, at least in part, along a direction other than the line of action. Alternatively or in addition, a reduction of at least a portion of the impact force can include an elastic and/or plastic behavior of materials to transform at least a portion of impact kinetic energy. Namely, impact energy can be absorbed by a break or fracture, a dent, a deformation or other temporary and/or permanent alteration of a protective system component. For example, some protection systems, such as motorcycle and/or bicycle helmets that are designed to break, fracture and/or otherwise deform in response to a collision. In at least some embodiments, energy absorption can be accomplished by distortion of a resilient and/or compliant member. Examples include, without limitation, storing kinetic energy of the collision in mechanical energy, e.g., potential energy of a distorted spring, a compressed resilient pad, and the like.

FIGs. 35A and 35B depict side and bottom perspective views, respectively, of a portion of an example lever assembly 3500. The lever assembly 3500 includes four levers 3502 disposed about a central axis. Each of the levers 3502 is pivotable about a respective pivot axis 3508. The levers 3502, in contrast to levers of the preceding examples, e.g., of FIGs. 4A and 31A, include a fulcrum positioned at one end of the lever, instead of being located between opposing ends of the lever. Namely, the example levers 3502 extend from the pivot point in one direction, and are referred to herein as end pivoted. In particular, the example levers 3502 can be considered as upper levers or upward end-pivoted levers. It is understood that other configurations can include end-pivoted levers extending from a pivot in another direction, e.g., downward, to form downward end-pivoted levers. It is also understood that some other assemblies can include combinations of one or more upper levers and one or more lower levers.

In the illustrative example, the pivot axes 3508 lie within a common plane that is perpendicular to the central axis. It is understood that other configurations are possible, for example, including pivot axes that lie within different planes orthogonal to the central axis and positioned at different locations along the central axis. Alternatively or in addition, at least some of the axes can have an orientation that lies outside of a plane orthogonal to the central axis. For example, some of the axes can have an orientation forming a non-zero angle, e.g., 10°, 30°, 45°, 60°, with one of a plane orthogonal to the central axis, the central axis, or both.

In the illustrative example, all four levers 3502 are similar in design. Namely, each lever 3502 includes a first end at or near a pivot axis and a second end including a deformable member, e.g., a resilient pad. In more detail, each of the levers 3502 includes pivot extensions 3508 that snap fit within recess pivot cavities of a pivot mounting ring 3504. The pivot mounting ring 3504 can include any of the example lever mounting assemblies disclosed herein.

The example lever system 3500 also includes a common resilient member 3506 positioned adjacent to a second end of each of the levers 3502. The common resilient member includes a spring, e.g., an elastomer, in the shape of an enclosed loop. The elastomeric loop 3506 is positioned along an outer facing surface of the upper end of each of the levers. In response to a collision force, one or more of the levers 3502 rotates about its respective pivot. Rotation of the one or more levers 3502 can deform the elastomeric loop 3506. For example, an outward rotation of an upper portion of the levers 3502 deforms the elastomeric loop 3506 by expanding the loop. It is understood that expansion of the elastomeric loop 3506 and/or compression of the resilient pads, can expend and/or otherwise absorb at least a portion of a kinetic energy resulting from a collision.

FIGs. 36A and 36B depict side and bottom perspective views, respectively, of a portion of an example of another lever assembly 3600. The lever assembly 3600 includes one upward end-pivoted lever 3602 and three other levers 3610 having pivots located between their respective ends and disposed about a common central axis. Each of the levers 3602, 3610 is pivotable about a respective pivot axis, e.g., pivot axis 3608. Other configurations can include varying numbers and/or types of levers, including combinations of one or more of upper levers, lower levers and/or full levers pivotally attached to one or more pivot anchors, such as the illustrative pivot mounting ring 3604.

In more detail, each of the illustrative full lever 3610 includes an upper portion 3612 extending upward from the pivot axis 3608 and a lower portion 3614 extending downward from the pivot axis 3608. The upper and lower portions 3612, 3614 can be similar or different. In the illustrative example, the upper portion 3612 has a solid profile of a first thickness with a concave surface facing inward, towards the central axis. In contrast, the lower portion 3614 includes an open profile, i.e., including slots, of a second thickness with a substantially planer surface facing inward towards the central axis. Other configurations are possible, and applicable to any of the various types of levers disclosed herein.

FIG. 37 depicts a schematic representation of an example of a collision protective system 3700. FIG. 37 provides a schematic representation of two objects, a protective system 3700 and a foreign object 3701, just prior to a collision between them. The protective system 3700 includes a shock abatement system 3709 that offers a protected object 3708 some measure of protection against impact forces of the collision. Without limitation, the protected object 3708 can include a portion of a body, such as a head, a neck, and/or any portion thereof.

Generally speaking, the foreign object 3701 includes any object capable of colliding with the protective system 3700. Examples of foreign objects 3701 include, without limitation, any movable object, such as a vehicle, a body, a portion of a body, an article, goods, materials, merchandise, and the like, including other protective systems 3700. Alternatively or in addition, the foreign object 3701 can include immovable or substantially immovable objects, such as a building, a portion of a building, a wall, a floor, the ground, a tree, a guardrail, and the like. In some scenarios, one of the objects 3700, 3701 is stationary just prior to a collision, whereas, the other object is moving. In other scenarios both objects 3700, 3701 are moving, e.g., towards each other, away from each other, according to virtually any relative position, direction, speed, and/or acceleration that results in a collision between the two objects 3700, 3701.

In general, the colliding object has a respective mass, mi, a respective velocity, $v_1$, and a respective acceleration, $a_1$. Likewise, the protective system 3700 has a respective mass, $m_2$, a respective velocity, $v_2$, and a respective acceleration, $a_2$. It is understood that the velocity and acceleration values include vector quantities. The protective system 3700 provides a measure of protection to the protected object 3708 under various circumstances. For example, the foreign object 3701 can be moving in a direction that will lead to a collision between the foreign object 3701 and the protective system 3700, while the protective system 3700 is stationary. Alternatively, the foreign object 3701 can be stationary, while the protective system 3700 is moving in a direction that will lead to a collision between the foreign object 3701 and the protective system. More generally, the foreign object 3701 and the protective system 3700 can be moving in respective directions that will lead to a collision between the foreign object 3701 and the protective system 3700.

The example protective system 3700 includes the shock abatement system 3709, including a collision receiving body 3702, an impact force processing mechanism 3706, and the protected object 3708. It is understood that in some embodiments, a relative motion can exist between one or more components of the protective system. The protective system 3700 can be examined according to one or more states, e.g., a pre-collision state, a colliding state, and a post-collision state. It is understood that in a pre-collision state, there is little or no relative motion between one or more of the collision receiving body 3702 and the protected object 3708. That said, in some embodiments, a limited degree of motion can be allowed in the pre-collision state, e.g., to provide for comfort to the protected object during normal usage and/or motion apart from any collision. Likewise, little or no relative motion between one or more of the collision receiving body 3702 and the protected object 3708, or a limited degree of motion can be allowed, e.g., to provide for comfort to the protected object after experiencing a collision.

During a collision, one or more of the collision receiving body 3702 and the protected object 3708 can experience a relative motion with respect to each other. Consider, by way of example, a head on collision between a moving foreign object 3701 and a stationary protective system 3700. The foreign object 3701, moving to the right at a constant velocity $v_1$, has a pre-collision momentum of $m_1v_1$, whereas, the protective system 3700, being stationary, has a pre-collision momentum of 0. At a beginning instant of the collision, e.g., at $t = 0+$, the collision receiving 3702 body is moved to the right, towards the stationary protected object 3708. To the extent that the collision receiving body 3702 and the protected object 3708 are not joined by a rigid, incompressible linkage, there will likely be at least some relative motion between the collision receiving body 3702 and the protected object 3708.

Continuing with the example, the bodies 3702, 3708 would begin to approach each other at the beginning of the collision, they may continue to approach each other as the collision progresses until at some point the force processing mechanism 3706 and/or the protected object 3708 will also begin to move. Relative motion between two or more of the objects 3702, 3706, 3708 will depend to at least some degree on deformability of the collision receiving body 3702, initial separation distance between the collision receiving body 3702, the force processing mechanism 3706, and the protected object 3708. According to the illustrative example, a substantial separation is shown between each of the three items 3702, 3706, 3708, with a separation distance, d, between an interior surface of the collision receiving body 3702 and a facing surface of the protected object 3708. It is understood that in at least some applications little or no space may be provided between the collision receiving body 3702, the force processing mechanism 3706 and/or between the force processing mechanism 3706 and the protected object 3708.

Relative motions between the collision receiving body 3702 and the protected object 3708 that reduce their separation can impart a compressive force upon the impact force processing mechanism 3706. In at least some embodiments, a compression of the impact force processing mechanism 3706 activates the impact force processing mechanism 3706. Such activation can include activation(s) of one or more shock abatement mechanisms of the impact force processing mechanism 3706. For example, at least a portion of an impact force directed along the line of impact, can be diverted or otherwise redirected to another direction. As disclosed further hereinbelow, such redirections can vary between 0° - 180°. In at least some embodiments, the force processing mechanism 3706 diverts a portion of the impact force received along a line of impact to opposing redirected impact force components at +/-90°. Proper alignment of the opposing redirected impact force components act upon the protected object 3708 in opposition. Consequently, a portion of the impact force that would otherwise lead to a displacement of the protected object 3708 is diverted to a compressive force acting upon the protected object 3708.

It is understood that in at least some applications, the force processing mechanism 3706 reacts in one manner in response to minor impact forces, e.g., due to normal use, and in another manner in response to major impact forces that could otherwise result in injurious collisions. In at least some embodiments, the force processing mechanism 3706 can be configured to selectively react to major impact forces, without providing any substantial response to relatively minor impact forces. Alternatively or in addition, the force processing mechanism 3706 can be configured to react to any impact force, e.g., providing a scalable response based on the impact force.

In at least some embodiments, the force processing mechanism 3706 can be adapted to provide a selective response based upon a control. For example, the control can include a degree of compressive force applied to the force processing mechanism 3706, e.g., between the collision receiving body 3702 and the protected object 3708. Namely, the force processing mechanism 3706 reacts in one manner to a minor compressive force, e.g., below some predetermined threshold value, and in another manner to a major compressive force, e.g., above the predetermined threshold. Alternatively or in addition, the control can be based on a distance and/or volume. For example the force processing mechanism 3706, can be configured to provide a first response based on a separation distance, d, between an interior surface of the collision receiving body 3702 and an opposing surface of the protected object being greater than a separation distance threshold, and a second response based on the separation distance falling below the threshold. For example, a minor impact force may result in a minor relative displacement of the bodies 3702, 3708, allowing the force processing mechanism 3706 to provide little or no response, as none may be necessary for protection of the protected object 3708. Conversely, a major impact force may result in a substantial relative displacement of the bodies 3702, 3708, causing the separation distance to fall below a threshold and allowing the force processing mechanism 3706 to provide a major response to protect the protected object 3708.

Other control variables can include, without limitation, absolute velocities of one or more of the bodies 3702, 3706, 3708, relative velocities of one or more of the bodies 3702, 3706, 3708, e.g., respect to each other and/or to some other reference. Likewise, other control variables can include absolute accelerations of one or more of the bodies 3702, 3706, 3708, relative accelerations of one or more of the bodies 3702, 3706, 3708, e.g., respect to each other and/or to some other reference.

FIG. 38A, which do not form part of the present invention, depicts a process 3800 for abating collision-induced shock. A protective shell of a protective system receives or otherwise experiences an impact force in response to a collision between the protective shell and another external object at 3802. The shell can include any of the various protective shells disclosed herein, such as unitary shells, sections and/or segmented shells. The providing of the helmet system, including any of the example helmet systems disclosed herein, can include providing only an operative portion of the helmet system, such as a machine that when combined with a protective shell, operates as described herein.

Any of the collisions disclosed herein generally result in a transfer of energy between the colliding objects. It is understood that any of the collisions disclosed herein can include elastic collisions, inelastic collisions, and/or partially inelastic collisions. The example collision can result from a relative movement of the external object with respect to the protective shell. It is understood that in some instances the protective shell can be stationary at the moment of collision. Alternatively, the protective shell can be in motion at the moment of collision.

A force processing mechanism or machine in communication with the protective shell is actuated at 3804 in response to the impact force. For example, the force processing mechanism, or machine, can be disposed between the protective shell and a protected body. Alternatively or in addition, the processing mechanism or machine can be attached to, integrally formed with, and/or provide the function of the protective shell. For example, one or more cantilevered segments can be formed by removing material from a portion of a shell. At least one of the cantilevered segments can be operatively coupled to one or more of the example mechanisms and/or machines disclosed herein to redistribute a non-trivial portion of a collision energy that absorbs and/or dissipates energy in directions other than a line of impact of the collision. Actuation can be based on one or more of a change in momentum, velocity, acceleration and/or position between one or more of the collision receiving body and the protected object. For example, a collision can result in a relative closure between the collision receiving body 3702 (FIG. 37) and the protected object 3708 (FIG. 37). The closure can be measured, e.g., according to a separation distance, d, between the bodies. In at least some applications, the closure imparts a force, e.g., a compressive force, upon a force processing mechanism 3706 (FIG. 37) of a shock abatement system 3709 (FIG. 37) of the protective system 3700 (FIG. 37).

A first portion of the impact force and/or kinetic energy of the collision is redistributed based on the actuating of the mechanism at 3806. Redistribution can include a change in direction. For example, a collision force received along a line of action can produce a change in motion of the collision receiving body, such as a movement of at least the outer portion of the helmet system. A resulting impact force, and/or a relative motion between the outer portion of the helmet system, e.g., resulting from a transfer of energy, can squeeze the force processing mechanism 3706 along a first direction, e.g., generally towards the protected object along the line of action. Actuation of the force processing mechanism 3706, however, causes movement of one or more portions of the force processing mechanism 3706 that introduces forces upon one or more of the collision receiving body and the protected object.

In at least some embodiments, resulting forces act on the protected object in directions that are orthogonal to the line of action and/or the impact force acting upon the force processing mechanism. Such redirection can introduce opposing forces upon the protected object. It is understood that the object can experience a resulting compression, e.g., without a corresponding translation and/or rotation. In at least some embodiments, the resulting forces act on the protected object in directions that are substantially opposite to the line of action and/or the impact force acting upon the force processing mechanism. Once again, such opposing forces can reduce and/or prevent motion of the protected body.

In at least some embodiments, the process 3800, includes reducing a second portion of the impact force and/or energy that would otherwise be transferred toward the protected body at 3808 (shown in phantom). This reduction can include one or more of absorbing and/or dissipating energy associated with the collision. The absorbing and/or dissipating energy can occur, at least in part, along a direction other than the line of action. Alternatively or in addition, a reduction of at least a portion of the impact force can include an elastic and/or plastic behavior of materials to transform at least a portion of impact kinetic energy. Namely, impact energy can be absorbed by a break or fracture, a dent, a deformation or other temporary and/or permanent alteration of a protective system component. For example, some protection systems, such as motorcycle and/or bicycle helmets that are designed to break, fracture and/or otherwise deform in response to a collision. In at least some embodiments, energy absorption can be accomplished by distortion of a resilient and/or compliant member. Examples include, without limitation, storing kinetic energy of the collision in mechanical energy, e.g., potential energy of a distorted spring, a compressed resilient pad, and the like.

Alternatively, the collision can be complex. For example, the collision can include multiple forces applied along multiple directions. Consider an example of a helmet being driven into an interior 90 degree corner, such that both walls exert respective forces upon the helmet. Complexity can include a sequence of collisions that can be applied in a rapid and possibly overlapping manner. According, an initial state of any single collision can be a resting state, e.g., static worn state, or a distorted state as may have resulted from an immediately preceding collision.

FIG. 38B, which does not form part of the present invention, depicts another process 3850 for abating collision-induced shock. The process includes providing and/or assembling a helmet system that includes a protective shell that receives or otherwise experiences an impact force in response to a collision between the protective shell and another external object at 3852. The shell can include any of the various protective shells disclosed herein, such as unitary shells, sections and/or segmented shells. The providing of the helmet system, including any of the example helmet systems disclosed herein, can include providing only an operative portion of the helmet system, such as a machine that when combined with a protective shell, operates as described herein. Alternatively or in addition, the providing of the helmet system can include providing an assembled helmet system and/or assembling the entire system and/or at least an operative part of the helmet system, such as the machine and/or mechanisms that are actuated responsive to a collision to redirect the received collision force, and/or to absorb at least a portion of the kinetic energy of the collision.

The helmet system includes a force processing mechanism, such as a machine, that is actuated at 3854 in response to the impact force. Actuation can be based on one or more of a change in momentum, velocity, acceleration and/or position between one or more of the collision receiving body, e.g., an outer portion of the helmet system, the machine, and/or the protected object, e.g., a user's head and/or neck. The outer portion of the helmet system can include an exterior-facing portion of the machine, a protective shell, and/or a combination thereof.

A portion of the impact force and/or kinetic energy of the collision is redistributed based on the actuating of the mechanism at 3856. Redistribution can include a change in direction. For example, a collision force received along a line of action can produce a change in motion of the collision receiving body, such as a movement of at least the outer portion of the helmet system. A resulting impact force, and/or a relative motion between the outer portion of the helmet system, can squeeze the force processing mechanism 3706 along a direction, e.g., generally towards the protected object along the line of action. Actuation of the force processing mechanism 3706, however, causes movement of one or more portions of the force processing mechanism 3706 that introduces one or more forces acting upon one or more of the collision receiving body and the protected object.

In at least some embodiments, the process 3850, includes reducing a second portion of the impact force and/or energy that would otherwise be transferred toward the protected body at 3858 (shown in phantom). This reduction can include one or more of absorbing and/or dissipating energy associated with the collision. The absorbing and/or dissipating energy can occur, at least in part, along a direction other than the line of action. Alternatively or in addition, a reduction of at least a portion of the impact force can include an elastic and/or plastic behavior of materials to transform at least a portion of impact kinetic energy. Namely, impact energy can be absorbed by a break or fracture, a dent, a deformation or other temporary and/or permanent alteration of a protective system component.

FIG. 39, which does not form part of the present invention, depicts another process 3900 for abating shock resulting from a collision. An impact force is received at 3902 via a protective shell in response to a collision between the protective shell and another object. An actuating mechanism disposed between protective shell and protected body is exposed to an impact force 3904. The impact force is based on the collision and can be determined according to an average acceleration of the body over a duration of the collision.

A determination is made at 3906, as to whether the impact force is above a collision threshold. To the extent that the collision force is not above the collision threshold, a low-impact force response of actuating mechanism is provided or otherwise applied at 3908. Such low impact force responses include normal ranges of motion, jostling, etc., that might be experienced during normal uses. For periods of normal use, any impact forces would not be expected to result in harm and/or injury to any protected object. Accordingly, a determination can be made beforehand as to the types, magnitudes and/or directions of impact forces that are likely to cause severe discomfort, harm and/or injury. This determination can be used in design of any particular system, e.g., in choice of types of machines, numbers of machines, placement of machines, actuation thresholds, and the like.

To the extent that the collision force is above the collision threshold, a high-impact force response of actuating mechanism is provided or otherwise applied at 3910. Redistributing a portion of impact force transferred toward the protected body based on high-impact force response at 3912.

In at least some embodiments, the process 3900, includes reducing another portion of the impact force that would otherwise be transferred toward the protected body at 3914 (shown in phantom).

FIG. 40, which does not form part of the present invention, depicts yet another process 4000 for abating shock resulting from a collision. The process includes providing a shock abatement system, e.g., including a force processing mechanism, for integration into a protection system at 4002. Providing of the shock abatement system can include constructing and/or otherwise assembling at least a portion of the shock abatement system. Alternatively or in addition, providing of the shock abatement system can include joining, assembling and/or otherwise combining the shock abatement system with a collision receiving body, such as a protective shell.

An impact force is received at 4004 via a protective shell in response to a collision between the protective shell and another object. A force processing mechanism, e.g., disposed between a protective shell and a protected body is exposed to impact force 4006. A determination is made at 4008, as to whether the impact force is above a collision threshold. To the extent that the collision force is not above the collision threshold, a low-impact force response of actuating mechanism is provided or otherwise applied at 4010. Once again, such low impact force responses include normal ranges of motion, jostling, etc., that might be experienced during normal uses. For periods of normal use, any impact forces would not be expected to result in harm and/or injury to any protected object.

To the extent that the collision force is above the collision threshold, a high-impact force response of actuating mechanism is provided or otherwise applied at 4012. Redistributing a portion of impact force transferred toward the protected body based on high-impact force response at 4014.

In at least some embodiments, the process 4000, includes reducing a other portion of the impact force that would otherwise be transferred toward the protected body at 4016 (shown in phantom).

In some embodiments, a single threshold is provided, such that actuation of a machine portion of a helmet system occurs responsive to a collision parameter exceeding the single threshold. Alternatively or in addition, a helmet system can include multiple thresholds. For example, actuation of the machine can occur in stages, e.g., based on a collision parameter exceeding successive thresholds. In some embodiments, different machines and/or different portions of the same or similar machine can responds differently based on a collision parameter exceeding different thresholds. In at least some embodiments, the number of thresholds is relatively large, and the thresholds successive, such that a difference between successive thresholds is relatively small. It is understood that the number of and/or separation between thresholds can at least approximate an analog and/or continuous response, e.g., as in servo control applications.

FIGs. 41A-41D, which do not form part of the present invention, depict schematic representations of example of a collision protective systems. In a first embodiment shown in FIG. 41A, a protective system 4100 includes a force processing mechanism 4104 that includes a machine 4106. The machine 4106 of the illustrative example is positioned between a collision receiving body 4102, e.g., a protective member or shell and a protected object 4108. The machine 4106 is actuated in response to a collision of an external surface of the collision receiving body 4102 along a line of impact 4103. The line of impact is drawn at an angle θ with respect to a surface normal of the collision receiving body 4102. It is understood that the line of impact angle can take on any angle, from head on or normal angle of incidence to an oblique angle of incidence, including a glancing blow. It is further understood that although a single line of impact is shown, actual collisions may occur at multiple locations, simultaneously and/or a slightly delayed times. The techniques disclosed herein can be applied alone or in any combination to offer protection to the protected object 4108 in view of such anticipated and/or unanticipated collisions.

The machine 4106 can include, without limitation, any of a number of generally known simple machines, such as inclined planes, levers, pulleys, gears, screws and the like. The machine 4106 can include one or more such simple machines acting alone or in combination with other simple or even more complex machines. The machine 4106 can be actuated by one or more of the impact force itself, e.g., related to an inertia and/or a change in momentum. Alternatively or in addition, the machine 4106 can be actuated by relative velocities, accelerations and/or positions of the collision receiving body 4102 and/or the protected object 4108.

For example, an impact causes the collision receiving body 4102 to accelerate towards the protected object. Such relative motion generally closes any gap between the collision receiving body 4102 and the protected object 4108. The relative movement can be used to rotate a lever, to rotate a gear, to rotate a cable about a pulley, to turn a screw, and/or to deform a deformable member, such as a resilient pad and/or spring, and the like.

FIG. 41B, which does not form part of the present invention, depicts a schematic representations of another example of a collision protective system 4120. The system includes a force processing mechanism 4124 that includes a machine 4126 and a force coupler 4130. The force coupler is configured to couple or otherwise transfer at least a portion of an impact force of a collision receiving body 4122 to one or more of the machine 4126 and/or the protected object 4128. In at least some embodiments, the force coupler 4130 includes a mounting bracket or the like that supports the machine 4126.

In one example, the force coupler 4130 include a bracket or similar supporting feature that is fixedly attached to an interior surface of the collision receiving body 4122. The machine 4126 can be fixedly or moveably attached to the force coupler 4130, e.g., allowing movement of at least a portion of the machine 4126 with respect to the collision receiving body 4122. For example, the force coupler can include a pivot anchor onto which one or more levers of an example machine 4126 are pivotally attached. Operation of the machine 4126 can be based at least in part on a location and/or angle of the collision with respect to the force coupler 4130. A force applied above and/or below the force coupler 4130 might actuate a first response of the machine 4126, such as a rotation of a lever, whereas a force applied directly in line with the force coupler 4130 might actuate a second response of the machine 4126, such as compression of a leaf spring. It is understood that the machine 4126 can include one or more modes of response that can depend at least in part on the type and/or position of the force coupler 4130.

The illustrative example of FIG. 41C, which does not form part of the present invention, adds one or more force absorbers 4152', 4152", generally 4152 to the force processing mechanism 4144. In the illustrative embodiments, the force absorbers are positioned between a machine 4146 of the force processing mechanism 4144 and a protected object 4148. The example force processing mechanism 4144 also includes a force coupler 4150 that transfers an impact force from a collision receiving body 4142 to the machine 4146. The impact force results from a collision of the collision receiving body with another object along a line of impact 4143.

In operation, the force absorber 4152 can mechanically deform to store kinetic energy related to the collision to a form of stored mechanical, e.g., potential energy. Examples of force absorbers 4152 include, without limitation, resilient materials, such as foam or sponge pads, gels, airbags, deformable plastic pads, contained liquids, springs and the like. It is further understood that the force absorbers 4152 can include compliant materials, such as gels, liquids, gasses, and the like that can be redistributed in response to kinetic energy of the collision. In at least some embodiments, the force absorbers 4152 absorb energy according to a plastic region of deformation, e.g., up to a point of fracture.

The illustrative example of FIG. 41D, which does not form part of the present invention, adds one or more force shock dampeners 4174', 4174", generally 4174 to the force processing mechanism 4164. In the illustrative embodiments, the shock dampeners 4174 are positioned between a machine 4166 of the force processing mechanism 4164 and a protected object 4168. The example force processing mechanism 4164 also includes a force coupler 4170 that transfers an impact force from a collision receiving body 4162 to the machine 4166. The impact force results from a collision of the collision receiving body with another object along a line of impact 4163. Once again the force processing mechanism 4164 includes one or more force absorbers 4172', 4172", generally 4172, e.g., positioned between the shock dampeners 4174 and the protected object 4168. Absorption of at least some of the collision force can result in a slowing down or otherwise extending of an elapsed time of a response of the protective system 4160 to a collision force. For example, compression of a resilient and/or crushable pad placed between the collision receiving body 4162 and the protected object 4168 can delay movement of the protected object, while also resulting in a reduced velocity when the protected object 4168 is ultimately moved. The extension of the time and/or the reduced velocity both contribute to a deceleration that operates to mitigate the impact of a collision to the protected object 4168.

Although the illustrations of the example embodiments may suggest particular arrangements of the various protective components, it is understood that other orderings, configurations and/or arrangements are possible. For example, the shock dampener 4174' and the force absorber 4172' can be arranged in a series configuration, e.g., between the machine 4166 and the protected object 4168, as suggested by the illustrative embodiment 4160. Alternatively or in addition, one or more of the shock dampener 4174' and the force absorber 4172' can be arranged in a parallel configuration, or even combinations of series and parallel. Alternatively or in addition, relative locations of components, such as the shock dampeners 4174 and/or force absorbers 4172 can include placement between one or more of the collision receiving body 4162, the force coupler 4170, and/or the machine 4166.

In operation, the force absorber 4172 can mechanically deform to store kinetic energy related to the collision to a form of stored mechanical, e.g., potential energy. The shock dampeners 4174 dampen one or more of compression of the force absorbers 4172 and/or actuation of the machine 4166. Examples of shock dampeners include, without limitation, mechanical or hydraulic devices configured to absorb and damp shock impulses. The damping can be accomplished, e.g., by converting a kinetic energy of a shock into another form of energy, such as heat, which can then be dissipated. Examples include, without limitation, a mechanical device, commonly referred to as a dashpot that includes a damper that resists motion via viscous friction. The dampers can dissipate a non-trivial portion of energy of a collision force. Energy dissipation provided by the dashpots can include transforming a portion of a kinetic energy of a collision into thermal energy.

The force shock dampeners 4174 can include one or more different types of mechanical dampers. For example, a dashpot is one example of a mechanical damper that resists motion via viscous friction. This can be achieved, e.g., using a cylinder containing a piston that is movable within a viscous fluid. The dashpot devices can be arranged in linear and/or rotary configuration. It is generally understood that force shock dampeners decelerate movement resulting from a collision. Accordingly, the force shock dampeners contribute to a slowing down of an elapsed time of an impact event.

Mechanical dampers can include one or more different mechanical response profiles. Example response files include, without limitation, directional sensitive response profile, a position sensitive response profile, and an acceleration sensitive response profile. For example, a direction sensitive mechanical damper can permit unrestricted motion, i.e., "fast" motion in one direction, while only permitting slow motion in an opposite direction. Such a response can be achieved, for example, by using a one-way mechanical bypass. Position sensitive dampers, e.g., including a piston, allow the piston to move relatively freely in a middle range of travel, sometimes referred to as a "comfort zone" while moving with significantly less freedom in response to more substantial shifts in position. It is envisioned that such position sensitive dampers could provide a comfort zone response that includes movement, jostling, and adjustment that might be experienced during normal usage, while providing a stiffer response to collisions beyond a particular magnitude. Acceleration sensitive dampers, e.g., including a piston and a compression valve, allow the piston to move relatively freely in a middle range of travel, sometimes referred to as a "comfort zone" while moving with significantly less freedom in response to more substantial shifts in position.

In at least some embodiments, the force processing mechanism 4164 includes other components, such resilient pads, that when combined with dampers can alter or otherwise adjust a dampening response. For example, resilient pads can be combined with position sensitive dampers to establish or otherwise provide a threshold response between comfort zone and stiff responses.

FIG. 42, which does not form part of the present invention, depicts a schematic representation of another example of a collision protective system 4200. A collision receiving body 4202 includes a shape or contour. The contour can be provided to facilitate protection of a shaped object, such as a human head, a torso, a limb, a portion of a vehicle, a portion of an architectural structure and the like. The illustrative example can be considered as a helmet shell 4202 placed over at least a portion of a user's head 4204. In the illustrative example, the helmet shell 4202 provides protection to top and side portions of the user's head.

Any of the various configurations of the protective systems disclosed herein can take advantage of a shape of the protected item. A shape of one or more of the collision receiving body 4202, the force coupler 4208, the force processing mechanism 4206 can be shaped and/or otherwise distributed with respect to the protected object 4204. For example, a geometry of the padding elements 4172 (FIG. 41) can include features, such as contours adapted to the protected object 4204, and/or inclined planes, wedges, and/or resiliency responses that can operate to promote a motion of moving parts of the force processing mechanism 4207 to facilitate redistributing the force of the impact.

It is understood that one or more machine-type force processing mechanisms 4206', 4206", generally 4206 can be positioned within an interior region of the helmet shell 4202. In at least some embodiments, no portion of a machine-type force processing mechanism of a protective helmet system extends below a head portion and/or a neck portion of a body when the protective helmet system is worn upon the head portion and/or the neck portion of the body. The illustrative example, each of the force processing mechanisms 4206 includes a respective force coupler 4208', 4208", generally 4208, associated with each of a respective machine 4207', 4207", generally 4207. It is understood that more or fewer force processing mechanism 4206 can be included to offer protection to the protected body 4204 in response to collisions at various positions on the helmet shell 4202 and/or along various lines of impact 4203 V, 4203 HL, 4203 HR.

FIG. 43, which does not form part of the present invention, depicts a schematic representation of yet another example of a collision protective system 4300 that includes a collision receiving body 4362 that includes an enclosed surface. The illustrative example can be considered a vertical cross section showing front, rear, top and bottom side walls of a container system. In at least some embodiments, the container system can be a helmet system. It is understood that the container system can include a protective shell having left and right side walls that can include and/or be combined with respective force processing mechanisms. Although a rectangular structure is shown, it is understood that the techniques disclosed herein can apply to virtually any shaped container system, including cylinders, ellipsoids, spheroids, cubes, tetrahedrons, arbitrary shapes, and the like.

In the illustrative example, a protective shell of the container system represents a collision receiving body 4362. The protected object 4304 is positioned within an interior region of the container system 4362. One or more force processing mechanisms are positioned between the protected object 4304 and walls of the container system. In the illustrative example, at least one force processing mechanism 4364 L, 4364 T, 4364 R, 4364 B, generally 4364 is positioned along each of the walls of the rectangular container system 4362. The example force processing mechanisms 4364 include respective force coupling mechanisms 4370 L, 4370 T, 4370, R, 4370 B, generally 4370, and respective machines 4372 L, 4372 T, 4372 R, 4372 B, generally 4372. Similar force processing mechanism can be provided for the front and back walls of the container system 4362 (not shown).

In at least some embodiments, one or more of the system components can be merged and/or otherwise combined. By way of example, one or more portions of the force processing mechanism 4364 can serve as the collision receiving body 4362, without necessarily relying upon a separate component, such as a helmet shell. Consider a force processing mechanism 4364 that includes multiple levers positioned about a user's head and held into place with a lever support structure. The levers may or may not include one or more of resilient pads and/or dampening mechanisms. The levers, however, can include a lever shaft provided in a pivotal arrangement with a fulcrum, e.g., provided by the lever support structure. The levers, depending upon size, number, orientation and/or location can effectively provide a shell.

In some embodiments, there may be openings and/or gaps between levers. Alternatively or in addition, the levers can include extensions, e.g., plates, that can be attached to the levers and/or otherwise integrally formed with the levers. In at least some embodiments, the plates can form a shell with gaps between plates of a sufficient dimension to allow for free movement of the levers in response to collisions impingent upon an external surface of one or more of the plates.

In some embodiments, the force processing mechanisms 4364 are identical or similar, e.g., varying by size number and/or position. Alternatively or in addition, some of the force processing mechanisms 4364 can differ. For example, one type of force processing mechanism 4364 can be applied along a bottom and/or top wall of the container system, whereas, another type of force processing mechanism 4364 can be provided along one or more of the side walls. Selection of the type and/or arrangement of the force processing mechanisms 4364 can be based on anticipated collisions, weight and/or shape of the protected object 4304, and the like.

FIGs. 44A and 44B depict front and side views, respectively, of a portion of an example segmented helmet system 4400 that includes one or more machines. The helmet system 4400, when positioned on a portion of a body, facilitates a redistribution of an impact force transferred to the body via a protective member. In particular, the helmet system 4400 includes a segmented protective shell formed from multiple shell segments that are movable with respect to each other. The shell segments are in communication with and/or integrally formed with one or more machines that facilitate a redistribution of a collision force in a controlled manner, e.g., including a controlled movement. In some embodiments, the shock abatement assembly includes the protective shell, e.g., being formed from components of the shock abatement assembly, such as external surface portions of the upper and lower lever assemblies 2006, 2016 of the alternative shock abatement assembly 2000 (FIGs. 24A-24C).

The segmented helmet system 4400 includes a first support frame 4402a and a second support frame 4402b, generally 4402. Each of the support frames 4402 includes multiple links 4403 joined together by one or more pivots 4404 to provide a pivotal engagement between the links 4403. At least some of the links 4403 can be arranged in a linear fashion, e.g., end-to-end, to form one or both of the first and second support frames 4402. The pivotal engagement between links allow the support frame 4402 to bend, contort and/or shape to fit the body. The illustrative example illustrates arc shapes that conform to a top and/or side portion of a user's head.

One or more shell segment assemblies 4410a, 4410b, generally 4410, can be attached to the support frame 4402. Each of the shell segment assemblies 4410a, 4410b can include a respective protective shell segment 4412a, 4412b, generally 4412. The protective shell segments 4412 can be planar, and or contoured, e.g., portions of an ellipsoid, a spheroid, and the like. The protective shell segments 4412 are generally bounded by a perimeter 4411a, 4411b, generally 4411. In some embodiments, at least some of the shapes are identical, or similar, e.g., regular and/or irregular polygons, such as the example octagon shapes. It is understood that perimeters 4411 of adjacent shell segments 4412 can be shaped, sized and/or otherwise configured to provide a predetermined gap width therebetween. The gap width can be controlled to be as narrow as possible to still allow for relative movement between adjacent shell segment assemblies 4410 during use. Alternatively or in addition, at least some of the gaps can be large and/or irregular, e.g., to reduce and/or otherwise minimize coverage area, allow for ventilation, reduce weight, reduce cost, and the like.

FIG. 44C depicts a bottom perspective view of one of the segmented shell assemblies 4410a of the example segmented helmet system 4400 depicted in FIGs. 44A-B. In this example, the shell segment 4412a is attached to a portion of a lever assembly 4465. The lever assembly 4465 can include a pivot 4469 to allow for a rotation of the lever assembly 4465 about the pivot point, e.g., during a collision. It is understood that the pivot can include one or more springs and the like. The lever assembly 4465 also includes a resilient member 4414 attached to and/or integrally formed upon a portion of the lever assembly 4465. The lever assembly 4465 can be attached to and/or integrally formed along an interior surface of the shell segment 4412a. In the illustrative embodiment, the lever assembly 4465 is attached to the shell segment 4412b using a mount, e.g., a strut 4460.

It is understood that a segmented shell can be used alone or in combination with any of the various mechanism, frames, helmets, levers, lever support frames, deformable members, shock abatement systems and the like disclosed herein. For example, the shell assembly 4410a can include one or more of a lever, an inclined plane, a wedge, a pulley, a gear, a screw, and the like. In some embodiments, one or more of the shell segments 4412 are attached to the machine, and/or to another support structure of a system that includes the machine.

In some embodiments, the shell segments 4412 can be formed by cutting and/or separating sections of a unitary shell. For example, a traditional helmet shell can be injection molded, casted, machined, and the like. The resulting shell can then be cut into segments, e.g., using a saw, a laser, a high energy jet, and the like. Alternatively or in addition, the shell segments 4412 can be formed independently, e.g., individually molded, casted and/or machined.

FIGs. 45A-45D depict top, bottom perspective, rear and side views of the alternative helmet suspension system 4500 of FIG. 23A, placed within the example football helmet of FIG. 23B.

FIGs. 46A-46D depict top, bottom perspective, rear and side views of the alternative helmet suspension system 4600 of FIG. 23A, placed within the example military helmet of FIG. 23C.

FIG. 47A-47C, which do not form part of the present invention, depict views of an embodiment of an alternative lever assembly 4704 of a helmet suspension system 4700. The alternative lever assembly 4704 is similar in some regards the lever assembly 400 of FIGs. 4A-4D. However, the lever assembly 4704 includes a variation of the lever mechanism that includes an energy dissipating or dampening mechanism 4720', 4720", generally 4720. Namely, as the lever reacts to a collision or impact force, some of the energy can be stored in one or more resilient springs, while some of the energy can be dissipated by the dampening mechanism 4720.

FIGs. 48A-48C, which do not form part of the present invention, depict more detailed views of the alternative lever assembly depicted in FIGs. 47A-47C, including the dampening mechanism 4720. In particular, FIG. 48B depicts detail view C depicted in FIG. 48A, whereas, FIG. 48C depicts cross-sectional view including the dampening mechanism. The lever assembly 4704 includes a first gear, e.g., an angular portion of a circular gear, referred to as a triangular gear 4726. The triangular gear 4726 is attached to the lever assembly 4704 and rotates with the lever 4704 about a common pivot axis. A second gear 4724 is provided in communication with the triangular gear 4726. As the triangular gear 4726 rotates in one sense together with the lever 4704, the second gear 4724 rotates in an opposite sense. A rotation of the second gear 4724 can be determined by one or more of relative gear placement, gear diameters, gear tooth number, pitch and the like. The gears 4726, 4724 can provide a mechanical advantage, e.g., by inducing a relatively high gear ratio between the triangle and second gears 4726, 4724.

Referring next to FIGs. 49A-49B which do not form part of the present invention, an example rotary member 4722 is shown in which the second gear 4724 can be attached to an axial shaft 4725. The axial shaft 4725 can include an inclined plane, e.g., a helical inclined plane or thread as in a screw. The thread can be used to drive a nut 4728 (FIG. 51B) along the shaft 4725 according to a rotation of the shaft 4725.

Referring next to FIGs. 50A-50C which do not form part of the present invention, the dampening mechanism 4720 can include a housing 4721 defining an axial chamber. The axial shaft 4725 can be axially aligned within the axial chamber, and the nut can be sized, shaped and/or otherwise configured to provide a fluid-tight seal between an annular gap between an outer surface of the axial shaft 4725 and an opposing interior surface of the axial chamber. As the axial shaft 4725 turns in response to a rotation of the lever 4704, a relatively high gear ratio drives the nut 4728. The nut 4728, shown in more detail in FIGs. 51A-51B, which do not form part of the present invention, can be used to compress a fluid, e.g., a gas, such as air, within the chamber. The chamber can include one or more small holes to allow compressed air to evacuate the chamber in a controlled manner.

FIG. 52, which does not form part of the present invention, depicts a lateral view of another embodiment of a force processing system that includes a floating suspension system 5200. The floating suspension system 5200, when positioned between a protected object 3708 e.g., a body, and a collision receiving body 3702 (FIG. 37), e.g., a protective member, facilitates a redistribution of an impact force transferred to the body via the protective member. The floating suspension system 5200 includes a contact mechanism, e.g., a contact point or bearing 5206 that frictionally engages an interior surface of the protective member. In operation, one of the suspension system 5200, the contact mechanism 5206 or both facilitate a shear displacement between the protective member and the suspension system 5200 in response to the impact force. Beneficially, an impact force that induces a rotational acceleration of the protective member, such as a helmet shell, can be absorbed and/or deflected to at least some extent by the shear or rotational displacement offered by the floating suspension system 5200.

In some embodiments, the floating suspension system 5200 engages an interior surface of a collision receiving body, e.g., a helmet, according to a relatively low friction. Such low frictional engagements can include smooth surfaces, low friction materials, such as PTFE, wheels, rotating bearings, and the like. Alternatively or in addition, the floating suspension system 5200 engages the interior surface of the collision receiving body according to a relatively high friction. Such relatively high frictional engagements can include non-smooth, or rough surfaces, e.g., having one or more of grooves, bumps, ridges and the like.

In at least some embodiments, one or more frictional engagements include an inclined plane. For example, the contact bearing 5206 abuts an inclined plane along the interior surface of the helmet. As the lever assembly 5205 rotates with respect to the helmet, the contact bearing 5206 moves along the inclined plane. Consequently, a frictional force related to the shear displacement can vary according to a position along the inclined plane.

It is further understood that at least some embodiments can include other features that limit a range of shear displacement. For example, such features can provide interference that slows or otherwise prevents relative shear displacement beyond a predetermined range. Such features can include one or more of stops, ridges, walls, grooves, and the like.

In more detail, the floating suspension system 5200 includes a support frame 5201 and a lever assembly 5205 supported by the support frame 5201. In the illustrative example, the support frame 5201 includes a first support frame assembly 5202a and a second support frame assembly 5202b, generally 5202. Each frame assembly 5202 of the support frame 5201 can be shaped in a form of an arc, e.g., a frontal arc frame assembly 5202b, sized and shaped to accommodate a fit to the protected body, e.g., fit a portion of a user's head in the illustrative helmet example. In at least some embodiments, multiple arc frame assemblies 5202 can be provided, e.g., including a sagittal arc and a frontal arc rotationally displaced from each other by a non-zero angle about a central axis. In some embodiments, the non-zero angle is about 90 degrees, but could be any other angle, e.g., 20 degrees, 45 degrees, 60 degrees, and so on, without limitation.

In some embodiments one or more of the arc frame assemblies 5202 are substantially rigid. For example, the arc frame assemblies 5202 can be formed from a rigid material, such as a rigid polymer, a rigid composite material, a metal, and the like. Alternatively or in addition, the arc frame members 5202 can be semi-rigid and/or flexible.

The example lever assembly 5205 includes a pair of opposing lever arms 5207a, 5207b, generally 5207, rotatable about a common axis or pivot 5209. The lever arms 5207 can include one or more resilient members, e.g., pads 5214a, 5214b, generally 5214. In the illustrative example, the pads 5214 are configured to abut a portion of a user's head during usage. Alternatively or in addition, one or more other resilient members, e.g., pads 5211 can be attached or otherwise provided at one or more locations along one or more of the arc frame members 5202 separate and apart from any of the lever assemblies 5205.

The lever assembly 5205 can be mounted to the arc frame assembly 5202 at predetermined locations in relation to the protected body, e.g., the user's head. In the example embodiments an elongated axis of the lever assembly is positioned transverse to an elongated member of the arc support frame. It is understood that more than one lever assembly 5205 can be mounted to each arc support frame 5202. For example, the lever assemblies can be provided in opposing pairs, such that one lever assembly on a right side of the user's head is balanced by another lever assembly on a left side of the user's head. Likewise, one or more such pairs of lever assemblies can be mounted on each frame of a multi-arc frame configuration. It is understood that the opposing lever assemblies of one arc frame can be positioned interdigitally with respect to other opposing lever assemblies of another arc frame. Such interdigital placement allows the levers to be placed at predetermined locations about the user's head without interfering with each other.

FIG. 53A, which does not form part of the present invention, depicts more detailed interior and exterior side views of an example lever assembly 5205 (FIG. 52). The suspension system 5200 including a lever assembly of the illustrative example can be mounted at one or more of various locations of the arcuate support frames 5202. For example, the lever assembly 5205 can be mounted along a lower region of the arcuate support frame 5202, e.g., using a mounting bracket 5208, as shown, and/or along an upper region 5209 of the same and/or different frames 5202. Referring again to FIG. 52, the support frame 5201 can include one or more segmented arc frames 5202, in which at least one arc frame 5202 is formed from multiple arc segments or links 5203. The multiple arc segments 5203 can be joined along hinges or pivots 5204 to allow the individual arc segments 5203 to bend and/or rotate with respect to other arc segments 5203 of the same arc frame member 5202. In some embodiments, a spring, such as a torsion spring (not shown) is provided along one or more joints 5204 of the arc segments. Alternatively or in addition, a dampening mechanism can be provided along one or more of the joints of the arc segments.

An external facing surface of the lever assembly 5205 includes one or more contact mechanisms positioned to interact with an interior surface of a protective shell, or helmet. The contact mechanism can include a slideable structure that provides a slideable engagement between the suspension system 5200, the contact mechanism, or both, and the interior surface of the helmet. The slideable structure can include a slippery surface that provides a low-friction interface to the interior surface of the protective member. The slippery surface can include a rounded or smooth structure. The rounded or smooth structure can include a relatively low friction material, such as a PTFE or the like. In some embodiments, the contact mechanism includes a rollable structure that provides a rolling engagement between the one of the suspension system, the contact mechanism or both and the interior surface of the protective member. Examples of rollable structures include, without limitation, wheels, casters, bearings, ball bearings or any combination thereof.

In some embodiments, the lever assembly 5205 includes opposing levers that rotate in opposition about a common pivot axis 5209 in response to the impact force. The lever assembly 5205 can include a deformable, e.g., resilient, mechanism, such that a rotation of the opposing levers, e.g., in response to an impact force, deforms, e.g., compresses, the resilient mechanism. In the illustrative embodiment, the resilient mechanism includes a first torsion spring 5210, presenting a first spring constant in response to a compressive force that closes the lever assembly. Alternatively or in addition, the resilient mechanism includes a second torsion spring 5212, presenting a second spring constant in response to a decompressive force that opens the lever assembly. One of the first torsion spring 5210, the second torsion spring 5212, or both, can include a coil spring, as illustrated. In some embodiments, the first resiliency differs from the second resiliency according to the respective spring configurations, e.g., spring constants. Still other configurations can include, without limitation, springs, tension/extension springs, compression springs, torsion springs, flat springs, serpentine springs, cantilever springs, coil springs, leaf springs, wave springs, solid materials, shaped materials, elastomers, e.g., elastomeric loops, natural materials, e.g., rubber, synthetic materials, e.g., polymers, and the like. It is also understood that of the foregoing variants can be used with and/or without dampening assemblies.

FIG. 53B, which does not form part of the present invention, depicts a more detailed view of a pivot region 5320 of the lever assembly 5205. The illustrative example includes a multi-spring arrangement including a first spring 5322 and a second spring 5324. In particular, the example arrangement includes a, so called, nested spring arrangement using coiled torsion springs, in which the second spring 5324 lies within the first spring 5322. In more detail, a wire from which the second spring 5324 is formed has a smaller diameter and/or is formed of a different material than the first spring 5322. The smaller diameter and/or softer material allows the second spring to deform easier, e.g., according to a lesser force than the first spring 5324. This spring can facilitate a comfort fit upon the user's head, e.g., ensuring that the lever segments remain engaged against the user's head, but without undue force that might otherwise provide discomfort.

The second spring 5324 having a larger diameter and/or stiffer material, is requires a greater force to deform it. The example configuration allows the second spring to selectively react against collisions and/or impacts of the helmet. Thus, during normal wear, the second spring remains rigid. However, upon a sudden and forceful impact, the second spring deforms to facilitate operation of the lever assembly 5200. In at least some embodiments, the second spring 5324 can use the first spring 5322 as a shaft about which it is positioned and/or flexed.

FIGs. 54A-54B depict top and front views of an embodiment of a floating helmet suspension system 5400 positioned on a human head. The floating suspension system 5400, when positioned between a body, e.g., a head 5402, and a protective member (not shown), facilitates a redistribution of an impact force transferred to the body via the protective member, e.g., a helmet shell. The floating suspension system 5400 includes a contact mechanism, e.g., one or more contact points 5404 that engage an interior surface of the protective member. In operation, one of the suspension system 5400, the contact mechanism 5404, or both, facilitate a shear displacement between the protective member and the suspension system 5400 in response to the impact force. Beneficially, an impact force that induces a rotational movement of the protective shell can be absorbed and/or deflected to at least some extent by the shear displacement offered by the floating suspension system 5400.

In more detail, the floating suspension system 5400 includes a support frame assembly including at least two lever support assemblies 5406a, 5406b, generally 5406, each supporting and a respective lever assembly 5408a, 5408b, generally 5408. The lever support assembly 5406 can include at least two arc segments 5403a, 5403b, generally 5403, joined by a pivoting joint 5401, e.g., a rotary joint, that when assembled is sized and shaped to fit a portion of a user's head. For example, one lever support assembly 5406 can conform to the user's head, e.g., in a front-to-rear direction, by pivoting motions of the rigid or semi-rigid arc segments 5403. Alternatively or in addition, the support frame can include a second arc segment, e.g., a frontal arc segment 5406b, sized and shaped to fit a portion of the user's head in a left-to-right direction. In at least some embodiments, multiple arc segments 5406 can be provided, e.g., including a sagittal arc and a frontal arc rotationally displaced from each other by a non-zero angle about a central axis. In some embodiments, the non-zero angle is about 90 degrees.

In some embodiments one or more of the arc support frame members 5406 are substantially rigid. For example, the arc support frame members 5406 can be formed from a rigid plastic, a rigid composite material, a metal, and the like. Alternatively or in addition, the arc support frame members can be semi-rigid and/or flexible.

FIGs. 55A-55B depict front and side views of the floating helmet suspension system depicted in FIGS. 54A-54B. The multiple arc segments 5403 can be joined along hinges or pivots 5401 to allow the individual arc segments 5403a to bend, twist, swivel and/or rotate with respect to other arc segments 5403b of the same arc frame member. In some embodiments, a spring, such as a torsion spring, is provided along one or more joints of the arc segments. Alternatively or in addition, a dampening mechanism can provided along one or more of the joints of the arc segments.

FIGs. 56A-56D, which do not form part of the present invention, depict top perspective, front and side views of another embodiment of a helmet suspension system 5600. The suspension system 5600 includes one or more arcuate frame members, e.g., a front frame member 5606a and a side frame members 5606b, generally 5606, disposed at a non-zero angle with respect to each other about a central axis 5609. In some embodiments, the non-zero angle is about 90 degrees. The suspension system 5600 includes one or more lever assemblies 5608 that each include multiple opposing lever assemblies 5608 attached to the arcuate support frame.

The opposing lever assemblies 5608 move, e.g., rotate or pivot, in opposition about respective pivot axis in response to an impact force. For example, an impact force applied to an external surface of a protective shell compresses one or more of the lever assemblies 5608 between the user's head and the protective shell (not shown). In the illustrative embodiment, the compressive force enacts the levers by opening the levers. A resilient member, such as a spring 5612 is attached between the lever assemblies 5608 such that a compressive force that opens the levers results in energy being stored in the spring. Upon removal of the impact force, the spring can transfer stored energy back to the levers causing them to move in a closing direction.

In some embodiment lever assembly comprise a first lever mechanism 5608 coupled to the first arcuate member 5606 providing shear displacement along a first baseline of the first arcuate member via the contact mechanism, and a second lever mechanism coupled to the second arcuate member that provides shear displacement along a second baseline of the second arcuate member via the contact mechanism. The shear displacement can be facilitated by a rolling member, such as a wheel, a ball bearing or a caster disposed at distal ends of the levers. Pivoting about a pivot at a proximal end of the levers causes the levers to open and/or close resulting in a rolling engagement between the rolling members and an interior surface of the shell.

By way of illustration, a lateral force applied to a left side of a helmet compresses lever assemblies 5608 along a left side of the user's head, e.g., opening the levers, causing the springs to store potential energy along the left side of the user's head. Relative movement between the user's head and the helmet results in lever assemblies 5608 along an opposing, right side of the user's head reduces compression of the lever assemblies along a right side of the user's head, e.g., closing the levers, causing the springs to release potential energy along the right side of the user's head. The potential energy released by the lever assemblies along a side of the user's head that is opposite to the impact location, act to apply an inward force to the opposite side of the user's head. Accordingly, an impact force along a first direction results in a first reaction force applied along the same direction as well as a second reactive force acting in an opposing direction. Once again, in impact force at one position results in an application of inward forces acting in opposing directions.

It should be understood that any of the suspension systems disclosed herein can use the protective shell, e.g., helmet, as a displacement mechanisms that facilitates a relative displacement of the body to the protective shell in a direction that opposes a direction of the impact. Such displacements can contribute to a slowing down of a relative movement of the body with respect to the protective shell. Such displacement mechanisms can isolate the shell from the head thereby providing a measure of protection from an impact force applied to the shell.

In some embodiments, the suspension system includes a compressive member positioned adjacent to the body during use. For example, the compressive member can be positioned between the user's head and an interior surface of the arcuate frame members. The compressive member can include any of the compressive and/or resilient materials disclosed herein. Examples include, without limitation, a spring, a foam, a sponge, an elastomer and any combination thereof.

In at least some embodiments, at least a portion of a protective shell is adapted to deform in response to the application of an impact force, e.g., resulting from a collision. In this manner, it is understood that a resulting protective shell deformation can absorb a non-trivial portion of a kinetic energy of the collision. In some embodiments, the distortion of the shell is based on a collision of the shell with an external object, e.g., depressing or otherwise denting a portion of the shell. In at least some embodiments, the deformation includes an elastic deformation. Alternatively or in addition the deformation of the shell can include a plastic deformation. It is understood that, without restriction, the deformation occurs in a direction that differs from a direction of the collision. For example, the distortion can be in a direction that is substantially orthogonal to a direction of the impact.

In some embodiments, a reaction space is maintained with respect to the protective shell to permit a machine response, e.g., actuation of the levers, without interference to the deformed protective shell. Such reaction space can be controlled by one or more of an open space and/or separation between the protective shell and adjacent portions of the shock abatement assembly.

It is further understood that a plastic and/or elastic deformation of a protective shell can be responsive to an actuation of the shock abatement assembly. By way of illustrative example with reference to the system of FIGs. 1A-1B, application of an impact force initiates a translation of the helmet shell 102 with respect to the user's head 104, which in turn, actuates the machines 101, e.g., rotates the levers. Based on one or more of a spring constant of the resilient component 116, material properties of the protective shell 102 and/or the levers 101, the lever response can, in turn, cause a pre-stressing, and in at least some instances a deformation of the protective shell 102. In particular, an outward rotation of a top portion of the levers 101 can result in an inward distortion of side portions of the protective shell 102, e.g., along attachment points of the fulcra 114. It is further understood that such inward distortion of side portions of the protective shell 102 can induce an increase in an arc of a top portion of the protective shell 102 above the fulcra 114. In at least some embodiments, pronouncement of the arc at the top portion can increase a strength of the protective shell in response to the vertically directed force F. Alternatively or in addition, pronouncement of the arc at the top portion can increase a reaction space and/or volume, to prevent and/or further promote unimpeded operation of the levers 101.

It is worth noting that one or more of the example machines, deformable members, resilient members, and the like, disclosed herein, can be configured to pre-stress a protective shell. Consider the example lever assemblies that, when worn by a user, provide a stress upon the protective helmet shell through contact regions. Contact regions can include point loaded regions, e.g., at locations of the fulcra and/or pivots. Alternatively or in addition, contact regions can include extended regions, e.g., as in an arcuate or circumferential region about a mounting ring. Regardless of the particular configuration, the protective shell, e.g., the helmet, is prestressed. It is understood that strengths, directions and/or locations of the pre-stressing can be predetermined, e.g., according to design parameters related to placement of the machines, properties of the machines, material properties of the resilient members, and so on. By way of further example, an o-ring disposed about an array of levers can be adapted to provide a measured pre-stressing of the helmet shell.

FIGs. 57A-57B, which do not form part of the present invention, depict another more detailed portion of the embodiment of the helmet suspension system 5600 depicted in FIG. 56.

FIGs. 58A-58D, which do not form part of the present invention, depict top perspective, top and side views of another embodiment of a helmet suspension system 5800. The suspension system 5800 can be similar to the preceding example suspension system 5600, with the addition of one or more energy dissipating or dampening members. For example, a damping mechanism 5814 is positioned between distal ends of a lever assembly 5808. The damper acts in cooperation with pivoting of the levers and operation of the spring member. The damper, however, dissipates energy during an exchange of energy between kinetic and potential energies. One or more dampers tend to slow down mechanical responses to internal forces reacting to an impact force. The slowing down can include a deceleration. In at least some embodiments, the dampers behave differently based on an intensity and/or velocity of the impact. Namely, a dampening can be determined according to a product of a dampening coefficient and a velocity. Accordingly, under a relatively high velocity impact, the damper tends to present a relatively stiff response. Contrarily, under a relatively low velocity impact, the damper tends to present a less stiff or softer response. An analogy would be an expected reaction to punching a block of clay (high impact) resulting a relatively small deformation of the clay over a relatively short time period, to a slow and steady depression of the block of clay (low impact) that results in a relatively large deformation of the clay over a longer time period. The dampening member can include a piston structure, in which a liquid, such as a gas, is compressed during operation of the dampening mechanism.

FIG. 59, which does not form part of the present invention, depicts an example of a suspension assembly 5900 of an embodiment of a force processing system 106 (FIG. 1). The suspension assembly 5900 can be used alone or in combination with any of the other example suspension systems disclosed herein. For example, the suspension assembly 5900 can be mounted to one or more of the support frames, such as the arcuate support frames of the preceding example 5202 (FIG. 52). The suspension assembly 5900 can be positioned between the frame 5202 and the protected body, and/or between the frame 5202 and the collision receiving member or shell, and/or along both sides of the frame. For example, the suspension assembly 5900 can include one or more resilient pads 5916 that can abut a user's head during use. In at least some embodiments, the suspension assembly 5900 can be mounted to the collision receiving member and/or used alone or in combination with components that would allow shear translations, such as wheels, bearings, and the like. However, whereas the preceding examples included open-ended, e.g., scissor-style, levers, the present suspension assembly 5900 provides an enclosed arrangement of pivotally joined rigid links.

A first link 5902 is pivotally joined between a first pivot 5904 and a second pivot 5906. A second link 5908 is pivotally joined between the second pivot 5906 and a third pivot 5910. A third link 5912 is pivotally joined between the third pivot 5910 and a fourth pivot 5914. The first, second and third links 5902, 5908, 5912 can form half of an enclosed linkage, such as shown in the illustrative configuration 5900. The example six links form the example can be said to form an enclosed linkage, e.g., the linkage are arranged to form a closed structure, such as a polygon. It is understood that other numbers and/or configurations of linkages are possible, including open-ended linkages. Examples of open-ended linkages include any of the example scissor-type machines disclosed herein. The links 5902, 5908, 5912 are pivotally joined to provide a separation or compression of an open interior region of the enclosed lever assembly in response to external forces. The lever assembly can include one or more spring members 5918 that store energy and/or one or more dissipating elements 5920, such as dampers, to dissipate energy during an exchange between kinetic and potential energies of the spring.

FIG. 60, which does not form part of the present invention, depicts an example of another suspension assembly 6000 of an embodiment of a force processing system 106 (FIG. 1). The suspension assembly 6000 can be used alone or in combination with any of the other example suspension systems disclosed herein. For example, the suspension assembly 6000 can be mounted to one or more of the support frames, such as the arcuate support frames of the preceding example 5812 (FIG. 58C). The suspension assembly 6000 can be positioned between the frame 5812 and the protected body, or between the frame 5812 and the collision receiving member or shell, or along both sides of the frame. The suspension assembly 6000 can be mounted to the collision receiving member and/or used alone or in combination with components that would allow shear translations, such as wheels, bearings, and the like.

The suspension assembly 6000 includes opposing levers or scissor arms 6002 that rotate in opposition about respective pivot axis 6004 in response to an impact force. For example, an impact force applied to an external surface of a protective shell compresses one or more of the lever assemblies 6000, e.g., when attached to a support frame 5506 (FIG. 56) between the user's head and the protective shell. In the illustrative embodiment, the compressive force enacts the levers 6002 by opening the levers 6002. A resilient member, such as a spring 6006 can be attached between the levers 6002 such that a compressive force that opens the levers 6002 results in energy being stored in the spring 6006. Upon removal of the impact force, the spring 6006 can transfer stored energy back to the levers 6002 causing them to move in a closing direction.

In some embodiments a lever-based force processing system includes a first lever mechanism 6000 coupled to a first arcuate member providing shear displacement along a first baseline of the first arcuate member via the contact mechanism, and a second lever mechanism 6000 coupled to the second arcuate member that provides shear displacement along a second baseline of the second arcuate member via the contact mechanism. The shear displacement can be facilitated by a rolling member, such as a wheel 6008, a numb or bearing, a ball bearing or a caster disposed at distal ends of the levers. Pivoting about a pivot 6004 at a proximal end of the levers 6002 causes the levers 6002 to open and/or close resulting in a rolling engagement between the rolling members 6008 and an interior surface of the shell. In at least some embodiments, the suspension assembly 6000 includes a dampening mechanism 6010, e.g., positioned between open ends of a pair of levers 6002. The dampening mechanism can provide some measure of shock absorption in response to rapid movements of the levers 6002

By way of illustration, a lateral force applied to a left side of a helmet compresses lever assemblies 6000 along a left side of the user's head, e.g., opening the levers 6002, causing the springs 6006 to store potential energy along the left side of the user's head. Relative movement between the user's head and the helmet results in lever assemblies 6000 along an opposing, right side of the user's head to reduce compression of the lever assemblies along a right side of the user's head, e.g., closing the levers 6002, causing the springs 6006 to release potential energy along the right side of the user's head. The potential energy released by the lever assemblies along a side of the user's head that is opposite to the impact location, act to apply an inward force to the opposite side of the user's head. Accordingly, an impact force along a first direction results in a first reaction force applied along the same direction as well as a second reactive force acting in an opposing direction. Once again, an impact force at one position results in an application of inward forces acting in opposing directions.

FIGs. 61A-61C, which do not form part of the present invention, depict top perspective, top and side views of yet another embodiment of a helmet suspension system. The suspension system 6100 can be similar to the preceding example suspension system 5600, at least with regard to the one or more of the arcuate frame members, resilient pads, and positioning of lever assemblies. However, whereas the preceding examples included open-ended, e.g., scissor-style, levers, the present suspension system 6100 provides an enclosed arrangement of pivotally joined rigid links 6108. The links can be pivotally joined to provide a separation or compression of opposing ends of the lever assemblies in response to external forces. The lever assemblies can include one or more spring members that store energy and/or one or more dissipating elements, such as dampers, to dissipate energy during an exchange between kinetic and potential energies of the spring.

FIG. 62, which does not form part of the present invention, depicts a cross-sectional view taken along section A-A of the helmet suspension system 6100 depicted in FIGs. 61A-61C. A compressive force applied to one side, e.g., the left side, will tend to compress a left-side lever assembly 6208d. Relative movement between the user's head and the helmet results in a reduction of compressive force to lever assemblies 6208b along an opposing, right side of the user's head, e.g., closing the levers, causing the springs to release potential energy along the right side of the user's head. The potential energy released by the lever assemblies along a side of the user's head opposite the side of impact act to apply an inward force to the opposite side of the user's head. Accordingly, an impact force along a first direction results in a first reaction force applied along the same direction as well as a second reactive force acting in an opposing direction. Once again, an impact force at one position results in an application of inward forces acting in opposing directions.

FIGs. 63A-63C, which do not form part of the present invention, depicts more detailed views of a component of the helmet suspension system depicted in FIGs. 61A-61C. In particular, FIG. 63A provides a cross-sectional view along section B-B of FIG. 63B. Such opposing forces can help to "divorce" the impact, the shell, and the head, in response to an impact in order to facilitate a reduction of the acceleration and a bounce or other reaction of the head to the impact. An example link assembly 6306b includes pivotally joined rigid links. At least two adjacent links 6103a, 6103b, generally 6103, are joined along at least one pivot joint 6301. The link assembly 6306b includes multiple links 6103 and multiple pivot joints 6301 to form an enclosed loop. A shape of the enclosed loop structure is variable according to movement of the links 6103 about their respective pivot joints 6301.

It should be understood that any of the suspension systems disclosed herein can use the protective shell, e.g., helmet, as a displacement mechanisms that facilitates a relative displacement of the body to the protective shell in a direction that opposes a direction of the impact. Such displacements can contribute to a slowing down of a relative movement of the body with respect to the protective shell. Such displacement mechanisms can isolate the shell from the head thereby providing a measure of protection from an impact force applied to the shell.

In some embodiments, the suspension system includes a compressive member positioned adjacent to the body during use. For example, the compressive member can be positioned between the user's head and an interior surface of the arcuate frame members. The compressive member can include any of the compressive and/or resilient materials disclosed herein. Examples include, without limitation, a spring, a foam, a sponge, an elastomer and any combination thereof.

FIG. 64, which does not form part of the present invention, depicts a cross section view of a protective shell, e.g., a helmet 6402 including an embodiment of a pulley suspension system 6400. The suspension system 6400 includes a first lever assembly 6404 that rotates about a first pivot axis 6406. At least one end of the lever assembly 6404 is mechanically linked to at least one end of second lever assembly 6408 that rotates about a second pivot axis 6410. Ends of each of the lever assemblies 6404, 6408 can include one or more resilient members, e.g., pads 6412 positioned to engage an adjacent portion of a user's body. In the illustrative embodiment, a mechanically linking of the first and second lever assemblies 6404, 6408 is accomplished by a pulley system. In the illustrative example, a first cable 6416 or wire extends between ends of the first and second lever assemblies 6404, 6408. The first cable 6416 is in communication with at least one pulley 6420a disposed between the first and second levers 6404, 6408. In the illustrative embodiment, the first cable 6416 is in communication with a first pulley 6420a and a second pulley 6420b. In at least some embodiments, an arrangement of the first cable 6416 and one or more of the pulleys 6420a, 6420b can provide a mechanical advantage. Alternatively or in addition, numbers and/or placement of the pulleys 6420a, 6420b facilitates rotational responses of one or more of the lever assemblies 6404, 6408.

A force applied to one side of a protective shell 6402, such as a helmet, can result in a rotation of the first lever 6404 about the first pivot 6406. The rotation of the first lever 6404, in turn, applies a tensional force along a first cable 6416 of the pulley system 6414. The force is applied to the second lever 6408 according to the particular pulley configuration, resulting in an induced rotation of the second lever 6408. Rotations of the first and second levers 6404, 6408 apply respective reaction force elements to the user's body by way of the resilient pads 6412 of the levers 6404, 6408. Thus, a first inward force applied along one side of the suspension system 6400 in response to an impact force, induces a second inward force applied along an opposite side of the suspension system 6400. An opposing second system of rotating levers and pads is similarly joined by a second cable 6424 and respond to impact forces in a similar manner, but in opposing directions. In at least some embodiments, multiple pulley systems can be applied along a single baseline, e.g., along a front-to-back and/or along a side-to-side, and/or any direct in between.

FIGs. 65A-65B, which do not form part of the present invention, depict bottom and side views of an embodiment of another helmet suspension system 6500. The suspension system 6500 includes an array of pads 6502 disposed around a user's head. An array of lever, e.g., scissor assemblies 6504 are provided between the array of pads 6502 and an interior surface of a helmet shell 6506. The scissor assemblies 6504 can include rigid, semi-rigid, and/or flexible lever arms rotationally joined together, e.g., along a pivot axis, to rotate in a scissor-like fashion about the pivot axis. In some embodiments, each lever of the pair of lever arms includes a resilient pad 6502. The resilient pad 6502 is positioned, attached and/or otherwise integrally formed at a position along the lever arm that brings the pad 6502 into contact with a user's anatomy during use. In some embodiments, at least some of the scissor assemblies 6504 are independent, e.g., in that operation of one scissor assembly 6504 can occur without interrupting another scissor assembly 6504. Alternatively or in addition, one or more of the scissor assemblies 6504 can be interlinked and/or otherwise configured so that operation of one of the scissor assemblies 6504 induces a response in at least one of the other scissor assemblies 6504. For example, one end of adjacent pairs of scissor assemblies 6504 can be applied to, joined and/or other otherwise attached a common pad 6502.

In some embodiments, a pivot axis of at least one of the lever assemblies 6504 can be positioned along an outer portion of the helmet suspension system, such that an opening formed by the scissors 6504 faces a user's head. For example, the pivot can be located at a wheel 6508 configured to roll along an interior surface of the helmet shell 6506, while outer ends of the lever arms can contact resilient pads 6502 that abut the user's head. Alternatively or in addition, the pivot can be located at or near the resilient pad 6502, such that the opening formed by the scissors 6504 faces an interior surface of the helmet 6506. It is understood that some embodiments can include combinations of different lever configurations, such as alternate-facing scissor assemblies 6504 - one facing towards the user's head, another facing away from the user's head.

In the illustrative example, opposing ends of adjacent pairs of scissor assemblies 6504 abut the interior surface of the helmet 6506. In at least some embodiments, the scissor assemblies 6504 include a relatively low friction mechanism, such as a wheel 6508, a bearing, a ball bearing, a caster, and the like. In at least some embodiments, wheels 6508 of the low friction mechanism roll along tracks 6510 or grooves formed along an interior surface of the helmet.

Some configurations can include linkages between one or more of the scissor assemblies and the helmet and/or other scissor assemblies. Linkages can include any of the variants disclosed herein, e.g., including spring linkages, levers, rigid links, pulleys, and the like. Such linkages can include, without limitation, a first suspension assembly 5900 (FIG. 59) and/or a second suspension assembly 6000 (FIG. 60).

In operation, a force applied to one side of the helmet 6506 compresses pairs of scissors 6504 adjacent to a point of impact. The compression of some of the pairs of scissors 6504 urges the resilient pads 6502 inward toward the user's head. A group of springs 6512 and/or dampers can be applied along one or more of the pairs of scissors 6504 to facilitate energy transfer in reaction to collisions.

In some embodiments, the suspension system includes multiple arrays of padded scissor assemblies 6504. For example, the arrays 6504 can be provided in respective transverse planes along a central vertical axis. Accordingly, the scissor arrays 6504 can be stacked to provide support over an extended arc of a dome of the user's head.

FIG. 66A, which does not form part of the present invention, depicts a front view of an embodiment of another example of a force processing system 6600 disposed within a helmet. The force processing system 6600 is attached or otherwise anchored to an interior surface of a protective helmet shell 6602 through a pulley system 6604. The pulley system 6604 includes one or more wires, cables, ropes, strings, and the like 6606, attached between an annular pad 6608 and the helmet by way of respective pulleys 6610. In some embodiments, the pulleys include non-circular pulleys or cams 6612. The cams 6612 are configured to rotate in response to a change in tension along the pulley cable 6606. The pulley cable 6606 can include a resilient or spring member 6616. Beneficially, rotation of the cam 6612 changes a rate of expansion and/or compression of the spring 6616. In such a manner, the suspension system 6604 can provide a variable reactive force based on one or more of the spring 6616, the annular pad 6608, and the cam 6612.

In operation, a vertically downward force applied at a top portion of the helmet 6602 moves the helmet 6602 in a direction towards a top portion of a user's head 6620. In a relative sense, the head 6620 moves upward towards the helmet shell 6602. The relative movement of the head 6620 applies a tension to the pulley cable 6606. The tension rotates the cam 6612 and expands the spring 6616, thereby storing mechanical energy in the spring.

FIG. 66B, which does not form part of the present invention, depicts a more detailed portion of embodiments of a cam 6612 of the helmet suspension system 6600 depicted in FIG. 66A. The cam 6612 provides a variable tension pulley, whereby the tension is based at least in part on a shape of the cam.

FIG. 66C, which does not form part of the present invention, depicts a top view of the helmet suspension system placed on a head portion of a user. As illustrated, the annular pad 6608 rests along a crown portion of the user's head.

FIG. 67A depicts a schematic representation of an example lever 6700. The lever 6700 includes an elongated member 6702. The elongated member 6702 may be straight, bent, angled, or any combination of straight and curved segments. The elongated member includes a pivot point 6708 about which the elongated member moves about a fulcrum. The movement can be confined to a plane and/or unrestricted, e.g., as movement about a ball-and-socket joint, or about an angular point. The elongated member 6702 extends between a first end 6704 and a second end 6706. In at least some embodiments a first end portion 6710 is positioned at the first end 6704. Alternatively or in addition, a second end portion 6712 is positioned at the second end 6706. It is understood that one or more of the end portions 6710, 6712 can include a separate member joined and/or otherwise attached to its respective end portion 6710, 6712. Alternatively or in addition, the end portions are formed together with the elongated member, e.g., as an injection molded, 3D printed, machined, thermoformed, or any other suitable fabrication and/or construction process.

A reference line can be formed between the elongated ends 6704, 6706. In at least some embodiments, one or more of the end portions includes a surface, e.g., a bearing surface, adapted to abut a portion of a body and/or another member, such as a resilient material placed between the surface and the portion of the body. In particular, the surface can form an angle with the reference line that is other than 0 deg. or 180 deg. In at least some embodiments one or more of the surfaces of the end portions 6710, 6712 do not lie within a plane containing the reference line. In at least some embodiments one or more of the surfaces of the end portions 6710, 6712 are not parallel with the reference line.

It should be understood that the end portions may extend in one or more directions, e.g., laterally away from the elongated member. Such extensions may be linear, e.g., perpendicular to an axis of the elongated member, and/or to the reference line. Alternatively or in addition, the extensions may be curved, e.g., extending away from an axis of the elongated member according to a curve. In such instances, the foregoing disclosure of a surface being non-parallel with the reference line can apply to a cross-section.

FIG. 67B depicts another lever 6752 having an elongated member extending between two ends 6754, 6756, and a reference line extending between the two ends. First and second end portions 6756, 6760 are positioned at the respective ends. At least one of the end portions 6760 is non-planar. In at least some embodiments a cross section of bearing surface of the end portion 6760 presents a curve. A reference tangent 6755 can be made at a point along the surface, such that the tangent is not parallel to or collinear with the reference line 6764.

FIG. 68 depicts a schematic representation of another example lever 6800. The lever 6800 includes an elongated member 6802. The elongated member 6802 may be straight, bent, angled, or any combination of straight and curved segments. The elongated member includes a pivot point 6808 about which the elongated member moves about a fulcrum. The movement can be confined to a plane and/or unrestricted, e.g., as movement about a ball-and-socket joint, or about an angular point. The elongated member 6802 extends between a first end 6804 and a second end 6806. In at least some embodiments a first end portion 6810 is positioned at the first end 6804. It is understood that the end portion 6810 can include a separate member joined and/or otherwise attached to the end portion 6810. Alternatively or in addition, the end portion is formed together with the elongated member, e.g., as an injection molded, 3D printed, machined, thermoformed, or any other suitable fabrication and/or construction process.

A reference line can be formed between the ends 6804, 6806. In at least some embodiments, the end portion includes a surface, e.g., a bearing surface, adapted to abut a portion of a body and/or another member, such as a resilient material placed between the surface and the portion of the body. In particular, the surface can form an angle with the reference line that is other than 0 deg. or 180 deg. In at least some embodiments the surface of the end portion 6810 does not lie within a plane containing the reference line 6814. In at least some embodiments the surface of the end portions 6810 is not parallel with the reference line 6814.

It should be understood that the end portion 6810 may extend in one or more directions, e.g., laterally away from the elongated member. Such extensions may be linear, e.g., perpendicular to an axis of the elongated member, and/or to the reference line. Alternatively or in addition, the extensions may be curved, e.g., extending away from an axis of the elongated member according to a curve. In such instances, the foregoing disclosure of a surface being non-parallel with the reference line can apply to a cross-section.

It is understood that virtually any material has an elastic region depending upon a magnitude of an applied force. Namely, an elastic deformation is a change in shape and/or size of a material induced by a relatively low stress that is recoverable after the stress is removed. A plastic region of deformation can be achieved in least some materials, by applying a relatively high stress, e.g., above or beyond the elastic region. It should be understood that such terms as used herein presume that the elastic regions of the materials fall within force ranges that allow the materials to be used for their elastic properties without causing damage or injury to a protected item, such as a human head.

FIGs. 69A-69D depict, respectively, front, side, bottom and top views of yet another alternative helmet system 6900. The helmet system 6900 includes a protective shell 6902 defining an opening 6903 and a shock abatement assembly 6904 positioned at least partially within the opening 6903. The example shock abatement assembly 6904 includes six lever assemblies 6906. It is understood that in other embodiments, shock abatement assemblies 6904 can include greater or fewer numbers of lever assemblies. Moreover, although the example lever assemblies 6906 are positioned vertically around a central axis, other configurations and/or orientations are possible, such as horizontal alignments, angled alignments, combinations of various alignments, with respect to the axis, with respect to each other, and so on.

The example lever assembly 6906 includes an upper end portion 6910 and a lower end portion 6912. In at least some embodiments, one or more of the upper and lower end portions 6910, 6912 includes a deformable component, such as a resilient pad, or a spring, or a combination of resilient pads, springs, and the like. The lever assembly 6906 further includes a torsion spring 6918. In at least some embodiments, the torsion spring 6918 includes an upper extension or arm 6914 extending from one end of the torsion spring 6918 to the upper end portion 6910. Alternatively or in addition, the torsion spring 6918 includes a lower extension or arm extending from another end of the torsion spring 6918 to the lower end portion 6912. Alternatively or in addition, one or more of the upper or lower end portions 6910, 6912 can be joined to the torsion spring 6918 by one or more other members, such as elongated rigid or semi-rigid members, linkages, and the like.

The example shock abatement assembly 6904 further include a deformable member in the form of an o-ring 6922 in communication with the upper end portions 6910. In operation, a vertically directed downward impact or collision force upon a top of the shell 6902 forces the shell 6902 downward with respect to a user's head (not shown). The user's head, in turn, pushes upward against the top end portions 6910, effectively pushing them upward and outward. The torsion springs 6918 can be attached to the protective shell 6902 by way of a mounting bracket 6920. The upward push against the top end portions 6910 induces an outward rotation of the top end portions 6910. The outward rotation deforms the torsion spring, e.g., rotating one end of the spring 6918 with respect to the other end. Deformation of the spring can translate at least a non-trivial portion of a kinetic energy of a collision to a potential energy stored within the torsion spring 6918.

It is understood that in at least some embodiments, one or more of the torsion spring extension arms 6914 can be flexed or otherwise deformed in response to the impact force to convert yet another portion of the kinetic energy of the collision into a potential energy of the spring. In at least some embodiments, the lever assemblies can respond to impacts from other directions, such as vertical impacts, slanted impacts and/or lateral impacts.

Any of the deformable members disclosed herein can include a compressible element. The compressible element can include one of an elastic property, an inelastic property, or a combination of elastic and inelastic properties. It is understood that compressibility of the deformable member can result from one of a bulk material property, a geometry or shape, or a combination thereof. The compressible element can include any form of springs and/or shapes, such as corrugated shapes. In at least some embodiments, the compressible element can include a compressible material. Examples of compressible materials include, without limitation, one of a gas, a liquid, a solid, a gel, a foam, and combinations thereof, resilient materials, compliant materials. Alternatively or in addition, the deformable member can include a deformable system or assembly. Examples of deformable systems and/or assemblies can include airbag systems, and the like.

It is understood that any of the levers disclosed herein can include levers having a fulcrum placed in a midsection, e.g., between the ends, sometimes referred to as a class 1 lever. An effort applied to one side of the fulcrum acts upon a resistance or load on the other side. A mechanical advantage of the class 1 type lever can be greater than, less than or equal to 1. Alternatively or in addition, any of the levers disclosed herein can include levers having resistance or load in the middle, e.g., between a fulcrum and an end at which an effort is applied, sometimes referred to as class 2 levers. A mechanical advantage can be greater than 1, sometimes referred to as a force multiplier lever. Alternatively or in addition, any of the levers disclosed herein can include levers having an effort applied to a mid-section, with a resistance or load at one side of the effort and a fulcrum located at another side, sometimes referred to as class 3 levers. A mechanical advantage can be less than 1, sometimes referred to as a speed multiplier lever. It is understood that in at least some embodiments, combinations of one or more of the different classes of levers can be combined within a common shock abatement system.

Beneficially, the various shock abatement systems disclosed herein facilitate mitigation of impact forces by one or more of deceleration, increasing a reaction distance and/or a extending a reaction time based on an impact force. In at least some embodiments, one or more of the deformable components, the mechanically actuated components contribute to a deceleration of a protective system in reaction to an impact, e.g., a collision force. Reaction distances can include one or more of relative distances between a protected item, e.g., a head, and a protective shell, e.g., a helmet. Alternatively or in addition, reaction distances can include one or more of distances traversed by one or more components of the shock abatement systems. For example, these distances can include displacements based on activation of mechanisms, such as the levers, the pulleys, the screws, the inclined planes, and the like. It is further understood that in at least some embodiments, any of the various configurations of the shock abatement systems disclosed herein can be contained entirely within and/or shielded entirely by the protective shell. Namely, the various shock abatement systems can be entirely housed within a helmet.

In at least some embodiments, no portion of a shock abatement system of a protective helmet system extends below a head portion and/or a neck portion of a body when the protective helmet system is worn upon the head portion and/or the neck portion of the body. For example, none of the levers, the deformable members of the like, extend below the head and/or neck. It is understood that a lever assembly can be positioned entirely within an interior region of a protective shell. Alternatively or in addition, a portion of the lever assembly can be positioned within the interior region of the protective shell, while another portion of the lever assembly is not positioned within the interior region. In some embodiments, the entire lever assembly can be positioned external to a protective shell. Alternatively or in addition, the lever assembly can serve as a protective shell or cage, without necessarily requiring a separate shell.

The helmet system includes a machine that responds to a collision between an external surface of the helmet system and a foreign object, by providing a controlled movement that redistributes energy of the collision. The redistribution of the collision energy results in an absorption and/or dissipation of a non-trivial portion of the collision energy in one or more directions that differ from a direction of the collision, sometimes referred to as a line of impact. The machines can include, without restriction, any of the example arrangements of levers disclosed herein. In some embodiments, the helmet system includes an assembly of a protective shell and a lever system, arranged such that the protective shell forms at least a portion of the external surface of the helmet system exposed to the collision. Alternatively or in addition, the assembly of the protective shell and the lever system can be arranged such that the lever system forms at least a portion of the external surface of the helmet system exposed to the collision. In other embodiments, the helmet system includes a lever system that provides the entire exterior surface exposed to the collision. It is understood that in at least some embodiments, at least a portion of the lever system can serve as at least a portion of a protective shell.

In some embodiments, a resulting movement of at least one portion of any of the example machines disclosed herein, such as levers, gears, planes, and the like, in response to a collision or impact force, occurs in an orderly manner. Collisions include chaotic events, e.g., in which one or more parameters, such as a location of a point contact and/or a number(s) of points of contact between the protective shell and/or shock abatement systems and another body are unknown beforehand. Similarly, one or more other parameters, such as relative velocities, direction(s) and/or elasticities, e.g., of the other body, may also unknown beforehand. Despite such unknowns, at least some of the example devices, systems, processes and/or techniques disclosed herein provide an orderly response to a disorderly or chaotic collision.

By way of example, an orderly response can include a movement according to a predetermined direction and/or orientation of at least one portion of any of the example machines disclosed herein, such as levers, gears, planes, and the like, in response to a collision or impact force, occurs in an orderly manner. Alternatively or in addition, orderly responses can include movements subject to predetermined constraints. By way of non-limiting example, such predetermined constraints can include a constrained distance of travel, a constrained rotation or pivot, a constrained deformation, and the like. Such constraints can include one or more of a constrained distance or range of distances, a constrained angle or range of angles, a constrained deformation, and the like.

By way of further example, is it understood that rollable engagements between pro-tectives shells and shock abatement assemblies can be constrained by size, direction and/or orientation of rollable bearings, e.g., wheels, that form a frictional engagement between the protective shells and the shock abatement assemblies. Alternatively or in addition, rollable and/or slideable engagements between protective shells and shock abatement assemblies can be constrained by other features, such as tracks, e.g., within which nubs, slideable bearings and or wheels travel.

It is understood that one or more of the illustrative orderly responses can be used as a design parameter, e.g., in designing a system based on one or more of an intended application, e.g., construction helmet, football helmet, and the like, and anticipated collisions. Anticipated collisions can be based on anticipated maximum events, such as may be specified, e.g., by a standards body, and/or determinable beforehand, e.g., based on the intended application. Thus, a construction or mining helmet that may be designed for primarily vertical impacts of a specified maximum kinetic energy, maximum mass, maximum speed, impact duration, acceleration, size, shape, and the like. Ordered movements, can include one or more of rotations of levers, deformation of a helmet shell and/or of the levers, translation of a lever with respect to the helmet shell and so on.

According to an example embodiment, a device includes a system having a force-redirecting mechanism. The force-redirecting mechanism, when placed between a protective shell and a body, facilitates a controlled distribution of a portion of a collision force directed toward the body. The collision force applied to an external surface of the protective shell.

In one embodiment, the device an inclined plane that facilitates the controlled distribution of the portion of the collision force directed toward the body. In some embodiments, an angle formed between a surface of the inclined and a direction of the collision force determines a mechanical advantage applied to the controlled distribution of the portion of the collision force directed toward the body.

In another embodiment, the device comprises a lever rotatable about a pivot, and wherein the lever facilitates the controlled distribution of the portion of the collision force directed toward the body.

In one embodiment, a positioning of the pivot along a central axis of the lever determines a mechanical advantage applied to the controlled distribution of the portion of the collision force directed toward the body. In some embodiments, the device further includes a spring that stores mechanical energy in response to a rotation of the lever about the pivot.

In one embodiment, the lever comprises a compressive member that when positioned between a portion of the lever and the body, absorbs energy associated with the portion of the collision force directed toward the body.

In one embodiment, the compressive member is positioned at a first end of the lever.

In one embodiment, the compressive member comprises a resilient material.

In one embodiment, the resilient material comprises one of a spring, a foam, a sponge, an elastomer, a composite, or any combination thereof.

In one embodiment, the compressive member comprises a first portion having a first modulus of resilience and a second portion having a second modulus of resilience.

In one embodiment, the first portion and the second portion of the compressive member are the same material.

In one embodiment, the first portion of the compressive member comprises a first density and the second portion of the compressive member comprises a second density different from the first density.

In one embodiment, the first density is based on a first porosity of the first portion of the compressive member, a first geometry of the first portion of the compressive member or a combination thereof, and

In one embodiment, the second density is based on a second porosity of the second portion of the compressive member, a second geometry of the second portion of the compressive member or a combination thereof.

In one embodiment, the device further including another compressive member positioned at a second end of the lever, wherein the other compressive member absorbs energy associated with the portion of the collision force directed toward the body.

In one embodiment, the compressive member comprises an inclined plane that facilitates the controlled distribution of the portion of the collision force directed toward the body.

In one embodiment, the lever is rotatably attached to the protective shell allowing the lever to rotate about the pivot.

In one embodiment, the device further including a mounting frame, wherein the mounting frame is disposed between an interior surface of the protective shell and the system, and wherein the lever is rotatably attached to the mounting frame.

In one embodiment, the mounting frame frictionally engages the interior surface of the protective shell when mounted therein.

In some embodiments, the mounting frame comprises a pivot cavity that receives an axial extension allowing the lever to rotate about the pivot when mounted thereon.

In one embodiment, the frame comprises a curved portion defining an wedge surface that frictionally engages the interior surface of the protective shell when mounted therein, and wherein the wedge surface provides a wedge that facilitates a sustainment of the frictional engagement between the curved portion and the interior surface of the protective shell in response to the collision force.

In one embodiment, the wedge surface comprises one of a curved surface, an inclined plane, or any combination thereof.

In one embodiment, which does not form part of the present invention, the force-redirecting mechanism comprises a pulley.

In one embodiment, which does not form part of the present invention, the system comprises another lever rotatable about another pivot, and wherein the force-redirecting mechanism comprises a cable connecting the lever and the other lever via the pulley.

In one embodiment, the system comprises a first group of levers, each rotatable about a respective pivot, and wherein the first group of levers facilitates the controlled distribution of the portion of the collision force directed toward the body.

In one embodiment, the device further including a first spring that stores mechanical energy to obtain stored energy in response to a rotation of a lever of the first group of levers.

In one embodiment, the first spring deforms in response to a change in relative displacement between ends of more than one lever of the first group of levers, wherein the first spring is deformed in response to the collision force, and wherein the stored energy comprises a portion of the collision force transferred to the first spring.

In one embodiment, the first spring positioned at a first end of the first group of levers, and wherein the first spring is expanded in reaction to the collision force.

In one embodiment, the device further including a second spring positioned at a second end of the first group of levers, wherein the second spring is expanded in reaction to the collision force.

In one embodiment, one of the first spring, the second spring or both comprise an elastomer.

In one embodiment, the elastomer comprises an enclosed loop.

In one embodiment, the device further including a leaf spring, wherein the leaf spring facilitates the controlled distribution of the portion of the collision force directed toward the body.

In one embodiment, the leaf spring comprises an elastic lever rotatable about a pivot, and wherein one of a deformation of the elastic lever, a rotation of the elastic lever or both facilitate the controlled distribution of the portion of the collision force directed toward the body.

In one embodiment, the deformation of the elastic lever, the rotation of the elastic lever or both facilitates a transformation of a kinetic energy to a potential energy based on the collision force.

In one embodiment, the leaf spring comprises a lever of the first group of levers.

In one embodiment, the first group of levers are disposed about a central axis, and wherein the first group of levers, in reaction to a force substantially directed along the central axis facilitate a distribution of the force to a first group of force components directed at a non-zero angle with respect to the central axis.

In one embodiment, the nonzero angle is greater than about 15 degrees.

In one embodiment, the first group of levers defines an open-ended cavity configured to receive a portion of a head of the body.

In one embodiment, the device further including a second group of levers, wherein the first group of levers and the second group of levers are disposed about a central axis, wherein first axes of the pivots of the first group of levers disposed about the central axis are substantially aligned within a first transverse plane, and wherein second axes of pivots of the second group of levers disposed about the central axis are substantially aligned within a second transverse plane.

In one embodiment, the first transverse plane and the second transverse plane are displaced along the central axis.

In one embodiment, a combination of the first group of levers and the second group of levers defines an open-ended cavity configured to accommodate a portion of a head of the body.

In one embodiment, the device further including a first spring that stores a first mechanical energy to obtain a first stored energy in response to a rotation of a lever of the first group of levers, and a second spring that stores second mechanical energy to obtain a second stored energy in response to a rotation of a lever of the second group of levers.

In one embodiment, the second spring comprises a second elastomer positioned at a first end of the second group of levers, and wherein the second spring is expanded in response to the collision force.

In one embodiment, the device further including a third spring including a third elastomer positioned at a second end of the second group of levers, wherein the third spring is deformed in response to the collision force.

In one embodiment, the first group of levers comprises a first group of pads that facilitate the distribution of the force about a first portion of a perimeter of a head portion of the body.

In one embodiment, the second group of levers comprises a second group of pads that facilitate the distribution of the force about a second portion of the perimeter of the head portion of the body.

In one embodiment, one of the first group of pads, the second group of pads or both comprise a deformable member that absorbs energy in reaction to the portion of the collision force directed toward the body.

In one embodiment, the device further including a leaf spring, wherein the leaf spring facilitates the controlled distribution of the portion of the collision force directed toward the body.

In one embodiment, the leaf spring comprises an elastic lever rotatable about a pivot, and wherein one of a deformation of the elastic lever, a rotation of the elastic lever or both facilitate the controlled distribution of the portion of the collision force directed toward the body.

In one embodiment, the deformation of the elastic lever, the rotation of the elastic lever or both facilitates a transformation of a kinetic energy to a potential energy based on the collision force.

In one embodiment, which does not form part of the present invention, the leaf spring comprises a lever of the second group of levers.

In one embodiment, the system comprises a pulley that responds to an external collision force applied to an exterior surface of the protective shell, wherein the pulley facilitates the controlled distribution of the portion of the collision force directed toward the body.

In one embodiment, which does not form part of the present invention, a configuration of the pulley determines a mechanical advantage applied to the controlled distribution of the portion of the collision force directed toward the body.

In one embodiment, the device further including an adjustable fit mechanism, wherein the adjustable fit mechanism facilitates a secure placement of the system upon the body.

In one embodiment, the adjustable fit mechanism facilitates a secure placement of the system upon a head of the body.

In one embodiment, the protective shell comprises a helmet, and wherein the system is disposed between the helmet and a head portion of the body.

In one embodiment, which does not form part of the present invention, the system comprises a lever rotatable about a pivot and a dampening mechanism, wherein the dampening mechanism dissipates energy in reaction to a rotation of the lever about the pivot.

In one embodiment, which does not form part of the present invention, the dampening mechanism comprises one of a gear, a screw, a fluid chamber, a piston or any combination thereof.

According to another example embodiment, a system, when positioned between a body and a protective member having an external surface that receives an impact force, facilitates a redistribution of the impact force transferred to the body via the protective member; and a contact mechanism in communication with the system, wherein the contact mechanism engages an interior surface of the protective member, and wherein one of the system, the contact mechanism or both facilitate a shear displacement between the protective member and the system in response to the impact force.

In one embodiment, the contact mechanism comprises a slideable structure that provides a slideable engagement between the one of the system, the contact mechanism or both and the interior surface of the protective member.

In one embodiment, the slideable structure comprises a slippery surface that provides a low-friction interface to the interior surface of the protective member.

In one embodiment, the slippery surface comprises a convex surface that restricts an area of slideable engagement to a tangential region of the convex surface that abuts the interior surface of the protective member.

In one embodiment, the contact mechanism comprises a rollable structure that provides a rolling engagement between the one of the system, the contact mechanism or both and the interior surface of the protective member.

In one embodiment, the rollable structure comprises one of a wheel, a caster, a bearing, a ball bearing or any combination thereof.

In one embodiment, the system comprises a support frame and a lever assembly supported by the support frame.

In one embodiment, the lever assembly comprises a lever rotatable about a pivot.

In one embodiment, the lever assembly comprises a spring that stores mechanical energy based on a rotation of the lever about the pivot.

In one embodiment, which does not form part of the present invention, the system further including a dampening mechanism, wherein the dampening mechanism dissipates energy based on a rotation of the lever about the pivot.

In one embodiment, which does not form part of the present invention, the dampening mechanism comprises one of a gear, a screw, a fluid chamber, a piston or any combination thereof.

In one embodiment, the contact mechanism is attached to the lever assembly.

In one embodiment, the lever assembly comprises opposing levers that rotate in opposition about a common pivot axis in response to the impact force.

In one embodiment, rotation of the opposing levers in response to the impact force deforms a resilient element.

In one embodiment, the resilient element comprises a resilient material, a spring, or any combination thereof.

In one embodiment, which does not form part of the present invention, the system further including a dampening mechanism that dissipates energy in reaction to a relative rotation of the opposing levers about the common pivot axis.

In one embodiment, the resilient element comprises a first spring, presenting a first spring constant in response to a compressive force that compresses the lever assembly between the protective member and the body.

In one embodiment, the resilient element comprises a second spring, presenting a second spring constant in response to a decompressive force that decompresses the lever assembly between the protective member and the body.

In one embodiment, one of the first spring the second spring, or both includes a torsion spring.

In one embodiment, the first spring and the second spring comprise a nested arrangement of torsion springs.

In one embodiment, the lever assembly comprises a group of opposing levers attached to the support frame, and wherein the group of opposing levers rotate in opposition about respective pivot axes in response to the impact force.

In one embodiment, the support frame comprises a first arcuate member.

In one embodiment, the first arcuate member is substantially rigid.

In one embodiment, the first arcuate member is flexible.

In one embodiment, the first arcuate member comprises a group of interlinked rigid segments, and wherein a first rigid segment of the group of rigid segments is moveable with respect to a second rigid segment of the group of rigid segments.

In one embodiment, the system further including an energy absorber coupled between the first rigid segment and the second rigid segment, wherein the energy absorber absorbs energy in response to a movement of the first rigid segment, the second rigid segment, or both the first rigid segment and the second rigid segment.

In one embodiment, the energy absorber comprises one of a spring, a damper, or both.

In one embodiment, the support frame comprises a second arcuate member.

In one embodiment, the first arcuate members and the second arcuate member are rotationally displaced by a nonzero angle about a central axis.

In one embodiment, the lever assembly comprise a first lever mechanism coupled to the first arcuate member providing shear displacement along a first baseline of the first arcuate member via the contact mechanism, and a second lever mechanism coupled to the second arcuate member that provides shear displacement along a second baseline of the second arcuate member via the contact mechanism.

In one embodiment, the system further including a deformable member positioned adjacent to the body during use.

In one embodiment, the deformable member is positioned between the lever assembly and the body during use.

In one embodiment, the deformable member is positioned between the support frame and the body during use.

In one embodiment, the deformable member comprises a resilient material.

In one embodiment, the resilient material comprises one of a spring, a foam, a sponge, an elastomer, a composite, or any combination thereof.

In one embodiment, the deformable member comprises a first portion having a first modulus of resilience and a second portion having a second modulus of resilience.

In one embodiment, the first portion and the second portion of the deformable member are the same material.

In one embodiment, the first portion of the deformable member comprises a first density and the second portion of the deformable member comprises a second density different from the first density.

In one embodiment, the first density is based on a first porosity of the first portion of the deformable member, a first geometry of the first portion of the deformable member or a combination thereof, and wherein the second density is based on a second porosity of the second portion of the deformable member, a second geometry of the second portion of the deformable member or any combination thereof.

In one embodiment, the deformable member comprises an inclined plane that facilitates the redistribution of the portion of the impact force directed toward the body.

According to another example embodiment, a process, which does not form part of the present invention, includes receiving, by a system, a collision force responsive to an impact encountered at an external surface of a protective shell. The process further includes redistributing, by the system, a portion of the collision force transferred toward a body, wherein the redistributing of the transferred force comprises redirecting the collision force applied along a first direction to a redistribution force applied along a second direction.

In one embodiment, the system comprises a mechanism, and wherein the redistributing of the portion of the collision force comprises applying a mechanical advantage of the mechanism.

In one embodiment, the mechanism comprises a lever, wherein the mechanical advantage is based on a placement of a fulcrum along a length of the lever, and wherein the redistributing of the portion of the collision force comprises rotating the lever about the fulcrum responsive to the collision force.

In one embodiment, the process, which does not form part of the present invention, further includes reducing a portion of the collision force transferred toward a body based on the redirecting of the transferred force along the second direction, wherein the second direction differs from the first direction.

In one embodiment, the second direction differs from the first direction by more than about 15 degrees.

In one embodiment, the second direction differs from the first direction by about 90 degrees.

In one embodiment, the second direction differs from the first direction by more than 90 degrees.

In one embodiment, the reducing of the portion of the collision force transferred toward a body comprises absorbing energy of the collision force.

In one embodiment, the absorbing of the energy of the collision force comprises transforming a kinetic energy to a potential energy based on the collision force.

In one embodiment, the absorbing of the energy of the collision force comprises changing a kinetic energy to one of a potential energy, a mechanical energy, a thermal energy, an acoustic energy, an electrical energy, a magnetic energy, or any combination thereof.

In one embodiment, the absorbing of the energy comprises deforming of a resilient member.

In one embodiment, the deforming of the resilient member comprises compressing the resilient member.

In one embodiment, the deforming of the resilient member is based on application to one of a compression force, a tension force, a shear force or any combination thereof.

In one embodiment, the deforming of the resilient member comprises bending a leaf spring.

In one embodiment, the leaf spring is rotatable about a pivot axis, wherein the redistributing of the portion of the collision force comprises rotating the leaf spring about the pivot axis responsive to the collision force.

In one embodiment, the reducing of the portion of the collision force transferred toward a body comprises dissipating energy of the collision force.

In one embodiment, the dissipating of the energy comprises a mechanical energy, an acoustic energy, an electrical energy, a magnetic energy, or any combination thereof.

In one embodiment, the system comprise an arcuate portion positionable about a portion of a body when worn upon the body, wherein the arcuate portion provides a group of compressive force components at different positions and at different angles along a length of the arcuate portion, and wherein the compressive force components facilitate the redirecting of the collision force.

In one embodiment, the arcuate portion is positionable about a head portion of the body, and wherein the group of compressive components are applied contemporaneously along opposing sides of the head.

In one embodiment, the collision force is received along a first direction, and a direction of a first compressive component of the group of compressive components forms a first angle to the first direction.

In one embodiment, a direction of a second compressive component of the group of compressive components forms a second angle to the first direction that differs from the first angle.

In one embodiment, the collision force comprises a vertical force, and wherein a compressive component of the group of compressive components comprises a horizontal force.

In one embodiment, the redistributing of the portion of the collision force comprises rotating a gear.

In one embodiment, the redistributing of the portion of the collision force comprises turning a screw.

In one embodiment, the redistributing of the portion of the collision force comprises deform a spring.

In one embodiment, the redistributing of the portion of the collision force comprises compressing a resilient material.

In one embodiment, the redistributing of the portion of the collision force comprises displacing a fluid.

In one embodiment, the fluid comprise a gas.

In one embodiment, the system comprises an inclined plane, and wherein the redistributing of the portion of the collision force comprises applying the collision force to the inclined plane.

In one embodiment, the system comprises a mechanism, and wherein the mechanism extends a distance over which the collision force is applied.

In one embodiment, the system comprises a mechanism, and wherein the mechanism extends a time over which the collision force is applied.

In one embodiment, the system comprises a group of interconnected rigid links, wherein some rigid links of the group of interconnected rigid links are pivotably connected to other rigid links of the group of interconnected rigid links, and wherein the redistributing of the portion of the collision force comprises pivotably changing a configuration of the group of interconnected rigid links in response to the collision force.

According to another example embodiment, a process includes providing a system, that when placed between a protective shell and a body, redistributes a collision force applied along a first direction to an external surface of the protective shell, to a group of redistributed forces applied to the body along different directions.

In yet another embodiment, a device includes a helmet defining an open ended cavity adapted to receive a portion of a human body and a shock abatement assembly disposed at least partially within the open ended cavity. The shock abatement assembly includes a group of lever machines, wherein a first lever machine of the group of lever machines comprises an elongated member extending along a length between a first end and a second end. The shock abatement assembly further includes a group of fulcra fixedly positioned with respect to the helmet, wherein the group of fulcra pivotally engage the group of lever machines, wherein a first fulcrum of the group of fulcra engages the first lever machine of the group of lever machines along the length of the elongated member, wherein the first lever machine of the group of lever machines rotates freely about the first fulcrum of the group of fulcra according to a controlled movement in response to an application of an impact force based on a collision between the helmet and a foreign object to obtain a lever machine response, wherein the application of the impact force occurs along a first direction to an exterior surface of the helmet. The shock abatement assembly includes a first end portion at a first end of the first lever machine of the group of lever machines, wherein the first end portion defines a surface having a non-parallel orientation to a line joining the first and second ends, and in response to the application of the impact force, facilitates a reaction force including a directed force determined in part by the first direction and in part by the non-parallel orientation of the surface. The shock abatement assembly includes a deformable member engaging the first lever machine of the group of lever machines at a first position spaced apart from the first fulcrum of the group of fulcra, wherein the deformable member is deformed to obtain a deformation responsive to the lever machine response, wherein the deformation occurs in a second direction different from the first direction, and wherein the deformation absorbs a non-trivial portion of a kinetic energy of the collision.

In one embodiment, the deformable member comprises a spring that stores the non-trivial portion of the kinetic energy in response to a rotation of the first lever machine of the group of lever machines about the first fulcrum of the group of fulcra, wherein the spring stores the non-trivial portion of the kinetic energy in response to an expansion of the spring, and wherein the surface comprises a curved surface.

In one embodiment, the spring is in communication between the first lever machine and a second lever machine of the group of lever machines, and wherein rotation of the first and second lever machines in response to the impact force of the collision deforms the spring to store the non-trivial portion of the kinetic energy, wherein the curved surface defines a curve extending away from the elongated member, and wherein the first lever machine of the group of lever machines experiences a rotation about the first fulcrum of the group of fulcra in response to the application of the impact force along the first direction.

In one embodiment, the group of fulcra are disposed within a first plane, wherein the spring comprises an enclosed loop in communication with the first and second lever machines of the group of lever machines, wherein the enclosed loop is deformed in a second plane substantially parallel to the first plane, wherein rotations of the first and the second lever machines of the group of lever machines stretches the enclosed loop, and wherein the first and the second lever machines of the group of lever machines, in response to the rotations, are adapted to provide opposing forces upon the portion of the human body.

In one embodiment, the elongated member of the first lever machine of the group of lever machines comprises a leaf spring extending between the first end and the second end that absorbs another non-trivial portion of the kinetic energy, by way of the first fulcrum of the group of fulcra, associated with the impact force of the collision by bending along the length of the elongated member to allow for a displacement of the first fulcrum of the group of fulcra with respect to the first end and the second end, and wherein one of the elongated member, the first end, the second end, or a combination thereof, comprises a curved portion adapted to conform to an abutting region of the portion of the human body.

In one embodiment, a first end of each lever machine of the group of lever machines is positioned proximal to a top of the helmet, and wherein each lever machine of the group of lever machines extends away from the top of the helmet, such that a second end of each lever machine of the group of lever machines is positioned distal to the top of the helmet, wherein the first lever machine of the group of lever machines is rotatably attached to the helmet, and wherein the first fulcrum of the group of fulcra is fixedly positioned with respect to the helmet in response to the impact force of the collision, allowing the first lever machine of the group of lever machines to rotate about the first fulcrum of the group of fulcra.

In one embodiment, the shock abatement assembly further comprises a lever-mounting frame, wherein the lever-mounting frame comprises an enclosed loop positioned along an interior surface of the helmet and frictionally engaging the interior surface of the helmet along a perimeter, wherein the group of lever machines are removably attached to the lever-mounting frame, and wherein the group of lever machines are rotatably attached to the lever-mounting frame.

In one embodiment, the surface comprises a concave surface, wherein the deformable member comprises a compressible element, and a rotation of the first lever machine of the group of lever machines about the first fulcrum of the group of fulcra provides a mechanical advantage based on a position of the first fulcrum of the group of fulcra along the length between the first end and the second end.

According to yet another example embodiment, a helmet system includes a lever assembly configured to be worn upon a head portion, a neck portion, or both of a human body. The lever assembly includes a lever machine including an elongated member extending along a length between a first end and a second end and having a pivot location, wherein the first end is positioned proximal to a top portion of the helmet system and wherein the second end is positioned distal to the top portion of the helmet system. The lever machine further includes a fulcrum that pivotally engages the elongated member at the pivot location, wherein the fulcrum is securely positioned with respect to the helmet system. The elongated member rotates about the fulcrum, to obtain a lever machine response in response to an impact force applied along a first direction to an exterior surface of the helmet system, wherein the impact force is based on a collision between the helmet system and another object. The lever machine further includes first end portion including a surface fixedly positioned at the first end of the elongated member. The surface comprises a non-parallel orientation to a line joining the first and second ends, and in response to the impact force applied along the first direction, facilitates a reaction force determined in part by the first direction and in part by the non-parallel orientation of the surface. The lever machine further includes a tension spring engaging the lever machine, wherein an elongation of the tension spring based on the lever machine response, absorbs a non-trivial portion of a kinetic energy of the collision, wherein the elongation of the spring occurs in a second direction different from the first direction, and wherein the lever machine response redirects a portion of the impact force applied to the portion of the human body along a second direction different from the first direction.

In one embodiment, the lever assembly comprises a first group of lever machines disposed about a central axis, wherein each lever machine of the first group of lever machines is rotatable about a respective axis of rotation of a first group of axes of rotation, wherein the first group of axes of rotation lie within a first plane orthogonal to the central axis at a first location along the central axis, and wherein the surface comprises a curved surface extending along a curve away from the length of the lever machine.

In one embodiment, the lever assembly comprises a second group of lever machines disposed about the central axis, wherein each lever machine of the second group of lever machines is rotatable about a respective axis of a second group of axes of rotation, and wherein the second group of axes of rotation lie within a second plane orthogonal to the central axis at a second location separated from the first location along the central axis.

In one embodiment, the lever machine response comprises a mechanical advantage based on a ratio of a first length between the pivot location and the first and a second length between the pivot location and the second end, and wherein the lever machine response comprises a controlled movement that allow movement of the elongated member in one direction while preventing movement of the elongated member in another direction.

In one embodiment, the helmet system further includes a shell, wherein the lever machine including a first compressible member at the first end defining the surface and a second compressible member at the second end, wherein one of the first compressible member, the second compressible member, or both, comprises a polymer compressible between the lever machine and one of the portion of the human body, the shell, or both in response to the impact force.

In one embodiment, the lever assembly comprises a group of lever machines disposed about a central axis, wherein each lever machine of the group of lever machines is rotatable about a respective axis of rotation of a group of axes of rotation, and wherein at least one axis of rotation of the group of axes of rotation is one of orthogonal to the central axis, parallel to the central axis, or at a non-parallel angle to the central axis.

In one embodiment, the lever machine comprises a leaf spring defined along the length between the first end and the second end, wherein the leaf spring is bendable along the length in response to the impact force transferred to the leaf spring by way of the fulcrum to facilitate a displacement of the pivot location to the first end and the second end.

According to another example embodiment, a process, which does not form part of the present invention, includes providing, a helmet system including a group of lever machines rotatable about a group of fulcra, wherein top portions of the group of lever machines are proximal to a top portion of the helmet system, wherein bottom portions of the group of lever machines are distal to the top portion of the helmet system, and wherein the group of fulcra are fixedly positioned with respect to the helmet system. At least one lever machine of the group of lever machines rotates about a respective fulcrum of the group of fulcra according to a predetermined machine response in response to an impact force received along a first direction at an external surface of the helmet system, the impact force resulting from a collision between the external surface of the helmet system and another object. A first deformable member of the helmet system, engaging at least one lever machine of the group of lever machines, experiences an expansion in response to a rotating of the at least one lever machine of the group of lever machines according to the predetermined machine response. A second deformable member of the helmet system, disposed at one end of the at least one lever machine of the group of lever machines, experiences a compression based on a reaction to a movement of the at least one lever machine in a second direction different from the first direction. The expansion of the first deformable member and the compression of the second deformable member occur along different directions from the first direction. The expansion of the first deformable member, the compression of the second deformable member, or both absorbs a non-trivial portion of a kinetic energy of the collision.

In one embodiment, the process, which does not form part of the present invention, further includes redirecting a portion of the impact force, wherein the expansion of the first deformable member further comprises transforming the non-trivial portion of the kinetic energy of the collision into a potential energy including a strain energy based on the impact force.

In one embodiment, the expansion of the first deformable member further comprises changing the non-trivial portion of the kinetic energy of the collision into one of a potential energy, a mechanical energy, a thermal energy, an acoustic energy, an electrical energy, a magnetic energy, or any combination thereof.

In one embodiment, the rotating of the at least one lever machine of the group of lever machines is based on a non-planar surface of the second deformable member, the method further including deforming, by the helmet system, a lever machine of the group of lever machines in response to the impact force, wherein the deforming of the lever machine absorbs another non-trivial portion of the kinetic energy of the collision.

In one embodiment, the predetermined machine response facilitates a redirecting of the impact force received along a first direction, and wherein the redirecting of the impact force comprises a transfer force adapted to act upon a human head along at least one other direction different from the first direction.

According to yet another example embodiment, a process, which does not form part of the present invention, includes receiving, by a helmet system including a machine, a collision force along a first direction resulting from kinetic energy of an impact encountered at an external surface of the helmet system, to obtain a received collision force, wherein the helmet system, when worn on a head portion, a neck portion, or both of a body, positions the machine in a proximate relationship to the head portion, the neck portion, or both. The process further includes redistributing, by the helmet system, the received collision force, wherein actuation of the machine occurs responsive to the received collision force, wherein the redistributing of the received collision force is based on the actuation of the machine. A collision energy transferred to the head portion, the neck portion, or both, resulting from the kinetic energy of the impact is reduced based on the actuation of the machine, wherein an impact response of the head portion, the neck portion, or both, is reduced based on the actuation of the machine.

In one embodiment, the machine comprises a mechanical advantage, and wherein the redistributing of the received collision force comprises an application of the mechanical advantage of the machine.

In one embodiment, the machine comprises a group of movable parts, the redistributing of the received collision force further comprises setting into motion at least one movable part of the group of movable parts responsive to the received collision force that facilitate the redistributing of the received collision force.

In one embodiment, the machine comprises a lever, wherein the mechanical advantage is based on a placement of a fulcrum along a length of the lever at a position between opposing ends of the lever, and wherein the redistributing of the received collision force comprises rotating the lever about the fulcrum responsive to the received collision force.

In one embodiment, the process further includes reducing a portion of the received collision force transferred toward the head portion, the neck portion, or both, based on the redistributing of the collision force along a second direction, wherein the second direction differs from the first direction, and where no portion of the machine extends below the neck portion of the body.

In one embodiment, the process further includes reducing a portion of the received collision force transferred toward the head portion, the neck portion, or both, wherein the reducing of the portion of the received collision force transferred toward a body comprises absorbing a portion of the kinetic energy of the impact.

In one embodiment, the absorbing of the portion of the kinetic energy of the impact comprises transforming the portion of the kinetic energy to a potential energy.

In one embodiment, the absorbing of the portion of the kinetic energy of the impact comprises changing the portion of the kinetic energy to one of a potential energy, a mechanical energy, a thermal energy, an acoustic energy, an electrical energy, a magnetic energy, or any combination thereof.

In one embodiment, the absorbing of the portion of the kinetic energy of the impact comprises deforming of an absorbing member.

In one embodiment, the deforming of the absorbing member comprises a bending of a leaf spring.

In one embodiment, which does not form part of the present invention, wherein the redistributing of the received collision force comprises one of an application of a portion of the received collision force to an inclined plane, application of a wedge, a pivoting of a lever, an operation of a pulley, a rotating of a gear, turning of a wheel, a sliding of a bearing, a rolling of a bearing, a turning of a screw, a deforming of a spring, a deforming of a material, a displacement of a gas, a displacement of a fluid, a displacement of a gel, and any combination thereof.

In one embodiment, wherein actuation of the machine extends a distance over which the received collision force is applied.

In one embodiment, actuation of the machine extends a time over which the received collision force is applied.

In one embodiment, which does not form part of the present invention, wherein the machine comprises a group of interconnected mechanical links, wherein some mechanical links of the group of interconnected mechanical links are pivotably connected to other mechanical links of the group of interconnected mechanical links, and wherein the redistributing of the received collision force comprises changing a configuration of the group of interconnected mechanical links in response to the received collision force.

According to yet another example embodiment, a process, which does not form part of the present invention, includes receiving, by a helmet system including a machine, a collision force along a first direction resulting from kinetic energy of an impact encountered between an external surface of the helmet system and a foreign object, to obtain a received collision force, wherein the helmet system, when worn on a head portion, a neck portion or both of a body, positions the machine in a proximate relationship to the head portion, the neck portion or both, and wherein a collision parameter is based on the received collision force. The process further includes selectively actuating the machine based on the collision parameter exceeding at least one threshold, wherein a first portion of the kinetic energy is expended by the actuating of the machine, and wherein the received collision force is redistributed based on the actuation of the machine.

In one embodiment, the collision parameter comprises one of a separation distance, a position, a force, a torque, a time, a velocity, an acceleration, a momentum, an energy or any combination thereof.

According to another example embodiment, a process includes providing a helmet system including a machine, wherein the helmet system is wearable upon a head portion, a neck portion, or both of a body when worn, placing the machine in a proximate relationship to the head portion, the neck portion or both, when worn, and configured to receive a collision force along a first direction resulting from kinetic energy of an impact encountered between an external surface of the helmet system and a foreign object, to obtain a received collision force. The process further includes selectively actuating the machine based on a collision parameter exceeding a threshold, wherein a first portion of the kinetic energy is expended by the actuating of the machine, and wherein the received collision force is redistributed based on the actuation of the machine.

In one embodiment, the collision parameter comprises one of a separation distance, a position, a force, a torque, a time, a velocity, an acceleration, a momentum, an energy or any combination thereof.

According to another example embodiment, a process includes providing a helmet system including a machine, that when placed on a head portion, a neck portion, or both, of a user, positions the machine in a proximate relationship to the head portion, the neck portion, or both, wherein the helmet system receives a collision force along a first direction resulting from kinetic energy of an impact encountered at an external surface of the helmet system, to obtain a received collision force. The helmet system provides a redistributing of the received collision force, wherein the received collision force induces an actuation of the machine. The redistributing of the received collision force is based on the actuation of the machine, wherein a collision energy transferred to the head portion, the neck portion, or both, resulting from the kinetic energy of the impact is reduced based on the actuation of the machine, and wherein an impact response of the head portion, the neck portion, or both, is reduced base on the actuation of the machine.

In one embodiment, the redistributing of the received collision force comprises reducing a portion of the received collision force transferred toward the head portion, the neck portion, or both, based on the helmet system absorbing a portion of the kinetic energy of the impact, and wherein the absorbing of the portion of the kinetic energy of the impact comprises transforming the portion of the kinetic energy to a potential energy.

According to another example embodiment, a shock-abatement system includes a helmet system including a machine, wearable upon a head portion, a neck portion, or both of a body, to position the machine in a proximate relationship to the head portion, the neck portion, or both, and means for redistributing one of a received collision force, a collision energy, or both, responsive to an impact encountered at an external surface of the helmet system, wherein a non-trivial portion of the collision energy transferred to the head portion, the neck portion, or both, resulting from the impact is expended based on actuation of a machine.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. The exemplary embodiments can include combinations of features and/or steps from multiple embodiments. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Although specific embodiments have been illustrated and described herein, it should be appreciated that any arrangement which achieves the same or similar purpose may be substituted for the embodiments described or shown by the subject disclosure. The subject disclosure is intended to cover any and all adaptations or variations of various embodiments, but the scope of protection is defined by the appended claims. Combinations of the above embodiments, and other embodiments not specifically described herein, can be used in the subject disclosure. For instance, one or more features from one or more embodiments can be combined with one or more features of one or more other embodiments. In one or more embodiments, features that are positively recited can also be negatively recited and excluded from the embodiment with or without replacement by another structural and/or functional feature. The steps or functions described with respect to the embodiments of the subject disclosure can be performed in any order. The steps or functions described with respect to the embodiments of the subject disclosure can be performed alone or in combination with other steps or functions of the subject disclosure, as well as from other embodiments or from other steps that have not been described in the subject disclosure. Further, more than or less than all of the features described with respect to an embodiment can also be utilized.

Less than all of the steps or functions described with respect to the exemplary processes or methods can also be performed in one or more of the exemplary embodiments. Further, the use of numerical terms to describe a device, component, step or function, such as first, second, third, and so forth, is not intended to describe an order or function unless expressly stated so. The use of the terms first, second, third and so forth, is generally to distinguish between devices, components, steps or functions unless expressly stated otherwise. Additionally, one or more devices or components described with respect to the exemplary embodiments can facilitate one or more functions, where the facilitating (e.g., facilitating access or facilitating establishing a connection) can include less than every step needed to perform the function or can include all of the steps needed to perform the function.

In the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment.

**Claims**

1. A helmet system, comprising:

    a protective shell (102; 202; 302; 4202; 6402; 6506; 6602; 6902) defining an interior portion and
    a shock abatement assembly (400; 500; 2000; 3202; 3600; 3709; 4400; 4700; 6904) positioned at least partially within the interior portion, comprising:

       a plurality of levers, disposed about a central axis, corresponding to a vertical axis of an upright, or standing human body, and comprising a plurality of elongated members (101; 106, 106a, 106b; 206, 206a, 206b; 504, 504a, 504b, 504c, 504d; 601; 2004, 2014, 2014a, 2014b, 2014c, 2014d; 3502; 3602, 3610; 4704; 6404, 6408; 6504; 6700, 6702; 6752; 6800, 6802; 6906), each elongated member of the plurality of elongated members extending along a respective length between a first end (108; 403; 6804) and second end (110; 404; 6806);
       a fulcrum (114; 214; 554) disposed in a plane perpendicular to the central axis and engaging at least one of the plurality of elongated members at a pivot location (520; 3508; 3608; 4469; 5209; 6406, 6410; 6708; 6808) along a length of the one of the plurality of elongated members, wherein the one of the plurality of elongated members, responsive to an application of an impact force along an impact direction, moves about the fulcrum to obtain a lever response based on a collision between the protective shell and an object;

an end portion (6704, 6706, 6710, 6712, 6756, 6760; 6810; 6910, 6912) positioned at the first end of the at least one of the plurality of elongated members, wherein the end portion defines a surface having a non-parallel orientation with respect to a line extending between the first end and the second end,

wherein, in response to the application of the impact force, the lever comprising the at least one of the plurality of elongated members pivots about the fulcrum such that the end portion facilitates a reaction force comprising a directed force determined in part by the impact direction and in part by the non-parallel orientation of the surface; and **characterized by**

a deformable member (116; 316a, 316b, 316c, 316d; 510; 2005, 2007, 2015, 2017; 3204, 3206; 3244, 3246; 3506; 5210, 5212; 5322, 5324; 5612; 5918; 6006; 6512; 6616; 6918) in communication between the end portion of the at least one of the plurality of elongated members and another one of the plurality of elongated members, wherein the deformable member is adapted to deform to obtain a deformation based on the lever response,

wherein the deformation absorbs a non-trivial portion of a kinetic energy of the collision.

2. The helmet system of claim 1, wherein the deformation comprises an expansion of the deformable member (116), wherein an impact or collision force induces a rotation of one or more of the levers (504), which results in a deformation of the one or more deformable members (510).

3. The helmet system of claim 1, wherein the surface comprises a non-planar surface.

4. The helmet system of claim 1 wherein the deformable member (510) comprises an enclosed loop in communication with the one of the plurality of levers and at least another of the plurality of levers.

5. The helmet system of claim 1, wherein the elongated members (504, 504a, 504b, 504c, 504d) of the plurality of elongated members (504) are formed from a substantially rigid material.

6. The helmet system of claim 1, wherein the one of the plurality of elongated members (101; 106, 106a, 106b; 206, 206a, 206b; 504, 504a, 504b, 504c, 504d; 601; 2004, 2014, 2014a, 2014b, 2014c, 2014d; 3502; 3602, 3610; 4704; 6404, 6408; 6504; 6700, 6702, 6752; 6752; 6800, 6802; 6906) is deformable to obtain a deformation responsive to the collision, and wherein another non-trivial portion of the kinetic energy of the collision is absorbed based on the deformation.

7. The helmet system of claim 6, whereby the deformation comprises a momentary displacement between the pivot location (520; 3508; 3608; 4469; 5209; 6406, 6410; 6708; 6808) and the line extending between the first end and the second end.

8. The helmet system of claim 6, wherein the deformation comprises a bend, a twist, or a combination thereof.

9. The helmet system of claim 1, wherein the fulcrum (114) comprises at least one axial pivot that pivotally engages the one of the plurality of elongated members (101; 106, 106a, 106b),

wherein the one of the plurality of levers is rotatable about the axial pivot to obtain a rotation in response to the application of the impact force).

10. The helmet system of claim 9, wherein the axial pivot comprises a snap-fit engagement with the respective one of the elongated members (101; 106, 106a, 106b) adapted to retain a rotatable engagement between the one of the plurality of levers and the fulcrum (114) throughout the collision between the protective shell (102) and the object.

11. The helmet system of claim 1, wherein each of the levers (504) includes a top deformable member (506a, 506b, 506c, 506d) and/or a bottom deformable member (508a, 508b, 508c, 508d),

wherein one or more of the deformable members include a spring, a compressible element, a resilient material, a compressible material, a compliant material, a conformable material, or any combination thereof.

12. The helmet system of claim 1, wherein the pivot location (520; 3508; 3608; 4469; 5209; 6406, 6410; 6708; 6808) is positioned at the second end of the one of the plurality of lever,

wherein the lever response comprises a rotation of the one of the plurality of levers about the second end.

13. The helmet system of claim 1, wherein the fulcrum (114; 214; 554) is fixedly positioned with respect to the helmet throughout the lever response.

**14.** The helmet system of claim 1, wherein the shock abatement assembly (400; 500; 2000; 3202; 3600; 3709; 4400; 4700; 6904) moveably engages the protective shell (102; 202; 302; 4202; 6402; 6506; 6602; 6902).

**15.** The helmet system of claim 1, wherein the protective shell (102; 202; 302; 4202; 6402; 6506; 6602; 6902) is adapted to deform in response to the application of the impact force, to obtain a protective shell deformation, wherein the protective shell deformation absorbs another non-trivial portion of the kinetic energy of the collision.

**16.** The helmet system of claim 1, wherein the protective shell (102; 202; 302; 4202; 6402; 6506; 6602; 6902) comprises a plurality of separate shell segments.

**17.** The helmet system of claim 1, wherein the shock abatement assembly (6904) further comprises at least one torsion spring (6918),

wherein the torsion spring (6918) includes an upper extension or arm (6914) extending from one end of the torsion spring (6918) to the upper end portion 6910 and/or a lower extension or arm extending from another end of the torsion spring (6918) to the lower end portion (6912), and
wherein one or more of the torsion spring extension arms (6914) can be flexed or otherwise deformed in response to the impact force to convert yet another portion of the kinetic energy of the collision into a potential energy of the spring.

**Patentansprüche**

**1.** Ein Helmsystem, bestehend aus:

einer Schutzhülle (102; 202; 302; 4202; 6402; 6506; 6602; 6902), die einen inneren Teil definiert, und
einer Stoßdämpfungsbaugruppe (400; 500; 2000; 3202; 3600; 3709; 4400; 4700; 6904), die zumindest teilweise innerhalb des inneren Abschnitts angeordnet ist, umfassend:

eine Mehrzahl von Hebeln, die um eine zentrale Achse angeordnet sind, die einer vertikalen Achse eines aufrechten oder stehenden menschlichen Körpers entspricht, und die eine Mehrzahl von länglichen Elementen (101; 106, 106a, 106b; 206, 206a, 206b; 504, 504a, 504b, 504c, 504d; 601; 2004, 2014, 2014a, 2014b, 2014c, 2014d; 3502; 3602, 3610; 4704; 6404, 6408; 6504; 6700, 6702; 6752; 6800, 6802; 6906) umfasst, wobei sich jedes längliche Element der Mehrzahl von länglichen Elementen entlang einer jeweiligen Länge zwischen einem ersten Ende (108; 403; 6804) und einem zweiten Ende (110; 404; 6806) erstreckt; einen Drehpunkt (114; 214; 554), der in einer Ebene senkrecht zur Mittelachse angeordnet ist und mit mindestens einem der mehreren länglichen Elemente an einer Schwenkstelle (520; 3508; 3608; 4469; 5209; 6406, 6410; 6708; 6808) entlang einer Länge des einen der mehreren länglichen Elemente eingreift, wobei sich das eine der mehreren länglichen Elemente in Reaktion auf das Aufbringen einer Aufprallkraft entlang einer Aufprallrichtung um den Drehpunkt bewegt, um eine Hebelreaktion basierend auf einer Kollision zwischen der Schutzhülle und einem Objekt zu erhalten; einen Endabschnitt (6704, 6706, 6710, 6712, 6756, 6760; 6810; 6910, 6912), der am ersten Ende des mindestens einen der mehreren länglichen Elemente positioniert ist, wobei der Endabschnitt eine Oberfläche mit einer nicht parallelen Ausrichtung in Bezug auf eine Linie definiert, die sich zwischen dem ersten Ende und dem zweiten Ende erstreckt, wobei in Reaktion auf das Aufbringen der Aufprallkraft der Hebel, der mindestens eines der mehreren länglichen Elemente umfasst, um den Drehpunkt schwenkt, so dass der Endabschnitt eine Reaktionskraft ermöglicht, die eine gerichtete Kraft umfasst, die zum Teil durch die Aufprallrichtung und zum Teil durch die nicht parallele Ausrichtung der Oberfläche bestimmt wird; und **gekennzeichnet durch** ein verformbares Element (116; 316a, 316b, 316c, 316d; 510; 2005, 2007, 2015, 2017; 3204, 3206; 3244, 3246; 3506; 5210, 5212; 5322, 5324; 5612; 5918; 6006; 6512; 6616; 6918) in Verbindung zwischen dem Endabschnitt des mindestens einen der mehreren länglichen Elemente und einem anderen der mehreren länglichen Elemente, wobei das verformbare Element so ausgelegt ist, dass es sich verformt, um eine Verformung auf der Grundlage der Hebelreaktion zu erhalten, wobei die Verformung einen nicht trivialen Teil der kinetischen Energie des Aufpralls absorbiert.

**2.** Helmsystem nach Anspruch 1, wobei die Verformung eine Ausdehnung des verformbaren Elements (116) umfasst, wobei eine Aufprall- oder Kollisionskraft eine Drehung eines oder mehrerer der Hebel (504) hervorruft, was zu einer Verformung des einen oder der mehreren verformbaren Elemente (510) führt.

3. Helmsystem nach Anspruch 1, wobei die Oberfläche eine nicht ebene Fläche umfasst.

4. Helmsystem nach Anspruch 1, wobei das verformbare Element (510) eine geschlossene Schlaufe umfasst, die mit dem einen der mehreren Hebel und mindestens einem weiteren der mehreren Hebel in Verbindung steht.

5. Helmsystem nach Anspruch 1, wobei die langgestreckten Elemente (504, 504a, 504b, 504c, 504d) der Mehrzahl der langgestreckten Elemente (504) aus einem im Wesentlichen starren Material gebildet sind.

6. Helmsystem nach Anspruch 1, wobei das eine der mehreren länglichen Elemente (101; 106, 106a, 106b; 206, 206a, 206b; 504, 504a, 504b, 504c, 504d; 601; 2004, 2014, 2014a, 2014b, 2014c, 2014d; 3502; 3602; 3610; 4704; 6404, 6408; 6504; 6700, 6702; 6752; 6752; 6800, 6802; 6906) verformbar ist, um eine Verformung in Reaktion auf die Kollision zu erhalten, und wobei ein weiterer nicht-trivialer Teil der kinetischen Energie der Kollision basierend auf der Verformung absorbiert wird.

7. Helmsystem nach Anspruch 6, wobei die Verformung eine momentane Verschiebung zwischen dem Drehpunkt (520; 3508; 3608; 4469; 5209; 6406, 6410; 6708; 6808) und der Linie, die sich zwischen dem ersten Ende und dem zweiten Ende erstreckt, umfasst.

8. Das Helmsystem nach Anspruch 6, wobei die Verformung eine Verbiegung, eine Verdrehung oder eine Kombination davon umfasst.

9. Helmsystem nach Anspruch 1, wobei der Drehpunkt (114) mindestens einen axialen Zapfen umfasst, der schwenkbar mit einem der mehreren länglichen Elemente (101; 106, 106a, 106b) in Eingriff steht, wobei der eine der mehreren Hebel um den axialen Drehpunkt drehbar ist, um eine Drehung als Reaktion auf die Anwendung der Aufprallkraft zu erhalten.

10. Helmsystem nach Anspruch 9, wobei der axiale Drehpunkt eine Schnappverbindung mit dem jeweiligen der länglichen Elemente (101; 106, 106a, 106b) umfasst, die geeignet ist, einen drehbaren Eingriff zwischen dem einen der mehreren Hebel und dem Drehpunkt (114) während des gesamten Zusammenstoßes zwischen der Schutzschale (102) und dem Objekt aufrechtzuerhalten.

11. Helmsystem nach Anspruch 1, wobei jeder der Hebel (504) ein oberes verformbares Element (506a, 506b, 506c, 506d) und/oder ein unteres verformbares Element (508a, 508b, 508c, 508d) umfasst, wobei eines oder mehrere der verformbaren Elemente eine Feder, ein komprimierbares Element, ein elastisches Material, ein komprimierbares Material, ein nachgiebiges Material, ein anpassungsfähiges Material oder eine beliebige Kombination davon umfassen.

12. Helmsystem nach Anspruch 1, wobei der Drehpunkt (520; 3508; 3608; 4469; 5209; 6406, 6410; 6708; 6808) am zweiten Ende des einen der mehreren Hebel angeordnet ist, wobei die Hebelreaktion eine Drehung des einen der mehreren Hebel um das zweite Ende umfasst.

13. Helmsystem nach Anspruch 1, wobei der Drehpunkt (114; 214; 554) während der gesamten Hebelwirkung fest in Bezug auf den Helm positioniert ist.

14. Helmsystem nach Anspruch 1, wobei die Stoßdämpfungsanordnung (400; 500; 2000; 3202; 3600; 3709; 4400; 4700; 6904) beweglich in die Schutzschale (102; 202; 302; 4202; 6402; 6506; 6602; 6902) eingreift.

15. Helmsystem nach Anspruch 1, wobei die Schutzschale (102; 202; 302; 4202; 6402; 6506; 6602; 6902) so ausgelegt ist, dass sie sich in Reaktion auf die Einwirkung der Aufprallkraft verformt, um eine Verformung der Schutzschale zu erzielen, wobei die Verformung der Schutzhülle einen weiteren, nicht trivialen Teil der kinetischen Energie des Aufpralls absorbiert.

16. Helmsystem nach Anspruch 1, wobei die Schutzschale (102; 202; 302; 4202; 6402; 6506; 6602; 6902) eine Mehrzahl von separaten Schalensegmenten umfasst.

**17.** Helmsystem nach Anspruch 1, wobei die Stoßdämpfungsanordnung (6904) außerdem mindestens eine Torsionsfeder (6918) umfasst,

wobei die Torsionsfeder (6918) eine obere Verlängerung oder einen oberen Arm (6914), der sich von einem Ende der Torsionsfeder (6918) zu dem oberen Endabschnitt (6910) erstreckt, und/oder eine untere Verlängerung oder einen unteren Arm, der sich von einem anderen Ende der Torsionsfeder (6918) zu dem unteren Endabschnitt (6912) erstreckt, aufweist, und

wobei einer oder mehrere der Torsionsfederarme (6914) in Reaktion auf die Aufprallkraft gebogen oder anderweitig verformt werden können, um einen weiteren Teil der kinetischen Energie des Aufpralls in eine potentielle Energie der Feder umzuwandeln.

**Revendications**

**1.** Système de casque comprenant

une coque de protection (102; 202; 302; 4202; 6402; 6506; 6602; 6902) définissant une partie intérieure et un ensemble d'atténuation des chocs (400; 500; 2000; 3202; 3600; 3709; 4400; 4700; 6904) positionné au moins partiellement dans la partie intérieure, comprenant :

une pluralité de leviers, disposés autour d'un axe central, correspondant à un axe vertical d'un corps humain debout, et comprenant une pluralité d'éléments allongés (101; 106, 106a, 106b ; 206, 206a, 206b; 504, 504a, 504b, 504c, 504d; 601; 2004, 2014, 2014a, 2014b, 2014c, 2014d; 3502; 3602, 3610; 4704; 6404, 6408; 6504; 6700, 6702, 6752; 6800, 6802; 6906), chaque élément allongé de la pluralité d'éléments allongés s'étendant sur une longueur respective entre une première extrémité (108; 403; 6804) et une deuxième extrémité (110; 404; 6806);

un point d'appui (114; 214; 554) disposé dans un plan perpendiculaire à l'axe central et engageant au moins l'un de la pluralité d'éléments allongés à un emplacement de pivot (520; 3508; 3608; 4469; 5209; 6406, 6410; 6708; 6808) sur une longueur de l'un des éléments allongés, dans lequel l'un des éléments allongés, en réponse à l'application d'une force d'impact le long d'une direction d'impact, se déplace autour du point d'appui pour obtenir une réponse de levier basée sur une collision entre la coque de protection et un objet ;

une partie terminale (6704, 6706, 6710, 6712, 6756, 6760; 6810; 6910, 6912) positionnée à la première extrémité d'au moins un des éléments allongés de la pluralité, dans laquelle la partie terminale définit une surface ayant une orientation non parallèle par rapport à une ligne s'étendant entre la première extrémité et la seconde extrémité,

dans lequel, en réponse à l'application de la force d'impact, le levier comprenant au moins un des éléments allongés pivote autour du point d'appui de sorte que la partie terminale facilite une force de réaction comprenant une force dirigée déterminée en partie par la direction de l'impact et en partie par l'orientation non parallèle de la surface; et **caractérisé par**

un élément déformable (116; 316a, 316b, 316c, 316d; 510; 2005, 2007, 2015, 2017; 3204, 3206; 3244, 3246; 3506; 5210, 5212; 5322, 5324; 5612; 5918; 6006; 6512; 6616; 6918) en communication entre la partie terminale de l'au moins un des éléments allongés de la pluralité d'éléments allongés et un autre élément allongé de la pluralité d'éléments allongés, l'élément déformable étant adapté pour se déformer afin d'obtenir une déformation basée sur la réponse du levier,

la déformation absorbe une partie non négligeable de l'énergie cinétique de la collision.

**2.** Le système de casque de la revendication 1, dans lequel la déformation comprend une expansion de l'élément déformable (116),

où une force d'impact ou de collision induit une rotation d'un ou de plusieurs leviers (504), ce qui entraîne une déformation d'un ou de plusieurs éléments déformables (510).

**3.** Le système de casque de la revendication 1, dans lequel la surface comprend une surface non plane.

**4.** Le système de casque de la revendication 1 dans lequel l'élément déformable (510) comprend une boucle fermée en communication avec l'un de la pluralité de leviers et au moins un autre de la pluralité de leviers.

**5.** Le système de casque de la revendication 1, dans lequel les éléments allongés (504, 504a, 504b, 504c, 504d) de la pluralité d'éléments allongés (504) sont formés à partir d'un matériau sensiblement rigide.

6. Le système de casque de la revendication 1, dans lequel l'un de la pluralité d'éléments allongés (101; 106, 106a, 106b; 206, 206a, 206b; 504, 504a, 504b, 504c, 504d; 601; 2004, 2014, 2014a, 2014b, 2014c, 2014d; 3502; 3602, 3610; 4704; 6404, 6408; 6504; 6700, 6702; 6752; 6752; 6800, 6802; 6906) est déformable pour obtenir une déformation en réponse à la collision, et dans lequel une autre partie non triviale de l'énergie cinétique de la collision est absorbée sur la base de la déformation.

7. Le système de casque de la revendication 6, la déformation comprenant un déplacement momentané entre l'emplacement du pivot (520; 3508; 3608; 4469; 5209; 6406, 6410; 6708; 6808) et la ligne s'étendant entre la première extrémité et la seconde extrémité.

8. Le système de casque de la revendication 6, dans lequel la déformation comprend une courbure, une torsion ou une combinaison de celles-ci.

9. Le système de casque de la revendication 1, dans lequel le point d'appui (114) comprend au moins un pivot axial qui s'engage de manière pivotante dans l'un des éléments allongés de la pluralité (101; 106, 106a, 106b), dans lequel l'un des leviers de la pluralité est rotatif autour du pivot axial pour obtenir une rotation en réponse à l'application de la force d'impact.

10. Le système de casque de la revendication 9, dans lequel le pivot axial comprend un engagement par encliquetage avec l'un des éléments allongés respectifs (101; 106, 106a, 106b) adapté pour maintenir un engagement rotatif entre l'un de la pluralité de leviers et le point d'appui (114) tout au long de la collision entre la coque de protection (102) et l'objet.

11. Le système de casque de la revendication 1, dans lequel chacun des leviers (504) comprend un élément déformable supérieur (506a, 506b, 506c, 506d) et/ou un élément déformable inférieur (508a, 508b, 508c, 508d), dans lequel un ou plusieurs des éléments déformables comprennent un ressort, un élément compressible, un matériau élastique, un matériau compressible, un matériau souple, un matériau conformable, ou toute combinaison de ceux-ci.

12. Le système de casque de la revendication 1, dans lequel l'emplacement du pivot (520; 3508; 3608; 4469; 5209; 6406, 6410; 6708; 6808) est positionné à la deuxième extrémité de l'un des leviers de la pluralité, dans lequel la réponse du levier comprend une rotation de l'un des leviers de la pluralité de leviers autour de la deuxième extrémité.

13. Le système de casque de la revendication 1, dans lequel le point d'appui (114; 214; 554) est positionné de manière fixe par rapport au casque tout au long de la réponse du levier.

14. Le système de casque de la revendication 1, dans lequel l'ensemble d'atténuation des chocs (400; 500; 2000; 3202; 3600; 3709; 4400; 4700; 6904) s'engage de manière mobile dans la coque de protection (102; 202; 302; 4202; 6402; 6506; 6602; 6902).

15. Le système de casque de la revendication 1, dans lequel la coque de protection (102; 202; 302; 4202; 6402; 6506; 6602; 6902) est adaptée pour se déformer en réponse à l'application de la force d'impact, afin d'obtenir une déformation de la coque de protection, la déformation de la coque protectrice absorbe une autre partie non négligeable de l'énergie cinétique de la collision.

16. Le système de casque de la revendication 1, dans lequel la coque de protection (102; 202; 302; 4202; 6402; 6506; 6602; 6902) comprend plusieurs segments de coque distincts.

17. Le système de casque de la revendication 1, dans lequel l'ensemble d'atténuation des chocs (6904) comprend en outre au moins un ressort de torsion (6918),

dans lequel le ressort de torsion (6918) comprend une extension ou un bras supérieur (6914) s'étendant d'une extrémité du ressort de torsion (6918) à la partie d'extrémité supérieure 6910 et/ou une extension ou un bras inférieur s'étendant d'une autre extrémité du ressort de torsion (6918) à la partie d'extrémité inférieure (6912), et dans lequel un ou plusieurs des bras d'extension du ressort de torsion (6914) peuvent être fléchis ou autrement déformés en réponse à la force d'impact pour convertir une autre partie de l'énergie cinétique de la collision en une énergie potentielle du ressort.

**100**

**FIG. 1A**

**100**

**FIG. 1B**

200
FIG. 2

300
FIG. 3

400

FIG. 4A

400

FIG. 4B

400

FIG. 4C

400

FIG. 4D

500

FIG. 5

506a

506c

DETAIL B

DETAIL C

Axis

504a

504c

E

B

C

D

DETAIL E

DETAIL D

508a

508c

SECTION A-A

FIG. 6B

500

A

A

FIG. 6A

506b

DETAIL G

504b

506d

DETAIL H

504d

DETAIL J

508b

Axis

SECTION F-F

DETAIL I

508d

FIG. 7B

500

F

F

FIG. 7A

**FIG. 8B**

**FIG. 8A**

**FIG. 8C**

500

$d_{U1}$

**FIG. 9A**

$d_{U1} < d_{U2} < d_{U3}$

500

$d_{U2}$

**FIG. 9B**

$F_c$

500

$d_{U3}$

**FIG. 9C**

500

P3

P1

P2

$d_{L3}$

$d_{L2}$

$d_{L1}$

$d_{L1} > d_{L2} > d_{L3}$

**FIG. 9D**

**FIG. 10A**

**FIG. 10B**

**FIG. 10C**

**FIG. 11A**

**FIG. 11B**

**FIG. 11C**

**FIG. 11D**

**FIG. 12A**

**FIG. 12B**

**FIG. 12C**

**FIG. 12D**

**FIG. 13A**

**FIG. 13B**

**FIG. 13C**

**FIG. 13D**

FIG. 14A

FIG. 14B

FIG. 14C

FIG. 14D

506a

506a    707    706

B

E

**FIG. 15A**

**FIG. 15B**

702

704

706

**FIG. 15C**

**FIG. 15D**

506b

FIG. 16A

506b

FIG. 16B

802

806

804

FIG. 16C

806

807

FIG. 16D

506b

**FIG. 16A**

506b

**FIG. 16B**

802

806

804

806

807

**FIG. 16C**

**FIG. 16D**

508

508b

508c

508a

**FIG. 18A**

508

508a

508c

508d

**FIG. 18B**

508

508a

508d

508b

508c

**FIG. 18C**

508

508b

508c

508a

508d

**FIG. 18D**

**FIG. 19A**

**FIG. 19B**

**FIG. 19C**

**FIG. 19D**

**FIG. 20A**

**FIG. 20B**

**FIG. 20C**

**FIG. 20D**

512

FIG. 21A

512

512

FIG. 21B

1202    1204

512

1206

FIG. 21C

FIG. 22A

FIG. 22B

**FIG. 23A**

**2010**
**FIG. 23B**

**2020**
**FIG. 23C**

FIG. 24A

FIG. 24B

FIG. 24C

FIG. 24D

**FIG. 25**

FIG. 26A

FIG. 26B

FIG. 27A

FIG. 27B

**FIG. 28A**

**FIG. 28B**

**FIG. 28C**

**FIG. 28D**

2016

P

P

**FIG. 29A**

2016

R

R

**FIG. 29B**

2014b

2014d

**FIG. 29C**

2014b

2014d

**FIG. 29D**

FIG. 30A

FIG. 30B

<u>3100</u>
**FIG. 31A**

<u>3100</u>
**FIG. 31B**

<u>3100</u>
**FIG. 31C**

<u>3100</u>
**FIG. 31D**

**3200**
**FIG. 32A**

**FIG. 32D**

**3300**
**FIG. 33A**

3240

FIG. 32B

3340

FIG. 33B

3260

FIG. 32C

RECEIVING AN IMPACT FORCE AT AN EXTERNAL
SURFACE OF A HELMET SYSTEM INCLUDING A
PROTECTIVE SHELL AND A MACHINE, WHEREIN
THE IMPACT FORCE IS RESPONSIVE TO A
COLLISION                                3402

ACTUATING A MOVABLE PART OF THE MACHINE
RESPONSIVE TO THE RECEIVING OF THE IMPACT
FORCE                                    3404

REDISTRIBUTING A PORTION OF THE IMPACT
FORCE AND/OR KINETIC ENERGY OF THE
COLLISION BASED ON THE ACTUATING OF THE
MOVABLE PART                             3406

REDUCING A PORTION OF THE IMPACT FORCE
AND/OR ENERGY THAT WOULD OTHERWISE BE
TRANSFERRED TOWARD A BODY PROTECTED
FROM THE COLLISION BY THE PROTECTIVE SHELL
                                         3408

3400

FIG. 34

3502

3506

3504

3500

FIG. 35A

3508

3500

FIG. 35B

3600
FIG. 36A

3600
FIG. 36B

FIG. 37

RECEIVING AN IMPACT FORCE VIA A PROTECTIVE SHELL IN RESPONSE TO A COLLISION OF THE PROTECTIVE SHELL WITH ANOTHER OBJECT                3802

ACTUATING A MECHANISM IN COMMUNICATION WITH THE PROTECTIVE SHELL IN RESPONSE TO THE IMPACT FORCE                3804

REDISTRIBUTING A PORTION OF IMPACT FORCE AND/OR KINETIC ENERGY OF THE COLLISION BASED ON THE ACTUATING OF THE MECHANISM                3806

REDUCING A PORTION OF THE IMPACT FORCE AND/OR ENERGY THAT WOULD OTHERWISE BE TRANSFERRED TOWARD THE PROTECTED BODY                3808

3800

FIG. 38A

PROVIDING A HELMET SYSTEM INCLUDING A PROTECTIVE SHELL THAT RECEIVES AN IMPACT FORCE IN RESPONSE TO A COLLISION OF THE PROTECTIVE SHELL WITH ANOTHER OBJECT                                                      3852

THE HELMET SYSTEM INCLUDES A MECHANISM OPERATIVELY CONNECTED TO THE PROTECTIVE SHELL AND ADAPTED TO PROTECT A HEAD AND/OR NECK IN RESPONSE TO THE IMPACT FORCE                                    3854

A PORTION OF THE IMPACT FORCE AND/OR KINETIC ENERGY OF THE COLLISION IS REDISTRIBUTED BASED ON THE ACTUATING OF THE MECHANISM                       3856

A PORTION OF THE IMPACT FORCE AND/OR ENERGY THAT WOULD OTHERWISE BE TRANSFERRED TOWARD THE HEAD/NECK IS ABSORBED                                          3858

3850

FIG. 38B

RECEIVING IMPACT FORCE VIA PROTECTIVE
SHELL IN RESPONSE TO COLLISION OF
PROTECTIVE SHELL WITH ANOTHER OBJECT
3902

EXPOSING ACTUATING MECHANISM IN
COMMUNICATION WITH THE PROTECTIVE SHELL
AND PROTECTED BODY TO IMPACT FORCE
3904

ABOVE
COLLISION THRESHOLD?
3906

N

Y

PROVIDING HIGH-IMPACT FORCE RESPONSE OF
ACTUATING MECHANISM                          3910

PROVIDING LOW-IMPACT FORCE
RESPONSE OF ACTUATING
MECHANISM                  3908

REDISTRIBUTING FIRST PORTION OF IMPACT
FORCE TRANSFERRED TOWARD THE
PROTECTED BODY BASED ON HIGH-IMPACT
FORCE RESPONSE                          3912

REDUCING A SECOND PORTION OF THE IMPACT
FORCE THAT WOULD OTHERWISE BE
TRANSFERRED TOWARD THE PROTECTED BODY
3914

3900
FIG. 39

PROVIDE FORCE PROCESSING MECHANISM FOR INTEGRATION INTO COLLISION ABATEMENT SYSTEM    4002

SYSTEM EXPOSED TO IMPACT FORCE VIA PROTECTIVE SHELL IN RESPONSE TO COLLISION OF PROTECTIVE SHELL WITH ANOTHER OBJECT    4004

FORCE PROCESSING MECHANISM EXPOSED TO IMPACT FORCE BASED ON COMMUNICATION WITH PROTECTIVE SHELL    4006

ABOVE COLLISION THRESHOLD?    4008

N

FORCE PROCESSING MECHANISM PROVIDES LOW-IMPACT FORCE RESPONSE    4010

Y

FORCE PROCESSING MECHANISM PROVIDES HIGH-IMPACT FORCE RESPONSE    4012

FORCE PROCESSING MECHANISM REDISTRIBUTES FIRST PORTION OF IMPACT FORCE TRANSFERRED TOWARD THE PROTECTED BODY BASED ON HIGH-IMPACT FORCE RESPONSE    4014

FORCE PROCESSING MECHANISM REDUCES A SECOND PORTION OF THE IMPACT FORCE THAT WOULD OTHERWISE BE TRANSFERRED TOWARD THE PROTECTED BODY    4016

4000

FIG. 40

4100
FIG. 41A

4120
FIG. 41B

4140
FIG. 41C

4160
FIG. 41D

4200
FIG. 42

4303 VT

4362

4370 T

4372 T

4364 T

4364 L

4364 R

4303 HL

θ

4303 HR

θ

4372 L

4370 L

4304

4372 R

4370 R

4372 B

4370 B

4364 B

θ

4303 VB

4300

FIG. 43

4402a

4402b

4404

4403

4412b

4412a

4410b

4410a

4411b

4400

4411a

FIG. 44A

4402b

4402a

4410a

4410c

4414a

4414c

4403

4400

FIG. 44B

4412a    4460
4465
4469
4414

<u>4410a</u>

FIG. 44C

4500

FIG. 45A

4500

FIG. 45B

4500

FIG. 45C

4500

FIG. 45D

4600

FIG. 46A

4600

FIG. 46B

4600

FIG. 46C

4600

FIG. 46D

4700

FIG. 47A

4700

FIG. 47B

FIG. 47C

FIG. 47D

FIG. 47E

4704

4726

4724

**FIG. 48B**

**FIG. 48A**

4704

4722    4720'

**FIG. 48C**

4724    4722

4725

**FIG. 49A**

4724

**FIG. 49B**

4721

4721

E

**FIG. 50B**

4721

**FIG. 50A**

4721

C

**FIG. 50C**

4728

**FIG. 51A**

4728

**FIG. 51B**

5209 5202a 5202b

5201 5204

5203

5211

5205 5206

**5200**

# FIG. 52

5210 5208

5214a 5207a 5207b 5214b

5205

5206 5212 5205

5209

**5205**

# FIG. 53A

Resilient member

5320

FIG. 53C

5308

5322

5324

5320

FIG. 53B

5320

FIG. 53D

5406a

5408

5404

5406b

**5400**

# FIG. 54A

Axis

5406a

5406b

5403a

5401

5403b

5402

**5400**

# FIG. 54B

FIG. 55A

(Side)

FIG. 55B

5600

5606b

5608

5606a

**FIG. 56A**

5600

5606b

5606

**FIG. 56B**

5600

5606     5612

5610

5608

**FIG. 56C**

5610

**FIG. 56D**

5612

**FIG. 57B**

5600

5608

B

**FIG. 57A**

FIG. 58A

FIG. 58B

FIG. 58C

FIG. 58D

4 BINARY LINKS
PROMOTE MECHANISM
MOVEMENT.

4 TERNARY LINKS
ACTUATE SPRING & DAMPER.

5900

FIG. 59

6000

FIG. 60

**FIG. 61A**

**FIG. 61B**

**FIG. 61C**

6208b

Right side

HELMET PIVOT 1

HEAD SPACE   HELMET SPACE

Front   Rear

6208d

HELMET PIVOT 2
Left side

4400

FIG. 62

6306b

B

B

**FIG. 63B**

6306b

6303a

6301

6303b

**FIG. 63C**

**FIG. 63A**

6414
6402
6424
6420a
6404
6416
6420b
6406
6410
6408
6408
6412

6400

FIG. 64

6500

FIG. 65A

6500

FIG. 65B

6600

FIG. 66A

6612

FIG. 66B

6608

6600

FIG. 66C

6704

6702

6708

6710

6716

6714

6706

6718

6712

6700

# FIG. 67A

6754

6755

6752

6760

6766

6764

6756

6768

6762

6750

# FIG. 67B

6804

6802

6808

6810

6816

6814

6806

6800

FIG. 68

FIG. 69A

FIG. 69B

FIG. 69C

FIG. 69D

**EP 3 496 560 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2870445 A, Fisher
- US 3054111 A, Hornickel
- US 2921318 A, Voss
- US 20020000004, Wise
- US 20150157080 A, Camarillo
- US 20110185481 A, Nagely
- US 5581816 A, Davis
- US 20100229287 A, Mothaffar
- US 9316282 B, Harris
- US 2879513 A, Hornickel
- US 20090260133, Del Rosario
- US 9314063 B, Bologna
- US 4032127 A, Lipfert